(19) Europäisches Patentamt
European Patent Office
Office européen des brevets

(11) EP 3 608 357 A1

(12) EUROPÄISCHE PATENTANMELDUNG

(43) Veröffentlichungstag:
**12.02.2020 Patentblatt 2020/07**

(51) Int Cl.:
***C08J 11/06*** *(2006.01)*

(21) Anmeldenummer: **18188431.3**

(22) Anmeldetag: **10.08.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**KH MA MD TN**

(71) Anmelder: **Technische Universität Berlin
10623 Berlin (DE)**

(72) Erfinder:
- **Schäfer, Konstanze
10405 Berlin (DE)**
- **John-Müller, Astrid
13507 Berlin (DE)**

(74) Vertreter: **Hertin und Partner
Rechts- und Patentanwälte PartG mbB
Kurfürstendamm 54/55
10707 Berlin (DE)**

# (54) BEHANDLUNG VON PULVERLACKABFALL ZUR NUTZUNG IN RECYCLINGVERFAHREN

(57) Die Erfindung betrifft ein Verfahren zur Wiederverwertung von Pulverlackabfällen wobei die Pulverlackabfälle mithilfe eines Reaktanden so behandelt werden, dass deren Haftung auf Oberflächen und speziell auf Metalloberflächen vermindert oder aufgehoben wird. Durch die erfindungsgemäße Behandlung der Pulverlackabfälle ist es möglich, diesen unter Wärmeeinfluss weiter zu verarbeiten und als Ausgangsmaterial in verschiedenen Recyclingverfahren oder auch in anderen Verfahren zu nutzen.

EP 3 608 357 A1

**Beschreibung**

Die Erfindung betrifft ein Verfahren zur Wiederverwertung von Pulverlackabfällen, wobei die Pulverlackabfälle mithilfe eines Reaktanden so behandelt werden, dass deren Haftung auf Oberflächen, bevorzugt auf Metalloberflächen, vermindert oder aufgehoben wird. Durch die erfindungsgemäße Behandlung der Pulverlackabfälle ist es möglich, diesen unter Wärmeeinfluss weiter zu verarbeiten und als Ausgangsmaterial in verschiedenen Recyclingverfahren oder auch in anderen Verfahren zu nutzen.

**HINTERGRUND UND STAND DER TECHNIK**

Weltweit werden ca. 1,1 Mio. Tonnen Pulverlack pro Jahr hergestellt, die Tendenz ist steigend. Pulverlack ist ein lösemittelfreies Material, das immer häufiger zur Beschichtung von Oberflächen, insbesondere zur Lackierung von Metalloberflächen, verwendet wird. Bei der Applikation fallen bis zu 55% Overspray an, dass aufgrund seiner fehlenden Reinheit nicht mehr in die Produktion zurückgeführt werden kann. Zusätzlich entstehen weitere Pulverlackabfälle bei der Produktion von Pulverlacken, beispielsweise durch ein zu feines Mahlen oder anderen Fehlchargen oder durch Lagerung, insbesondere Überlagerung von Beständen oder einer Lagerung unter ungünstigen Lagerbedingungen.

Jährlich belaufen sich die Pulverlackabfälle auf ca. 500.000 Tonnen weltweit. Die entstehenden Pulverlackreste müssen meist aufwendig entsorgt werden. Dabei fallen für den Anwender der Pulverlacke Kosten in Höhe von ca. 120-180 €/Tonne an. Dies ist besonders absurd, da Pulverlack ein sehr hochwertiges Material darstellt und bei der Anschaffung Kosten von ca. 4000 €/Tonne entstehen.

Bisher werden Pulverlackabfälle in der Regel zusammen mit Klärschlamm oder mit Haushaltsabfällen verbrannt. Es sind nur wenige Verfahren bekannt, die sich mit dem Recycling von Pulverlackabfällen beschäftigen:
EP 0793 741 B1 offenbart ein Verfahren, in dem Faserfliese mit Pulverlackabfällen als Binder verarbeitet werden. Flies und Binder werden miteinander gemischt und als Endlos-Prepreg produziert, wobei die Mischung leicht erhitzt wird.

WO 1996/15891 A1 beschreibt die Vermischung eines thermoplastischen Pulverlackabfalls in einer Schmelze im Extruder, ein anschließendes Brechen des Extrudat zu Granulat und letztendlich die Vermahlung des Granulats zu einem neuen Coating-Pulver. Dieser Prozess ist nur bei thermoplastischen Pulverlacken möglich, da diese im Gegensatz zu duroplastischen Pulverlacken nach dem Ausreagieren wieder einschmelzbar sind.

WO 2015/006987 A1 beschreibt die Mischung des Pulverlackabfalls in Pulverform mit Zementpulver, wobei die Mischung anschließend in Formen gefüllt und ausgehärtet wird.

DE 40 28 567 C2 kennzeichnet ein Verfahren zur Rückführung von Overspray-Pulverlack in den Herstellungsprozess von Pulverlacken. Das Overspray wird der Mischung von Ausgangsmaterialien beigefügt und durchläuft anschließend zusammen mit diesen den Extrusionsprozess. Hierbei kommt es zu einem Aufschmelzen des Oversprays. Nachteilig ist die Haftung des Oversprays an Metalloberflächen des Extruders, wodurch es zu Produktionsverzögerungen kommen kann.

DE 197 48 159 A1 schlägt aus diesem Grund ein Kompaktieren des Pulverlackabfalls vor und eine anschließende Vermahlung ohne Extrusionsprozess. Beim Kompaktieren kann es in Abhängigkeit der Zusammensetzung des Pulverlackabfalls aufgrund einer Erhitzung zu Schmelzungen und Haftungen an den Presswerkzeugen kommen. Außerdem kann im Gegensatz zur Aufbereitung der Pulverlackabfälle in einem Extrusionsprozess nicht durchgängig die hohen Qualitätsstandards insbesondere im Hinblick auf Metalllackierungen eingehalten werden.

Ein Grund für die bisher geringen Möglichkeiten der Weiterverarbeitung von Pulverlackabfällen besteht darin, dass es bei einer Erhitzung zu irreversiblen Haftung von Pulverlackkomponenten auf Metall kommt, wodurch Geräte bis hin zur Unbrauchbarkeit geschädigt werden können. Diese Tatsache schränkt die Möglichkeiten für einen werterhaltenden Recyclingweg erheblich ein.

Es besteht somit ein Bedürfnis an alternativen Wiederverwertungsverfahren, welche die Nachteile des Standes der Technik beseitigen.

**AUFGABE DER ERFINDUNG**

Eine Aufgabe der Erfindung war es, ein Verfahren zur Wiederverwertung bereitzustellen, welche die Nachteile des Standes der Technik beseitigt. Insbesondere war es eine Aufgabe der Erfindung ein Verfahren bereitzustellen, bei welche Pulverlackabfälle so behandelt werden, dass einer Weiterverarbeitung ohne irreversible Haftung auf den Metalloberflächen möglich ist.

**ZUSAMMENFASSUNG DER ERFINDUNG**

Die Aufgabe wird durch ein Verfahren gemäß Anspruch 1 gelöst. Die abhängigen Ansprüche stellen bevorzugte Ausführungsformen zur Lösung der Aufgabe dar.

Die Erfindung betrifft bevorzugt ein Verfahren zur Wiederverwertung von Pulverlackabfällen in den Schritten:

a. Bereitstellung von Pulverlackabfällen

b. Bereitstellen eines Reaktanden

c. Mischen der Pulverlackabfälle mit dem Reaktand, um ein weiter zu verarbeitbares Reaktand-Pulverlackabfall-Gemisch zu erhalten,

wobei der Reaktand ein Tensid ist.

Ein zentraler Recyclinggedanke, welcher der Erfindung zugrunde liegt, ist die Nutzung von Pulverlackabfällen als Ausgangsmaterial für eine Weiterverarbeitung beispielsweise durch Extrusion und Spritzguss. Bei solchen Weiterverarbeitungsprozessen kommt es mit bisherigen Verfahren zu irreversiblen Haftungen der Pulverlackabfallgemische insbesondere an Metalloberflächen der Behälter oder Werkzeuge. Ein erster Ansatz die Haftung durch eine Beschichtung der Metalloberflächen mit Antihaftbeschichtungen führte nicht zu befriedigenden Ergebnissen.

Erfindungsgemäß wurde stattdessen erkannt, dass eine chemische Inaktivierung reaktiver bzw. funktioneller Gruppen in dem Pulverlackabfall eine Oberflächenhaftung während eines Weiterverarbeitungsprozess vermeiden kann.

Überraschenderweise führte hierbei die Zumischung von Tensiden als Reaktanden zu den Pulverlackabfällen zu ausgezeichneten Ergebnissen. Die Mischung des Reaktanden, bevorzugt in Pulverform, kann vorteilhafterweise bei Raumtemperatur durchgeführt werden und bedarf keiner aufwendigen Schritte. Stattdessen wird zuverlässig ein Reaktand-Pulverlackabfall-Gemisch erhalten, welches sich ohne nachteilige Haftung an Oberflächen weiterverarbeiten lässt. Die Weiterverarbeitung schließt insbesondere gängige Weiterverarbeitung von Pulverlacken zur Herstellung und/oder Anwendung der Pulverlacke ein. Bei den Weiterverarbeitungsprozessen ist das Reaktand-Pulverlackabfall-Gemisch bereits bei einer Temperatur von 50°C verarbeitungs- und extrudierbar. Bevorzugt wird das Gemisch auf Temperaturen von mindestens 60 °C erhitzt, um beispielsweise in einem Extruder Kunststoffstränge zu erhalten, welche anschließend granuliert werden.

In einer bevorzugten Ausführung der Erfindung umfasst das Verfahren eine Weiterverarbeitung des Reaktand-Pulverlackabfall-Gemisches bei einer Temperatur von mindestens 60°C.

Bevorzugt erfolgt eine Inaktivierung der haftvermittelnden funktionellen Gruppen des Pulverlackabfalles nicht bereits bei der Mischung des Pulverlackabfalles mit dem Reaktand, welche wie obig ausgeführt auch bei Raumtemperatur erfolgen kann. Stattdessen wird durch ein Erhitzen des Reaktand-Pulverlackabfall-Gemisches Reaktionen katalysiert, welche die funktionellen Gruppen des Pulverlackabfalls zuverlässig inaktivieren, d.h. zumindest so umwandeln, dass bei einer Weiterverarbeitung kein Anbacken oder Haften an Oberflächen der Behälter oder Werkzeuge auftreten.

Das erfindungsgemäße Verfahren zeichnet sich zudem durch eine einfache Handhabbarkeit und damit verbundene hohe Wirtschaftlichkeit aus. Durch Beimischen eines Reaktanden können die Pulverlackabfälle zuverlässig in ein weiter verarbeitbares Produkt überführt werden. Für die Herstellung von Füllstoffen aus Pulverlackabfällen ist es auf konventionellem Wege erforderlich, den Altpulverlack aushärten zu lassen (um die Reaktivität zu mindern) und anschließend noch eine Grob- und Feinmahlung vorzunehmen. Alle diese Schritte erfordern einen hohen Personal oder Maschinenaufwand. Im Gegensatz dazu kann zur Herstellung eines Füllstoffes mittels des erfindungsgemäßen Verfahrens der Pulverlackabfall direkt mit einem Reaktanden vermischt werden, ohne dass weitere aufwändige Arbeitsschritt notwendig wären.

Überraschenderweise lassen sich durch den Zusatz des erfindungsgemäßen Reaktanden Pulverlackabfälle mit gänzlich unterschiedlicher Zusammensetzung so aufbereiten, dass diese zuverlässig weiterverarbeitet werden können. Die Begriffe Pulverlackabfälle und Altpulverlack werden synonym verwandt.

Pulverlacke sind nach EN ISO 8130-14:2004 feine Harzteilchen, entweder thermoplastisch oder wärmehärtend, die im allgemeinen Pigmente, Füllstoffe und Additive enthalten, die beim Lagern unter geeigneten Bedingungen einteilig bleiben und nach Applikation durch Schmelzen und gegebenenfalls Härten eine Beschichtung ergeben.

Eine wesentliche Komponente von Pulverlacken sind Bindemittel, die Feststoffteilchen im Lack umhüllen und grundlegenden Eigenschaften wie Oberflächenbeschaffenheit, Härte und Stabilität des erhaltenen Lackfilmes bestimmen. Bindemittel bestehen oftmals aus langkettigen, meist organischen Verbindungen, die reaktive bzw. funktionelle Gruppen enthalten. Für Pulverlacke kommen insbesondere Kunstharze zum Einsatz, die entweder miteinander oder über einen Härter zu verzweigten Makromolekülen vernetzen können. Weiterhin können Pulverlacken Farbmittel (u.a. Pigmente, Farbstoffe), Additive (u.a. Verlaufsmittel, Entgasungsmittel, Wachse, Strukturmittel) oder Füllstoffe (u.a. Calciumcarbonat, Talkum, Bariumsulfat) hinzugegeben werden. Die Farbmittel, Additive und Füllstoffe können an die jeweiligen Anforderungen angepasst werden.

Als grundlegende Pulverlacktypen sind thermoplastische Pulverlacke und duroplastische Pulverlacke bekannt.

Duromere (härtende) Pulverlacke sind Pulverlacktypen, bei denen die Filmbildung durch chemische Vernetzung bei hoher Temperatur nach Aufschmelzung und Verfließen erfolgt. Die duroplastischen Pulverlacke setzen sich bevorzugt

ausfolgenden Harz und Härtersystemen zusammen:

| Duromere Systeme | | | |
|---|---|---|---|
| | Harz | Härter | |
| EP | Epoxidharz | Phenolische Härter Imidazolin-Derivate Anhydridaddukte | Epoxidharze/ Polyaddition |
| EP-DCD | Epoxidharz | Modifiziertes Dicyandiamid | Epoxidharze Polyaddition |
| EP-SP | COOH-Polyesterharz | Epoxidharze | Hydridharze Polyaddition |
| SP-HAA | COOH-Polyesterharz | Hydroxyalkylamidhärter | Polyesterharze Polykondensation |
| SP-GE | COOH-Polyesterharz | Aromatische Glycidylester | Polyesterharze Polyaddition |
| SP-PUR | OH-Polyesterharz | Isocyanataddukten Blockierte | Polyesterharze Polyaddition |

Epoxidharze (EP-Systeme), die auf Bisphenol-A basieren, gehören zu den bedeutenden Pulverlacksystemen, wobei zu den wichtigsten Härtern beschleunigtes oder modifiziertes Dicyandiamid (DCD) zählt Die Löslichkeit des DCD im Epoxidharz beeinflusst die Filmqualität und kann durch Modifizierung verbessert werden. So kann etwa die Chemikalienbeständigkeit und der Korrosionsschutz durch Phenole erhöht oder die Persistenz gegen Lösemittel, Säuren und Vergilben durch Carbonsäurehydride verbessert werden. Der Einsatz von Imidazolderivate als Härter erfolgt hingegen nur bei matten Beschichtungen. Diese Pulverlacke werden für insbesondere für die Beschichtung von Pipelines und Rohrleitungen sowie in der Elektronikindustrie im Innenbereich verwendet.

Als Epoxidharze werden für die Herstellung von Pulverlacken vorwiegend feste Typen mit einem Schmelzbereich nach Kofler zwischen 60 °C bis ca. 90 °C verwandt. Um von Epoxidharzen dreidimensional vernetzte Polymere erhalten zu können, sollten die Harze mit Co-Monomeren (Härtern) oder Initiatoren zur Reaktion gebracht werden. Die dabei ablaufenden Additionsreaktionen haben den großen Vorteil, dass sie ohne die Bildung von flüchtigen Nebenprodukten erfolgen. Weiterhin entsteht bei Öffnung des gespannten Oxiranrings, welcher eine kurze C-O-Bindung enthält, eine längere, nichtcyclische C-O-Bindung. Dies hat zur Folge, dass der Härtungsprozess mit einem äußerst geringen Volumenschwund verbunden ist, was insbesondere für die technische Verarbeitung von Bedeutung ist. Durch die Ringspannung der Epoxidgruppe ergibt sich eine hohe Reaktivität von Epoxidharzen gegenüber vielen chemischen Verbindungsklassen, weshalb eine Vielzahl verschiedener Härtungsreagenzien für die Vernetzungsreaktion genutzt werden kann. Die Wahl des Härters hängt dabei unter anderem von der Verarbeitungsmethode, den Reaktionsbedingungen sowie den angestrebten Produkteigenschaften ab.

Folgende Reaktionsgleichung illustriert eine Härtung von Epoxiden mit phenolischem Härter:

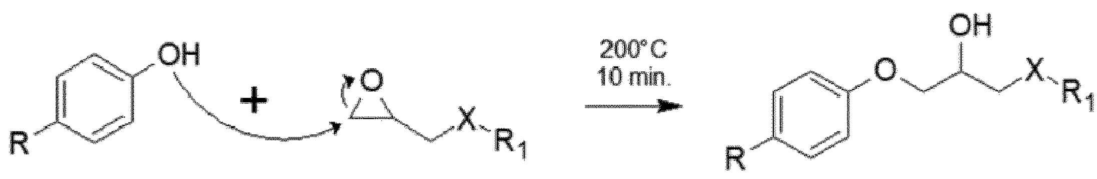


**1** **2** **3**

Hierbei besitzt das Phenol **1** am Sauerstoff der Hydroxygruppe zwei freie Elektronenpaare sowie eine hohe Elektronegativität, wodurch es besonders nucleophil ist. Dadurch ist es in der Lage, einen nucleophilen Angriff am positivierten Ring-C-Atoms des Epoxids **2** durchzuführen. Im oben dargestellten Epoxid **2** ist das linke Ring-C-Atom für diesen Angriff bevorzugt, da dieses sterisch weniger gehindert ist als das rechte. Der Angriff führt zu einer Ringöffnung, die bereits aufgrund der hohen Ringspannung eines 3-Rings begünstigt ist. Durch die folgende tautomere Umlagerung wird das entstandene Alkoholat zum Alkohol **3** protoniert.

Folgende Reaktionsgleichung illustriert eine Härtung von Epoxiden mit Imidazolinderivaten:

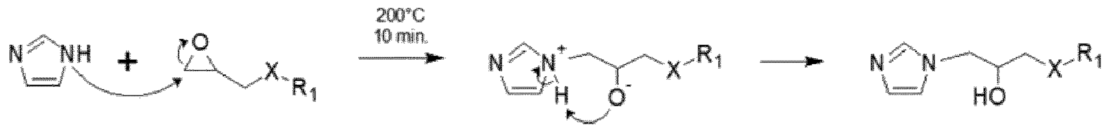


1 2 3 4

Das Imidazol **1** führt über das freie Elektronenpaar am Stickstoff einen nucleophilen Angriff am sterisch weniger gehinderten Ringkohlenstoff des Epoxids **2** durch, woraufhin eine Ringöffnung stattfindet, die durch die hohe Ringspannung begünstigt ist. Das Alkoholat **3** wird durch tautomere Umlagerung zum Alkohol **4** protoniert. Weiterhin sind Härtungen von Epoxidharzen mittels Anhydriden bekannt.

Polyestersysteme setzen sich insbesondere aus Harzen auf der Basis von sauren Polyestern und Härtern aus Hydroxyalkylamiden zusammen. Durch das bei der Härtungsreaktion freigesetzte Wasser wird die Schichtdicke zumeist auf 120 µm limitiert, da ansonsten die Entstehung von ‚Nadellöchern' (Defekte, englisch: Pinholes) droht. Für die meisten Pulverlackierung werden Schichtdicken unterhalb von 100 µm angestrebt, sodass die Begrenzung praktisch vernachlässigbar ist. Pulverlacke auf Polyesterbasis haben eine ausgezeichnete Beständigkeit im Außenbereich sowie eine hohe Beständigkeit gegen Vergilben durch ultraviolettes Licht. Ihre chemische Beständigkeit ist etwas geringer als die der Epoxidharze.

Unter Polyester werden bevorzugt polymere Verbindungen verstanden, bei denen die monomeren Einheiten über die Estergruppe miteinander verknüpft sind und deren Synthese durch Polykondensation bi-funktioneller Carbonsäuren bzw. deren Derivate mit Diolen erfolgen.

Aufgrund ihrer spezifischen, chemischen und anwendungstechnischen Eigenschaften werden gesättigte Polyester für Pulverlacksysteme bevorzugt verwendet. Diese bestehen bevorzugt ausschließlich aus hydroxyl- und/oder carboxylfunktionellen Gruppen und werden deshalb auch bevorzugt mit polaren Komplementärharzen kombiniert. Beispielsweise haben sich niedermolekulare mit Methanol hochvernetzte Melaminharze oder Isocyanatharze bewährt.

Hybridsysteme bezeichnen Pulverlacke, welcher auf einer Mischung aus Epoxidharzen und Polyestern basieren. Zur Herstellung von Epoxidharz/Polyester-Mischpulverlacken (Hybridsysteme) werden bevorzugt Polyesterharze verwendet, die im Molekül endständige, freie Carboxylgruppen enthalten, die über die Addition an Epoxidgruppen eine räumliche Vernetzung bewirken. Die COOH-funktionelle Polyesterharze haben bevorzugt eine Molmasse von einigen 1000 g/mol und werden aufgrund ihrer größeren Molmasse im Vergleich zu den Epoxidharze als Stammharz oder Härter bezeichnet. Das Mischungsverhältnis von Epoxidharz (EP) zu Polyester (PES) variiert bevorzugt zwischen 60:40 bis hin zu 10:90. Pulverlacke, die auf einem solchen Hybridsystem basieren, verfügen über eine verbessere Farb- und UV-Beständigkeit. Aufgrund ihrer weniger starken Wetterbeständigkeit werden Hybridsysteme vornehmlich für Innenanwendungen eingesetzt.

Die folgende Formel zeigt den Reaktionsmechanismus für Vernetzung von sauren Polyesterharzen und Epoxidharzen bei 200 °C/10 Minuten.

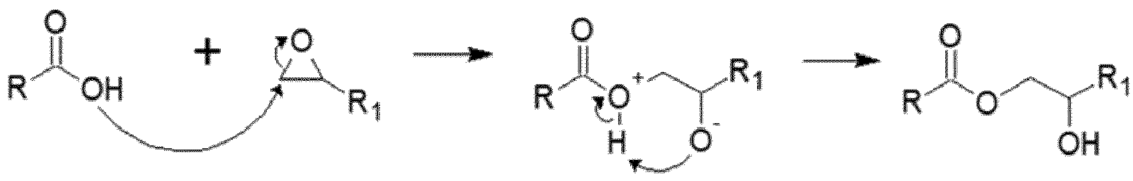

1 2 3 4

Die Carbonsäure **1** kann mit einem freien Elektronenpaar der Carboxyl-OH-Gruppe eine nucleophile Ringöffnung am Epoxid **2** bewirken, sodass sich das Alkoholat **3** bildet. Durch Tautomerie entsteht anschließend der Hydroxyester **4**.

Polyurethanpulverlacke sind bevorzugt Pulverlacke, welche Polyurethan als Bindemittel umfassen. Beispiele sind auf Polystyrol-Polyurethane (SP-PUR) oder Acrylatharz-Polyurethane (AC-PUR-Systemen), welche sich durch ihre besondere Wetterbeständigkeit auszeichnen. Bevorzugte Polyurethanpulverlacke basieren auf OH-funktionellen Polyestern oder Acrylatharzen, die sich mit Isocyanataddukten, wie zum Beispiel dem geblockten Derivat Isophorondiisocyanat, vernetzen lassen.

Acrylatpulverlacke basieren bevorzugt auf Acrylatharzen, bevorzugt auf epoxyfunktionellen Acrylatharzen. Beispielsweise werden Acrylatharz-Dodecandicarbonsäure (AC-DAA-Pulverlacke) epoxyfunktionelle Acrylatharzen mit Dodecandicarbonsäure vernetzt.

Vorteilhafterweise erlaubt der erfindungsgemäße Zusatz des Reaktanden eine Weiterverarbeitung von Pulverlackabfällen, welche bei der Herstellung oder Anwendung der vorgenannten Pulverlacke entstehen.

Bevorzugt stammt der in dem erfindungsgemäßen Verfahren aufbereitete Pulverlackabfall von einem Pulverlack auf Basis eines Epoxid-, Polyester-, Hybrid-, Polyurethan oder Acrylatsystem.

In einer bevorzugten Ausführungsform der Erfindung ist das Verfahren dadurch gekennzeichnet, dass der Pulverlackabfall ein Kunstharz, besonders bevorzugt ein Epoxidharz, ein Polyesterharz und/oder ein Acrylatharz oder Mischungen dieser umfasst.

Diese Pulverlackabfälle sind dadurch gekennzeichnet, dass sie ohne besondere Behandlung eine hohe Haftung für Metalloberflächen aufweisen und somit bei der Weiterverarbeitung ohne Zusatz der erfindungsgemäßen Reaktanden Produktionsstörungen und Geräteverschleiß führen.

In einer bevorzugten Ausführungsform der Erfindung ist das Verfahren dadurch gekennzeichnet, dass die funktionellen Gruppen ausgewählt sind aus einer Gruppe, die Hydroxyl-, Epoxy-, Carboxyl, Amino- und/oder Estergruppen umfassen.

Im Sinne der Erfindung bezeichnen die funktionellen Gruppen bevorzugt chemische Gruppen in dem Pulverlackabfall, welche eine Haftung mit Metall vermitteln. Die funktionellen Gruppen können daher auch als reaktive Gruppen bezeichnet werden. Erfindungsgemäß wurde erkannt, dass der Recyclingprozess deutlich optimiert werden kann, indem funktionelle bzw. reaktive Gruppen in Pulverlackabfällen chemisch inaktiviert werden.

In einer bevorzugten Ausführungsform der Erfindung weist der Pulverlackabfall funktionelle Gruppen auf, welche eine Haftung an einer Metalloberfläche vermitteln können, wobei der Reaktand eine Inaktivierung der funktionellen Gruppen bewirkt.

Als Reaktand eignen sich insbesondere Moleküle aus der Gruppe der Tenside. Tenside gehören zur Molekülklasse der amphiphilen Substanzen. Molekular sind Tenside durch eine hydrophoben (unpolaren) Kohlenwasserstoffrest und einen hydrophilen (polaren) Molekülteil gekennzeichnet. Auf Basis des hydrophilen Molekülteiles bzw. der hydrophilen Gruppe erfolgt eine systematische Einteilung der Tenside (vgl. Abb. 36).

Anionische Tenside weisen als hydrophile Gruppen bevorzugt $-COO^-$ (Carboxylate), $-SO_3$-(Sulfonate) oder -O-$SO^{3-}$ (Sulfate) auf. Kationische Tenside besitzen bevorzugt $-NR_4^+$ (Ammonium) als eine hydrophile Gruppe. Nichtionische Tenside sind bevorzugt durch -O-R (Polyether) oder -O-H (Polyalkohole) als hydrophilen Gruppen gekennzeichnet. Amphotere oder zwitterionische Tenside umfassen bevorzugt die hydrophilen Gruppen $-NR_2^+-$ (Ammonium) oder Carboxylat ($-COO^-$) auf.

Erfindungsgemäß wurde erkannt, dass durch die hydrophilen Gruppen der Tenside eine Inaktivierung der funktionellen Gruppen des Pulverlackes erfolgt, sodass eine unerwünschte Haftung, insbesondere an Metalloberfläche vermieden werden kann.

Besonders bevorzugt sind anionische Tenside. Im Sinne der Erfindung umfassen anionische Tenside insbesondere auch Carbonsäuren.

Carbonsäuren in diesem Sinne sind aliphatische, cyclische oder aromatische Mono- oder Polycarbonsäuren. Bevorzugte Moleküle besitzen eine oder mehrere gesättigte oder ungesättigte, verzweigte oder unverzweigte Kohlenstoffketten mit oder ohne weitere funktionelle Gruppen oder monocyclische, polycyclische oder aromatische Kohlenstoffbereiche (hydrophober Bereich) und eine oder mehrere Carboxylgruppen (hydrophiler Bereich). Die Carbonsäuren können daher auch als hydrophobe Carbonsäuren bezeichnet werden.

In einer bevorzugten Ausführungsform ist der Reaktand eine gesättigte Carbonsäure. Durch den gesättigten Kohlenstoffwasserstoffrest als hydrophoben Bestandteil zeichnet sich die gesättigte Carbonsäure durch eine besondere Stabilität und effektive Wirkungsweise aus. Zudem führt eine gesättigter Kohlenwasserstoffkette zu bevorzugten thermischen Eigenschaften, wie einer höheren Schmelztemperatur. Hierdurch kann sichergestellt werden, dass auch bei einem bevorzugten Erhitzen des Pulverlack-Reaktanden-Gemisches sich der gewünschte Erfolg einstellt.

In einer bevorzugten Ausführungsform ist die Carbonsäure eine Fettsäure. Eine Fettsäure ist Monocarbonsäure, d.h. eine Carbonsäure mit nur einer Carboxylgruppe. Die Fettsäure kann eine verzweigte, unverzweigte, zyklische, gesättigte oder ungesättigte Fettsäure sein. Nichtbeschränkende Beispiele umfassen:

| | |
|---|---|
| Undecylensäure | $C_{10}H_{19}COOH$, |
| Ölsäure | $C_{17}H_{33}COOH$, |
| Nervonsäure | $C_{23}H_{45}COOH$, |
| Linolsäure | $C_{17}H_{31}COOH$, |
| Calendulasäure | $C_{17}H_{29}COOH$, |
| Arachidonsäure | $C_{19}H_{31}COOH$, |
| Cervonsäure | $C_{21}H_{31}COOH$, |
| Taririnsäure | $C_{18}H_{32}O_2$, |
| Vernolsäure | $C_{18}H_{32}O_3$, |

(fortgesetzt)

| | |
|---|---|
| Rizinolsäure | $C_{18}H_{34}O_3$, |
| Sterculiasäure | $C_{19}H_{34}O_2$, |
| Lactobacillsäure | $C_{19}H_{36}O_2$, |
| Malvaliasäure | $C_{18}H_{32}O_2$ |
| Chaulmoograsäure | $C_{18}H_{32}O_2$, oder auch |
| Mykolsäure | |

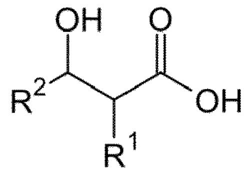

mit R1: lineare Alkane, $C_{20}$ - $C_{24}$; R2: Komplexe Strukturen von bis zu 60 C-Atomen.

In einer besonders bevorzugten Ausführungsform ist der Reaktand eine gesättigte Fettsäure, ganz besonders bevorzugt eine gesättigte Fettsäure mit der Summenformel $C_nH_{2n+1}COOH$, wobei bevorzugt n = 5-30. Nichtbeschränkende Beispiele umfassen:

| | |
|---|---|
| Octansäure | $C_7H_{15}COOH$, |
| Decansäure | $C_9H_{19}COOH$, |
| Dodecansäure | $C_{11}H_{23}COOH$, |
| Hexadecansäure | $C_{15}H_{31}COOH$, |
| Octadecansäure | $C_{17}H_{35}COOH$, |
| Nonadecansäure | $C_{18}H_{37}COOH$, |
| Phytansäure | $C_{19}H_{39}COOH$, |
| Hexacosansäure | $C_{25}H_{51}COOH$, oder |
| Tetratriacontansäure | $C_{33}H_{67}COOH$. |

In einer besonders bevorzugten Ausführungsform der Erfindung ist der Reaktand eine Stearinsäure (Octdecansäure).

In einer weiteren bevorzugten Ausführungsform der Erfindung ist der Reaktand eine Palmitinsäure (Hexadecansäure).

Carbonsäuren, insbesondere die bevorzugten genannten eignen sich auf überraschend zuverlässige Weise zu Inaktivierung funktioneller Gruppen in Pulverlackabfällen. Carbonsäure zeichnen sich durch einen hydrophoben Rest (R) und eine oder mehrere Carboxylgruppen COOH aus. Abb. 1 zeigt chemische Reaktionen unter Ablauf derer eine Inaktivierung funktioneller Gruppen in den Pulverlacken bewirkt werden kann. Diese umfassen eine saure Hydrolyse eines Nitrils, eine Veresterung einer Carboxylgruppe, eine Nucleophile oder electrophile Ringöffnung einer Epoxygruppe, eine Anhydridbildung, eine Amidbildung oder eine Esterhydrolyse.

Folgende Reaktionen können zur Inaktivierung der jeweiligen funktionellen Gruppen mittels Carbonsäuren genutzt werden.

Die chemischen Formeln werden im Folgenden mittels einer gesättigten Carbonsäure gezeigt, welche eine unverzweigte aliphatische Kohlenstoffkette aufweist. Der Rest (R) kann aber auch verzweigte, gesättigte oder ungesättigte hydrophoben Bereiche aufweisen.

Veresterung:

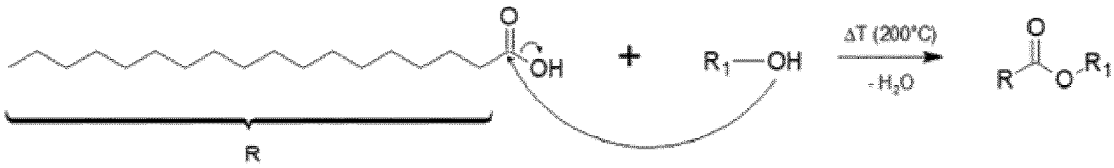


1 2 3 4

Der Alkohol **2** greift nucleophil mit einem freien Elektronenpaar des Hydroxyl-Sauerstoffs am Carbonylkohlenstoff der Carboxylgruppe der Carbonsäure **1** an. Dabei wird formal die Hydroxylgruppe abgespalten, die sich mit dem Hydroxyl-Proton des Alkohols **2** zu Wasser **3** verbindet, welches bei der Reaktionstemperatur von 200 °C sofort als Wasserdampf (gasförmig) entweicht. Es entsteht ein Ester **4**.

Sowohl die nucleophile als auch die elektrophile Ringöffnung der Epoxygruppen liefert das gleiche Produkt. Mechanistisch unterscheiden sich die beiden Reaktionen wie folgt.

<u>Nucleophile Ringöffnung:</u>

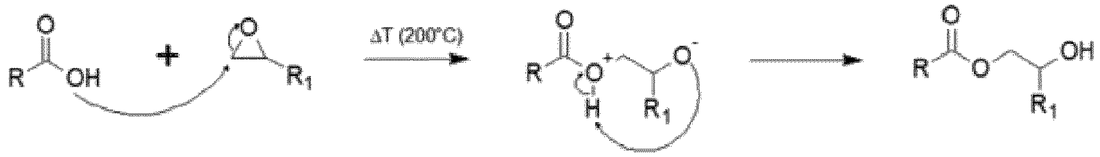


1 2 3 4

Die Carbonsäure **1** greift mit einem freien Elektronenpaar der Hydroxylgruppe des Carboxyls am sterisch weniger gehinderten Kohlenstoffatom des Epoxids **2** an, woraufhin die Bindung zum Ringsauerstoff umklappt und der Ring sich öffnet. Es bildet sich die Zwischenstufe **3**. Der Alkoholatsauerstoff bindet das überschüssige Proton von der Estergruppe, sodass der Estersauerstoff ungeladen wird und die Alkoholgruppe neben dem Rest $R_1$ und somit ein Hydroxyester entsteht (**4**).

<u>Elektrophile Ringöffnung:</u>

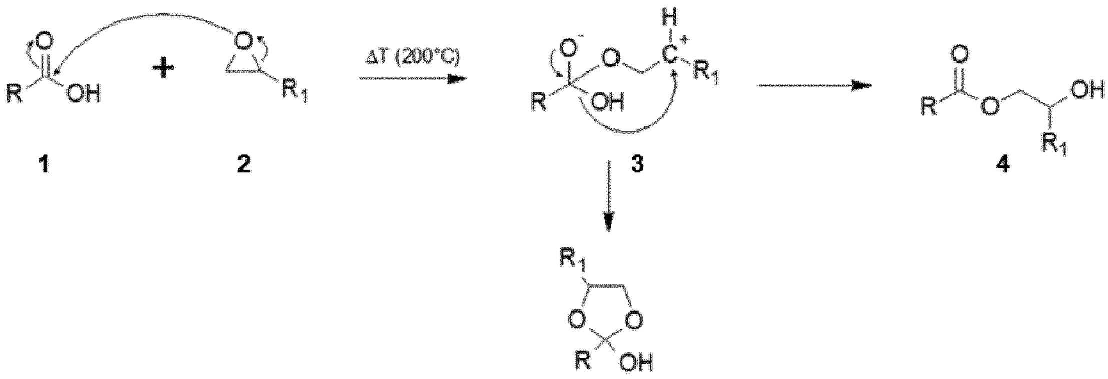


1 2 3 4

5

Da der Carbonylkohlenstoff in der Carbonsäure **1** durch die höhere Elektronegativität des Sauerstoffs positiv polarisiert ist und somit eine elektrophile Position darstellt, kann dieses nucleophil vom Ringsauerstoff des Epoxids **2** angegriffen werden. Dadurch wird der Carbonylsauerstoff negativ geladen und es bildet sich das Intermediat **3**. Dieses kann theoretisch auf zwei verschiedene Weisen weiterreagieren. Zum einen kann eines der freien Elektronenpaare des negativ geladenen Sauerstoffs zu einer Doppelbindung umklappen und somit das Carbonyl zurückbilden. Dadurch wird die Hydroxylgruppe der ursprünglichen Säuregruppe als Hydroxid abgespalten. Dieses kann sich sofort an das positiv geladene Kohlenstoffatom des Intermediats anlagern und somit aus dem sekundären Carbeniumion den Hydroxyester **4** bilden. Zum anderen wäre theoretisch auch eine intramolekulare Ringbildung denkbar, bei der der negativ geladene Sauerstoff das positiv geladene Kohlenstoffatom angreift und somit das instabile Hydroxyacetal **5** bildet. Da hier eine polymere Struktur betrachtet wird, die sterisch gehindert ist, ist diese Variante eher als theoretisches Nebenprodukt anzusehen. Außerdem ist in Analogie zur Erlenmeyer-Regel davon auszugehen, dass entweder die Alkoholgruppe direkt am Acetalkohlenstoff nicht stabil wäre und sich somit schnell abspalten würde oder das Acetal sich aufspalten und ein geminales Diol ergeben würde, welches nach der Erlenmeyer-Regel dazu neigt, sofort in ein Gleichgewicht überzugehen, bei dem sowohl die hydratisierte Form dieses Esters als auch die dehydratisierte Form vorliegt.

Anhydridbildung:

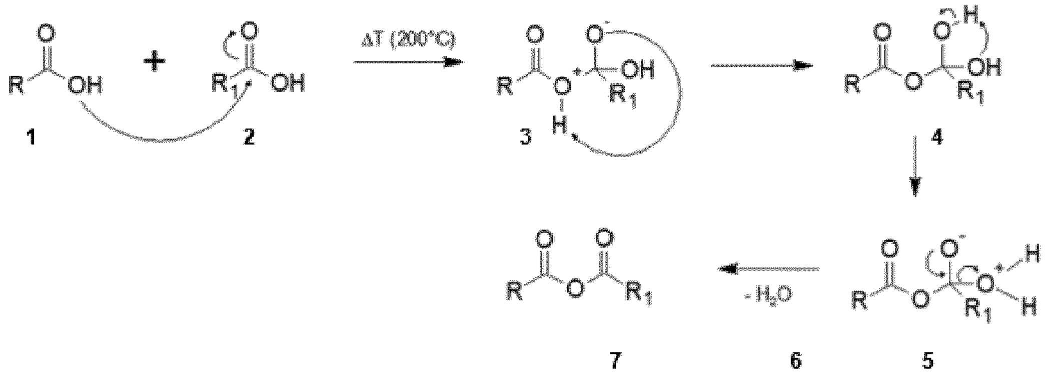


Der Hydroxylsauerstoff in der Carboxylgruppe der Carbonsäure **1** greift nucleophil den Carbonylkohlenstoff der Carbonsäure **2** an. Dabei entsteht das Intermediat **3**. Um die Ladungstrennung auszugleichen wird tautomer ein Proton zum negativ geladenen Sauerstoff umgelagert, sodass eine Hydroxylgruppe entsteht. Da dabei ein geminales Diol (**4**) gebildet wird, wirkt die Erlenmeyer-Regel, nach der nach tautomerer Umlagerung eines Protons von einer Hydroxylgruppe zur anderen Wasser (**6**) als neutrales Molekül abgespalten werden kann. Ein freies Elektronenpaar des negativ geladenen Sauerstoffs klappt um, sodass sich eine Carbonylgruppe und somit das Carbonsäureanhydrid **7** bildet.

Amidbildung:

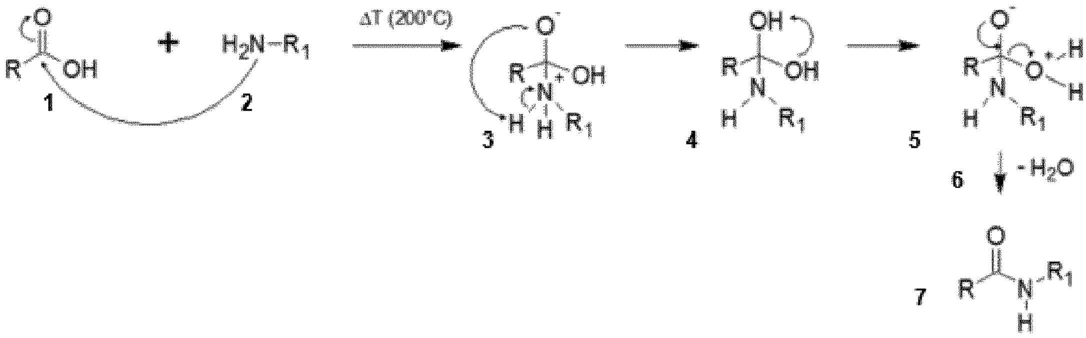


Der nucleophile Stickstoff der Aminogruppe des primären Amins **2** greift nucleophil den Carbonylkohlenstoff der Carbonsäure **1** an. Es entsteht das Intermediat **3**. Es lagert sich tautomer ein Proton vom positiv geladenen Stickstoff zum negativ geladenen Sauerstoff um, sodass sich ein geminales Diol (**4**) bildet. Nach der Erlenmeyer-Regel lagert sich ein Proton von der einen zur anderen Hydroxylgruppe um und es spaltet sich Wasser **6** ab. Es entsteht das Amid **7**. Analog dazu findet der Reaktionsmechanismus für die Reaktion des bei der Anhydridbildung dargestellten sekundären Amins statt.

Saure Esterhvdrolvse:

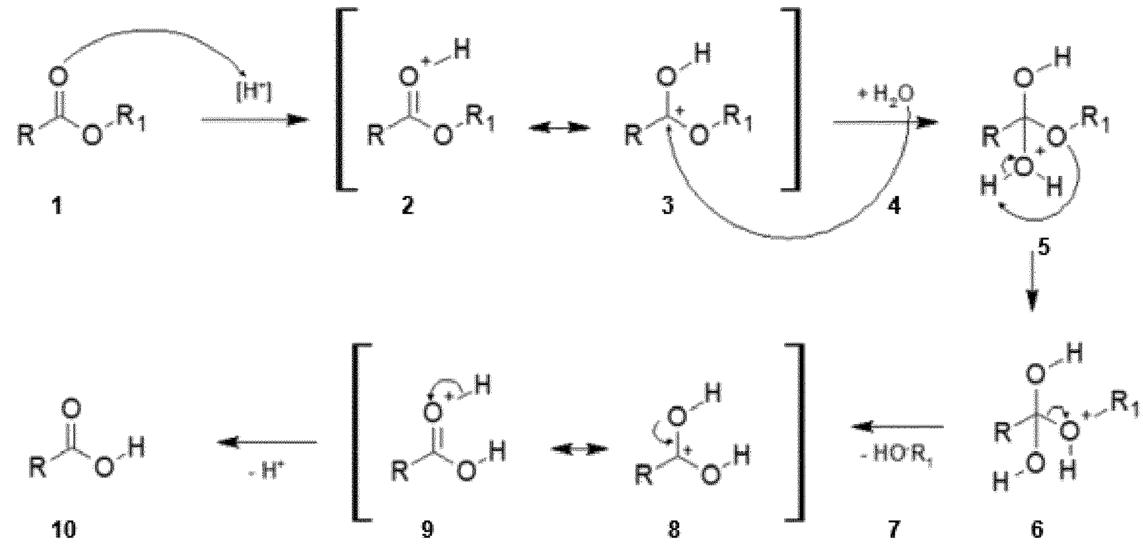


Der Polyester **1** greift mit einem freien Elektronenpaar des Carbonylsauerstoffs ein in katalytischen Mengen vorkommendes Proton (aus der verdünnten Säure) an. Dadurch entsteht die mesomere Zwischenstufe **2** bzw. **3**. Das nucleophile Wasser (**4**) kann nun das entstandene Carbeniumion **3** angreifen. Da Wasser eher schwach nucleophil ist, ist dieser Angriff erst durch das durch die Anlagerung des Protons entstandene Carbeniumion möglich. Es entsteht das Additionsprodukt **5**, das tautomer ein Proton des angelagerten Wassers an den Ethersauerstoff umlagert und so die Zwischenstufe **6** bildet. Dadurch kann das neutrale Alkoholmolekül **7** abgespalten werden, sodass die mesomere Zwischenstufe **8** bzw. **9** entsteht. Um die Carbonsäure **10** zu erhalten, wird vom ehemaligen Carbonylsauerstoff das Proton abgespalten.

In einer weiteren bevorzugten Ausführungsform der Erfindung ist der Reaktand ein gesättigter, einfach ungesättigter oder ein mehrfach ungesättigter Fettalkohol.

Im Sinne der Erfindung sind Fettalkohole bevorzugt einfache oder mehrwertige aliphatische, cyclische oder aromatische hydrophobe Alkohole. Fettalkohole umfassen bevorzugt einen hydrophoben Rest R und eine Hydroxylgruppe. Bevorzugte Fettalkohole lassen sich in der Formel R-OH darstellen, wobei R eine beliebige eine geradkettige oder verzweigte, gesättigte oder ungesättigte Alkylgruppe mit 6 bis 30 Kohlenstoffatomen ist. Besonders bevorzugt sind gesättigter Fettalkohole.

Beispiele geeigneter Fettalkoholen sind: 1-Hexanol, 1-Heptanol, 1-Octanol, 1-Decanol, 1-Dodecanol (Laurylalkohol), 1-Tetradecanol (Myristylalkohol), 1-Hexadecanol (Cetylalkohol), 1-Heptadecanol (Margarylalkohol),1-Octadecanol (Stearylalkohol), 1-Eicosanol (Arachidylalhohol), 1-Docosanol (Behenylalkohol), 1-Tetracosanol (Lignocerylalkohol), 1-Hexacosanol (Cerylalkohol), 1-Octacosanol (Montanylalkohol), 1-Triacontanol (Melissylalkohol), cis-9-Hexadecen-1-ol (Palmitoleylalkohol), cis-9-Octadecen-1-ol (Oleylalkohol), trans-9-Octadecen-1-ol (Elaidylalkohol), cis-11-Octadecen-1-ol, cis,cis-9,12-Octadecadien-1-ol (Linoleylalkohol), 6,9,12-Octadecatrien-1-ol (y-Linolenylalkohol).

Vorteilhafterweise erlauben auch Fettalkohole eine Inaktivierung funktioneller Gruppen in den Pulverlackabfällen. Dies betrifft insbesondere Pulverlackabfälle, welche als funktionelle Gruppen Hydroxyl-, Epoxy-, Carboxyl, Amino- und/oder Estergruppen aufweisen.

Die Wirkmechanismen der Fettalkohole sind analog zu denen, welche obige für die hydrophoben Carbonsäuren beschrieben wurden. Dies betrifft insbesondere die saure Hydrolyse von Nitrilen sowie die nukleophile und elektrophile Ringöffnung.

In einer weiteren bevorzugten Ausführungsform der Erfindung ist der Reaktand ein Polyethylenglycol (PEG). Die Begriffe Polyethylenglycol und PEG werden synonym verwandt. Im Sinne der Erfindung umfassen die Tenside als Reaktanden mithin auch bevorzugt PEGs, welche aufgrund polarer Hydroxidgruppen den nichtionischen Tensiden zugeordnet werden können.

Im Sinne der Erfindung meint PEG bevorzugt einen linearen oder verzweigten Polymer, umfassend Strukturen der Summenformel -(-CH2-CH2-O-)n- mit n=2 - 4000, bevorzugt n= 5 - 400. PEGs umfassen somit bevorzugt eine Kette von Monomeren (-CH2-CH2-O-). Die Bezeichnung PEG bezeichnet bevorzugt insbesondere auch Polymere, welche eine Mehrheit, also mehr als 50%, von $-CH_2CH_2O-$ monomeren Grundeinheiten aufweisen. Chemisch handelt es sich bei den PEGs um Polyether des Glykols (zweiwertiger Alkohol) Ethandiol. PEGs mit der Summenformel $R_1$ -(-CH2-CH2-O-)n-$R_2$ können unterschiedliche Reste aufweisen, besonders bevorzugt ist $R_1$=H und $R_2$=OH.

Für die Tenside als Reaktanden, insbesondere den bevorzugten genannten gesättigten Carbonsäuren und Polyethylenglycolen, konnten ausgezeichnete Ergebnisse erzielt werden. Unter Verwendung der Reaktanden konnten

die Pulverlackabfälle ohne Haftungen oder andere prozesshindernde Vorgänge bei unterschiedlichsten Temperaturen weiterverarbeitet werden. Die geringe Haftung des Reaktand-Pulverlack-Gemisches an Oberflächen ist neben den vorgenannten Reaktionen auch auf van der Waalssche Kräfte zurückzuführen, welche zwischen den Tensiden über eine vermutete Micellenbildung zu einer Haftungsreduzierung führen.

Weiterhin ist es bevorzugt, dass der Reaktand, bei Raumtemperatur in Pulverform vorliegt, um ein einfaches Mischen mit dem Pulverlackabfall zu ermöglichen.

Besonders bevorzugt werden vorzugsweise Tenside verwendet, die eine Schmelztemperatur von über 30°C aufweisen, bevorzugt über 50°C, besonders bevorzugt über 60°C da sie als Pulver dem Pulverlackabfall beigemischt werden können. Auch Reaktanden mit einer Schmelztemperatur unterhalb von 30°C können verwendet werden. In dem Fall werden diese in den Pulverlackabfall über Sprüh- oder Rieselanlagen eingebracht.

Die erhöhte Schmelztemperatur der bevorzugten Tenside von über 50°C, bevorzugt über 60°C wirkt sich zudem besonders positiv auf die Weiterverarbeitbarkeit des Reaktand-Pulverlackabfall-Gemisches aus. Beispielsweise ist es bevorzugt, dass die Weiterverarbeitung des Reaktand-Pulverlackabfall-Gemisch bei einer Temperatur von mindestens 60°C erfolgt, teilweise bei deutlich höheren Temperatur. Durch die Auswahl von Reaktanden mit einer Schmelztemperatur von über 60° kann sichergestellt werden, dass während der verschiedenen Prozessschritte eine ausreichende Stabilität vorliegt und eine permanente Inaktivierung der funktionellen Gruppen des Pulverlackabfalles erfolgt.

Weitere Vorteile der gesättigten Carbonsäuren, insbesondere der Stearinsäure, liegen in ihrer Kompatibilität mit Pulvermischungen. Sie sind staubfrei, besitzen eine gute Rieselfähigkeit, sind darüber hinaus widerstandsfähig und verfügen über eine hohe Abriebfähigkeit. Auch eignen sie sich die für die Silolagerung, sodass diese im industriellen Maßstab einsetzbar sind.

Vorteilhafterweise reichen bereits geringe Menge der Reaktanden aus, um die funktionellen Gruppen des Pulverlackabfalles zu inaktivieren und somit ein weiter verarbeitbares Produkt zu erhalten.

In einer bevorzugten Ausführungsform der Erfindung ist das Verfahren dadurch gekennzeichnet, dass das Reaktand-Pulverlackabfall-Gemisch

i) 90 - 99,5 Gew.-% des Pulverlackabfalles und
ii) 0,5 - 10 Gew.-% des Reaktanden

umfasst, wobei sich die Gew.-% sich auf das Gesamtgewicht des Reaktand-Pulverlackabfall-Gemisches beziehen und kleiner gleich 100 Gew.-% sind.

Die Ausführungsform zeichnet sich durch eine besonders hohe Wirtschaftlichkeit aus, da nur geringe Mengen des Reaktanden eingesetzt werden müssen. Dennoch liefern diese Mischungen ausgezeichnete Ergebnisse im Hinblick auf die Aufbereitung verschiedener Pulverlackabfälle.

In einer weiteren bevorzugten Ausführungsform ist das Verfahren dadurch gekennzeichnet, dass bei einer Weiterverarbeitung des Reaktand-Pulverlackabfall-Gemisches das Gemisch mindestens teilweise in Kontakt mit einer Metalloberfläche kommt. Bei der Weiterverarbeitung von Pulverlacken in Extruder oder Spritzgießmaschinen kommt es in der Regel zu Kontakten der Pulverlacke mit Metalloberflächen. Ohne eine Aufbereitung der Pulverlackabfälle mithilfe des erfindungsgemäßen Verfahrens, kann es insbesondere an Metallflächen zu starken Anbackungen oder Haftungen kommen. Die Verhinderung solcher Haftvermittlung durch eine chemische Inaktivierung der funktionellen Gruppen der Pulverlackabfälle stellt einen wesentlichen Vorteil der Erfindung dar, welcher in der bevorzugten Ausführungsform besonders zum Tragen kommt.

In einer weiteren bevorzugten Ausführungsform ist das Verfahren dadurch gekennzeichnet, dass eine Weiterverarbeitung des Reaktand-Pulverlackabfall-Gemisches aus c) in einem Extruder und/oder einer Spritzgießmaschine erfolgt.

In einer weiteren bevorzugten Ausführungsform ist das Verfahren dadurch gekennzeichnet, dass eine Weiterverarbeitung des Reaktand-Pulverlackabfall-Gemisch in einem Extruder erfolgt um Kunststoffstränge zu erhalten, welche anschließend zu Granulat verarbeitet werden. Hierbei kann es bevorzugt sein, das Gemisch auf mindestens 60 °C, 70 °C, 80 °C oder 90 °C zu erhitzen. Durch den Zusatz des Reaktanden kann auch bei diesen Temperaturen ausgeschlossen werden, dass es zu Haftungen kommt. Stattdessen kann auf zuverlässige Weise aus Kunststoffsträngen ein Granulat gewonnen werden, welches beispielsweise unmittelbare in Spritzgießmaschinen eingesetzt werden kann.

In einer weiteren Ausführungsform betrifft die Erfindung auch Pulverlackprodukte, welche durch Wiederverwertung von Pulverlackabfällen unter Durchführung eines erfindungsgemäßen Verfahrens oder bevorzugten Ausführungsformen davon hergestellt wurden. Besonders bevorzugt ist die Verwendung des weiter verarbeiten Pulverlackabfalles als Füllstoff in verschiedensten industriellen Anwendungen.

## DETAILLIERTE BESCHREIBUNG

Im Folgenden soll die Erfindung an Hand von Beispielen näher erläutert werden, ohne auf diese beschränkt

zu sein.

Es wird darauf hingewiesen, dass verschiedene Alternativen zu den beschriebenen Ausführungsformen der Erfindung verwendet werden können, um die Erfindung auszuführen und zu der erfindungsgemäßen Lösung zu gelangen. Das erfindungsgemäße Verfahren oder die daraus herstellbaren Pulverlackprodukte beschränken sich in ihren Ausführungen somit nicht auf die genannten bevorzugten Ausführungsformen. Vielmehr ist eine Vielzahl von Ausgestaltungsvarianten denkbar, welche von der dargestellten Lösung abweichen können. Ziel der Ansprüche ist es, den Schutzumfang der Erfindung zu definieren. Der Schutzumfang der Ansprüche ist darauf gerichtet, die erfindungsgemäßen Verfahren und daraus herstellbare Pulverlackprodukte sowie äquivalente Ausführungsformen von diesen abzudecken.

## Kurzbeschreibung der Abbildungen

Abbildung 1: Reaktionen zwischen Stearinsäure und verschiedenen polaren Gruppen der Pulverlacke

Abbildung 2: Vergleich der unausgehärteten Altpulverlackreste (unten) und der ausgehärteten Pulverlackreste (oben). Die Probe Charge 2 (schwarz) ist mit $NH_4Cl/KOH$ die Probe Charge 1 (rot) mit Guanidiniumcarbonat.

Abbildung 3: Enthaftungsversuch von Altpulverlackresten (Charge 1) gemischt mit 2 % Stearinsäure

Abbildung 4: Enthaftungsversuch von Altpulverlackresten (Charge 2) gemischt mit 3 % Stearinsäure

Abbildung 5: DSC-Kurve für ausgehärtete Altpulverlackreste (Charge 1) mit 2 % Stearinsäure

Abbildung 6: DSC-Kurve für ausgehärtete Altpulverlackreste (Charge 1) mit 3 % Stearinsäure

Abbildung 7: FTRI-Spektroskopie von Altpulverlackresten (Charge 1) versetzt mit 2% Stearinsäure

Abbildung 8: FTRI-Spektroskopie von Altpulverlackresten (Charge 1) versetzt mit 3% Stearinsäure

Abbildung 9: FTIR-Spektrum der reinen Stearinsäure

Abbildung 10: FTIR-Spektrum eines sortenreinen Epoxidpulverlackes für 10 min bei 200 °C ausgehärtet

Abbildung 11: FTIR-Spektrum eines sortenreinnr Epoxidpulverlackes mit 2 % Stearinsäure für 10 min bei 200 °C ausgehärtet

Abbildung 12: FTIR-Spektrum eines sortenreinen Polyesterpulverlackes für 10 min bei 200 °C ausgehärtet

Abbildung 13: FTIR-Spektrum eines sortenreinen Polyesterpulverlackes mit 2 % Stearinsäure für 10 min bei 200 °C ausgehärtet

Abbildung 14: FTIR-Spektrum eines sortenreinen Hybridpulverlackes für 10 min bei 200 °C ausgehärtet

Abbildung 15: FTIR-Spektrum eines sortenreinen Hybridpulverlackes mit 2 % Stearinsäure für 10 min bei 200 °C ausgehärtet

Abbildung 16: FTIR-Spektrum von Altpulverlackresten (Charge 1, rot) für 10 min bei 200 °C ausgehärtet.

Abbildung 17: FTIR-Spektrum von Altpulverlackresten (Charge 1, rot) mit 2 % Stearinsäure für 10 min bei 200 °C ausgehärtet.

Abbildung 18: Kurvenverläufe der Rheometer-Messungen des unausgehärteten Altpulverlackrests (Charge 2) (rote Kurve) und des unausgehärteten Altpulverlackrests (Charge 2) inklusive 2 % Stearinsäure (blaue Kurve)

Abbildung 19: Haftung und Enthaftung des Pulverlacks in den Tiegeln mit und ohne Zusatz von Stearinsäure

Abbildung 20: MFR Werte im Vergleich, LLDPE (Probe C) mit Probe A und Probe B

Abbildung 21: Kurvenverlauf von LLDPE im Spannungs-Dehnungs-Diagramm

Abbildung 22: Kurvenverlauf von Probe A im Spannungs-Dehnungs-Diagramm

Abbildung 23: Kurvenverlauf von Probe B im Spannungs-Dehnungs-Diagramm

Abbildung 24: Messdaten des Kerbschlagpendelversuchs aus LLDPE (Probe C), Probe A und Probe B

Abbildung 25: Bruchfläche einer Kerbschlagprobe von Probe A (10fach vergrößert). Aufnahme mit Leica Mikroskop.

Abbildung 26: Bruchfläche einer Kerbschlagprobe von Probe B (10fach vergrößert). Aufnahme mit Leica Mikroskop

Abbildung 27: REM-Aufnahme von reinem LLDPE

Abbildung 28: a) REM-Aufnahme Probe A, 50 % LLDPE mit 50 % ausgehärteten Altpulverlackresten (Charge 3). 2000fache Vergrößerung b) REM-Aufnahme Probe B, 50 % LLDPE mit 50 % unausgehärteten Altpulverlackresten (Charge 3) inklusive 2 % Stearinsäure. 2000fache Vergrößerung

Abbildung 29: a) REM-Aufnahme Probe B aus unausgehärteten Altpulverlackresten (Charge 3) inklusive 2 % Stearinsäure. 1000fache Vergrößerung b) REM-Aufnahme Probe B aus unausgehärteten Altpulverlackresten (Charge 3) inklusive 2 % Stearinsäure. 2000fache Vergrößerung

Abbildung 30: FTIR-Aufnahme von reinem LLDPE (Probe C)

Abbildung 31: FTIR-Aufnahme von Probe A, 50 % LLDPE mit 50 % ausgehärteten Altpulverlackresten (Charge 3)

Abbildung 32: FTIR-Aufnahme von Probe B, 50 % LLDPE mit 50 % unausgehärteten Altpulverlackresten (Charge 3) inklusive 2 % Stearinsäure

Abbildung 33: DSC-Messungen von reinem LLDPE (Probe C)

Abbildung 34: DSC-Messungen von Probe A, 50 % LLDPE mit 50 % ausgehärteten Altpulverlack-resten (Charge 3)

Abbildung 35: DSC-Messungen von Probe B, 50 % LLDPE mit 50 % unausgehärteten Altpulverlack-resten (Charge 3) inklusive 2 % Stearinsäure

Abbildung 36: Überblick über die Klassifizierung von Tensiden

**Beispiel 1: Eignung verschiedener Reaktanden zur Aufhebung der Metallhaftung von Pulverlackabfällen**

Um die Eignung zur chemischen Inaktivierung funktioneller Gruppen in Pulverlacken zu testen wurde eine Versuchsreihe mit verschieden Reaktanden durchgeführt. Nach Herstellung der Verdünnungsreihen der chemischen Verbindungen (Reaktanden) wurden jeweils einzeln 2g reine Pulverlacksorten bestehend aus Epoxid-, Polyester- und Hybridpulverlack abgewogen und mit 10 ml der verschiedenen Mischungslösungen in kleinen Plastikbehältern mithilfe von Spateln vermischt.

Die Prüfplatten bestanden aus Stahl und das Prüffeld besaßen eine Abmessung von 15 cm x 10 cm. Die Metallplatte wurde zuvor mit Isopropanol gereinigt. Anschließend wurde die Mischung auf die Metallplatte mit einem Spatel in einer dünnen Schicht aufgetragen und verteilt. Die Mischungen wurden für 10 min bei 200 °C im Ofen (Heraeus D-6450) ausgehärtet. Nachdem die Pulverlackproben abgekühlt waren, wurde getestet, ob und wie leicht/schwer diese Mischungen mittels eines Spatels von der Metallplatte entfernt werden konnten.

| Unausgehärtete sortenreine Pulverlacke gemischt mit Reaktanden | | | | |
|---|---|---|---|---|
| **Reaktand** | **Konzentration [Mol]** | **Epoxid** | **Polyester** | **Hybrid** |
| | | **Bewertung** | | |
| Salpetersäure | 0,5 | 4 | 2 | 1 |
| | 1 | 4 | 2 | 4 |
| | 2 | 3 | 1 | 4 |
| | 4 | 3 | 2 | 3 |
| Schwefelsäure | 0,5 | 1 | 4 | 4 |
| | 1 | 3 | 3 | 4 |
| | 2 | 3 | 2 | 2 |
| | 4 | 3 | 3 | 3 |
| Salzsäure | 0,5 | 4 | 3 | 4 |
| | 1 | 4 | 2 | 4 |
| | 2 | 2 | 4 | 4 |
| | 4 | 3 | 4 | 3 |
| Harnstoff | 4 | 3 | 4 | 4 |
| | 6 | 3 | 4 | 4 |
| | 8 | 2 | 4 | 4 |
| Natronlauge | 0,5 | 4 | 1 | 2 |
| | 1 | 4 | 1 | 3 |
| | 2 | 3 | 1 | 1 |
| | 4 | 2 | 1 | 2 |
| Kaliumhydroxid | 0,5 | 4 | 2 | 2 |
| | 1 | 4 | 4 | 4 |
| | 2 | 1 | 1 | 3 |
| | 4 | 1 | 1 | 3 |
| Triethylamin | 0,5 | 4 | 4 | 4 |
| | 1 | 4 | 3 | 4 |
| | 2 | 4 | 4 | 4 |
| | 4 | 1 | 4 | 4 |
| Triethylamin und Natronlauge | 2 | 4 | 1 | 2 |
| | 4 | 1 | 2 | 4 |
| Triethylamin und Kaliumhydroxid | 4 | 1 | 2 | 2 |
| Triethylamin und Kaliumhydroxid und Zinkacetat Dihydrat | 4 | 1 | 1 | 3 |
| Natriumborhydrid 2 % | 2 % | 4 | 2 | 2 |

| | | | | |
|---|---|---|---|---|
| | 4 | 3 | 4 | 4 |
| Ammoniumchlorid | 8 | 3 | 4 | 4 |
| Ammoniumchlorid und Kaliumchlorid | 8 | 1 | 1 | 1 |
| Guanidiniumcarbonat | 0,5 | 1 | 1 | 1 |
| | 1 | 1 | 1 | 1 |
| | 2 | 4 | 4 | 4 |
| Stearinsäure 2 % | 2 % | 1 | 1 | 1 |
| Stearinsäure 3 % | 3 % | 1 | 1 | 1 |

Tabelle 1: Chemische Inaktivierung Reaktanden

In der Tabelle 1 erfolgt eine Zusammenfassung der Ergebnisse und ein Ranking der Reaktanden hinsichtlich ihrer Eignung zur Enthaftung der Pulverlacke von der Metalloberfläche:

1: sehr gut inaktiviert, leicht von der metallischen Oberfläche entfernbar

2: gut inaktiviert, mehr Kraft nötig zur Entfernung von der metallischen Oberfläche

3: mittelmäßig, zum Teil inaktiviert, schwierig von der metallischen Oberfläche zu entfernen

4: schlecht, nicht inaktiviert und sehr schwer von der metallischen Oberfläche zu entfernen

Aus den Ergebnisses der Tabelle 1 ist ersichtlich, dass sich Ammoniumchlorid und Kaliumchlorid, Guanidiniumcarbonat, Stearinsäure 2 % und Stearinsäure 3 % für die Enthaftung besonders gut eignen. Mit diesen Reaktanden wurden weitergehend jeweils 2 g Altpulverlackreste (Charge 1 - 3) einzeln mit 10 ml gemischt und ausgehärtet. Die Ergebnisse dieser Testreihe sind in Tabelle 2 zusammengestellt. Zur Bestätigung der Reproduzierbarkeit wurde dieser Versuch jeweils zweimal wiederholt.

| **Unausgehärtete Altpulverlackmischungen gemischt mit Reaktanden** | | | | |
|---|---|---|---|---|
| Reaktand | Konzentration | Charge 1 | Charge 2 | Charge 3 |
| | [Mol] | Bewertung | | |
| Ammoniumchlorid mit Kaliumchlorid | 8 | 1 | 1 | 1 |
| Guanidiniumcarbonat | 0,5 | 1 | 1 | 1 |
| | 1 | 1 | 1 | 1 |
| Stearinsäure 2 % | 2 % | 1 | 1 | 1 |
| Stearinsäure 3 % | 3 % | 1 | 1 | 1 |

Tabelle 2: Chemische Aktivierung unausgehärtete Altpulverlackmischungen mit Reaktanden

Aus den Ergebnissen der Tabelle 1 und 2 lassen sich folgende Schlussfolgerungen ziehen:
Die Epoxidpulverlacke (EP) zeigten bei den Versuchen mit Schwefelsäure, Kalilauge sowie den Mischungen auf Ammoniumbasis, insbesondere bei hohen Konzentrationen im alkalischen Medium, gute Ergebnisse. Als Begründung sind nucleophile Ringöffnungen denkbar, die zur Enthaftung führten.

Bei den Polyesterpulverlacken (PP) sind bei einer Säure und den Basen sowie bei dem Ammoniumsalz/Kaliumhydroxid-Mischung teilweise gute Enthaftungen erkennbar. Als Ursache ist die zugefügte Säure zu nennen, die zu einer sauren Esterhydrolyse führt. Bei Basen ist eine Verseifung (basische Hydrolyse) wahrscheinlich.

Die Hybridpulverlacke (HP) zeigten bei der schwachen Säure und der starken Lauge ein positives Ergebnis. Bei diesen Hybridpulverlacken könnte zuerst eine Esterspaltung und anschließend eine Ringöffnung des Epoxids erfolgen. Dies würde zu einer Deaktivierung führen.

Die Altpulverlackreste (Charge 1 - 3) enthielten mehrere Bestandteile, die sich in den reinen Pulverlacken wiederfinden .Im Vergleich der Altpulverlackreste mit den sortenreinen Pulverlacken zeichnete sich ab, dass bei den Reaktionen mit den entsprechenden Reaktanden keine Unterschiede auftreten.

Zusammenfassend ergaben die Testreihen mit Ammoniumchlorid/Kaliumhydroxid und die Versuche mit Guanidiniumcarbonat bei reinen Pulverlacken und Altpulverlackmischungen gute Resultate.

Das beste Ergebnis der Versuchsreihe für die Metallhaftung konnte mit der hydrophoben Carbonsäure, Stearinsäure, erreicht werden.

Darüber hinaus zeigten die Metallflächen unter Verwendung der Stearinsäure keinerlei Beeinträchtigungen. Im Gegensatz dazu zeigten Metallplatten bei der Verwendung von Ammoniumchlorid/Kaliumchlorid oder Guanidiniumcarbonat nach 1 - 2 Tagen eine starke Rostbildung (siehe Abb. 2). Die untere linke Abb. 2 zeigt die Mischung der Charge 2 (schwarz) der zunächst unausgehärteten Altpulverlackreste, versetzt mit Ammoniumchlorid/Kaliumhydroxid. Die rechte Seite der Metallplatte der Abb. 2 zeigt die Mischung von den zuerst unausgehärteten Altpulverlackresten der Charge 1 (rot), versetzt mit Guanidiniumcarbonat, die anschließend für 10 min bei 200 °C ausgehärtet wurden. Im oberen Bild sichtbar, konnten die Mischungen nach Abkühlung der Platte problemlos abgeschoben werden. Die verwendeten Metallplatten zeigten jedoch nach 1 - 2 Tagen eine starke Rostbildung.

Die Reaktanden Guanidiniumcarbonat und Ammoniumchlorid zeigten gute Ergebnisse bei der Enthaftung zwischen Metalloberfläche und Pulverlacken, da aber Salze Metalloberflächen in Extrudern oder anderen Geräte zur Weiterverarbeitung angreifen und zerstören würden, sind diese für eine wirtschaftliche Wiederverwertung von Pulverlacken ungeeignet.

**Beispiel 2: Vergleich von Zusatzmengen geeigneter Reaktanden**

Zum Vergleich der Auswirkung verschiedener Zusatzmengen von Stearinsäure zu Altpulverlackresten (Charge 1 und 2) zur Metallenthaftung wurden analytische Messungen für Anteile von 2 % oder 3 % Stearinsäure mittels DSC-Kurven und FTIR-Spektren durchgeführt.

Abb. 3 zeigt die Mischung der Charge 1 (rot) der zuerst unausgehärteten Altpulverlackreste, versetzt mit 2 % Stearinsäure. Die rechte Seite der Metallplatte ist mit dem Altpulverlackrest/Stearinsäure-Mischung beschichtet, während die linke Seite nur mit unausgehärteten Altpulverresten der Charge 1 überzogen wurde. Anschließend wurde die Probe 10 min bei 200 °C ausgehärtet. Nach Abkühlung konnte die rechte Seite problemlos abgehoben werden.

Abb. 4 zeigt die Mischung der Charge 2 (schwarz). Auf der rechten Seite ist der unausgehärtete Altpulverlackrest mit 3 % Stearinsäure versehen worden, wohingegen der unausgehärtete Altpulverlackrest auf der linken Seite unbehandelt blieb. Nach der Aushärtung für 10 min bei 200 °C, konnte die abgekühlte Mischung ohne Schwierigkeiten von der rechten Metallseite abgenommen werden. Zur Reproduzierbarkeit wurden jeweils die reinen Pulverlacke (EP, PP, HP) und Altpulverlackreste der Chargen 1 - 3 mit 2 % und 3 % Stearinsäure gemischt und zweimal mit den gleichen Resultaten getestet.

Zudem wurde eine Überprüfung mittels DSC-Kurven durchgeführt.

Der unausgehärtete Altpulverlackrest (Charge 1) mit 2 % Stearinsäure (Abb. 5) versetzt und ist anschließend mittels eines Differentialkalorimeters (DSC, englisch: Differential Scanning Calorimetry) ausgehärtet worden. Die Heizrate ist bei den Messungen auf 20 K/min festgelegt. Der Messbereich ist auf 25 °C - 200 °C beschränkt. Die Abbildung 5 zeigt bei der ersten Aufheizung (1. Kurve von oben) ein Schmelz- und Vernetzungspeak zwischen 65 °C und 70 °C, bei der zweiten Heizgeraden ist der Glasübergangspunkt bei ca. 70 °C erkennbar. Die Abkühlkurven (3. und 4. Kurve) sind unauffällig.

Bei der differentialkalorimetrischen Messung des unausgehärteten Pulverlackrests (Charge 1) mit 3 % Stearinsäure (Abb. 6) zeigt sich bei der ersten Aufheizung ein Schmelz- und Vernetzungspeak zwischen 65 °C und 70 °C, bei der zweiten Heizgeraden ist der Glasübergangspunkt bei ca. 70 °C beobachtbar.

Bei den Abbildungen 5 und 6 sind Schmelzpeaks zu beobachten, die auf ausreichende Aushärtungen hinweisen, wobei der Schmelzpeak bei der Mischung von 2 % Stearinsäure visuell etwas kleiner erscheint als bei der Mischung mit 3 % Stearinsäure. Erklärbar ist dies durch die unterschiedlichen Mengenanteile von Stearinsäure. Die Abkühlkurven sind unauffällig.

Weiterhin wurde eine Überprüfung von Altpulverlackresten (Charge 1) gemischt mit 2% Stearinsäure (Abb. 8) und 3 % Stearinsäure (Abb. 7) nach 10 min Aushärtung bei 200 °C mittels FTIR durchgeführt.

Die Schwingungsbanden in den Abbildungen 7 und 8 liegen bei 3000 $cm^{-1}$ - 2500 $cm^{-1}$ und entsprechen somit

den Wellenzahlen von Amin-, Methyl- und Methylengruppen. Diese Gruppen sind sehr breit gefächert und deuten auf Stearinsäure oder Altpulverlackrestgruppen hin.

Bei 3500 $cm^{-1}$ - 3100 $cm^{-1}$ befinden sich Amin- und Amidgruppen, die auf Härtergruppen von Altpulverlackresten hindeuten. Die Schwingungen bei 1285 $cm^{-1}$ - 970 $cm^{-1}$ entsprechen denen von Alkohol, Phenolen und Carbonsäuren und lassen sich somit als Polyesterpulverlackrest identifizieren. Charakteristisch für Ether sind die Wellenzahlen 1310 $cm^{-1}$ - 820 $cm^{-1}$ und diese gehören zu den Epoxidpulverlackresten.

Die aus den Abb. 7 und 8 hervorgehende unterschiedliche Größe der Peaks, die zwischen 3000 $cm^{-1}$ - 2150 $cm^{-1}$ erkennbar ist, geht aus den verschiedenen Mengenanteilen der Stearinsäure hervor. Der Peak der Mischung mit 2 % Stearinsäure (Abb. 8) erscheint kleiner als der Ausschlag der Mischung mit dem 3%igen Stearinsäureanteil (Abb. 7).

Zur Vervollständigung der Testreihen wurden auch Versuche mit 1 % Stearinsäure bei gleichen Bedingungen durchgeführt. Die Ergebnisse zeigten bei den DSC-Kurven und den FTIR-Spektren keine gravierenden Unterschiede. Die Mischungen der Altpulverlackreste mit 1 % Stearinsäure konnte leicht, aber nicht mehr ganz so problemlos wie für 2 % oder 3 % Stearinsäure entfernt werden. Die Zusätze von 2 % und 3 % Stearinsäure zum Altpulverlackrest zeigen vergleichbare analytische Messergebnisse.

**Beispiel 3** - **Experimentelle Analyse möglicher Reaktion hydrophober Carbonsäure mit Pulverlackabfällen**

Zur Überprüfung möglicher Reaktionsgleichungen zwischen hydrophober Carbonsäure mit Pulverlackabfällen wurden die FTIR-Spektren der ausgehärteten sortenreinen Pulverlacke (EP, PP, HP) mit denen der ausgehärteten sortenreinen Pulverlacke, die mit einem 2%igen Stearinsäurezusatz versetzt wurden, verglichen. Als weitere Vergleichsgröße wurde außerdem eine FTIR-Messung eines ausgehärteten Altpulverlackrests ohne Stearinsäure und eine entsprechende FTIR-Messung mit 2 % Stearinsäure angefertigt (jeweils Charge 1).

Für die reine Stearinsäure (Abb. 9) sind die Banden bei 3000 $cm^{-1}$ - 2500 $cm^{-1}$ charakteristisch. Sie sind den verbrückten OH-Gruppen von Carbonsäuren zuzuordnen.

Die Wellenzahlen 3020 $cm^{-1}$- 2800 $cm^{-1}$ weisen auf Methylen- und Methylgruppen hin, die bei der Stearinsäure aufgrund ihrer Strukturformel vertreten sind. Ein klassischer Peak zeichnet sich bei 1698 $cm^{-1}$ ab und gehört zur Verbindungsklasse der Carbonsäuren.

Beim sortenreinen Epoxidpulverlack (Abb. 10) können Schwingungsbanden bei 3500 $cm^{-1}$ und 3300 $cm^{-1}$ den Wellenzahlen der Aminogruppen zugeschrieben werden. Die Banden bei 3000 $cm^{-1}$ - 2500 $cm^{-1}$ sind verbrückten OH-Gruppen von Carbonsäuren zugeordnet worden. Amine und Amide sind ebenfalls bei der Wellenzahl 1400 $cm^{-1}$ und 850 $cm^{-1}$ sichtbar, sowie Ethergruppen bei 1230 $cm^{-1}$ und 1011 $cm^{-1}$. Das könnte auf Reaktionen der Epoxide mit modifiziertem Dicyandiamid zurückgeführt werden. Dabei entstehen Alkoholgruppen, die bei 3650 $cm^{-1}$ - 3200 $cm^{-1}$ und 700 $cm^{-1}$ ermittelt worden sind, die zu einem stark vernetzten Guanidinderivat führen.

Auffallend beim Spektrum des sortenreinen Epoxidpulverlacks mit 2 % Stearinsäure in (Abb. 11) sind die Banden der Wellenlängen 3020 $cm^{-1}$ - 2800 $cm^{-1}$ der Methyl- und Methylengruppen und die Banden bei 3300 $cm^{-1}$ - 2500 $cm^{-1}$ der verbrückten OH-Gruppen von Carbonsäuren, die höher, intensiver und breiter sind als in (Abb. 10). Sie sind kennzeichnend für die Stearinsäure.

Durch Zugabe von Stearinsäure sind die Bandenpeaks bei 1732 $cm^{-1}$ höher als in Abbildung 10 und neu entstandene Peaks bei 1010 $cm^{-1}$ und 945 $cm^{-1}$ sind ebenfalls auf Carbonsäuregruppen zurückzuführen. Bei den Wellenzahlen 3620 $cm^{-1}$ - 3200 $cm^{-1}$ und 700 $cm^{-1}$ sind Bandenpeaks zu beobachten, die der Verbindungsklasse der Alkohole angehören und auf Reaktionen von Epoxiden mit modifiziertem Dicyandiamid hinweisen könnten. Die entstandenen Reaktionsprodukte von Alkoholen und der nun zur Verfügung stehenden Säuregruppe der Stearinsäure können zu Esterbildung führen, ein dabei neu gebildeter Esterpeak ist bei 1037 $cm^{-1}$ nachweisbar.

Bei 1294 $cm^{-1}$ und 820 $cm^{-1}$ sind Banden von Ethergruppen sichtbar, die bei dem FTIR-Spektrum des ausgehärteten Epoxidpulverlacks mit 2 % Stearinsäure größer sind als bei dem reinen ausgehärteten Epoxidpulverlack ohne Stearinsäure. Eine Ursache könnte sein, dass vorrangig Stearinsäure mit Hydroxylgruppen der Hydroxyamidhärter zu Estern reagiert haben und die Ethergruppen des Epoxids nicht verbraucht wurden.

Im Vergleich der Abbildung 9 der reinen Stearinsäure, und Abbildung 11 dem ausgehärteten Epoxidpulverlack mit 2 % Stearinsäure, ist eine eindeutige Übereinstimmung sichtbar.

Das FTIR-Spektrum in Abbildung 12 zeigt einen sortenreinen ausgehärteten Polyesterpulverlack. Die Wellenzahlen ergaben Verbindungsklassen von Amiden bei nachfolgenden Banden: 3500 $cm^{-1}$ - 3100 $cm^{-1}$ und 1372 $cm^{-1}$. Unverkennbar liegt der Carbonsäurepeak bei 1714 $cm^{-1}$.

Die ermittelten Banden lassen darauf schließen, dass eine Vernetzung von Polyesterharzen mit Hydroxyalkylamidhärtern vorliegt. Das Reaktionsprodukt wäre ein Esteramid. Die Wellenzahlen der Estergruppen liegen bei 1097 $cm^{-1}$ und die eines Amids bei der Wellenzahl 1020 $cm^{-1}$. Dies bestätigt ein Esteramid.

Deutlich zeigt die Abbildung 13 des sortenreinen ausgehärteten Polyesterpulverlacks mit 2 % Stearinsäure die höheren und ausgeprägteren Banden der Wellenzahlen bei 3020 $cm^{-1}$ - 2800 $cm^{-1}$ der Methyl- und Methylengruppen. Die Banden bei 3300 $cm^{-1}$ - 2500 $cm^{-1}$ der verbrückten OH-Gruppen von Carbonsäuren sind ebenfalls intensiver und

breiter im Vergleich zur Abbildung 12. Bei Zugabe von Stearinsäure wäre eine Erhöhung der Reaktionsprodukte zu erwarten gewesen, die in Abbildung 13 der nicht nachgewiesen werden konnte. Zu beobachten sind indes breitere Intensitäten im Bereich der Wellenzahlen 3432 $cm^{-1}$, welche auf Wasserbildung oder -einlagerung hindeuten. Da diesem Bereich auch die verbrückten OH-Gruppen von Carbonsäuren bei 3000 $cm^{-1}$ - 2500 $cm^{-1}$ zugeordnet werden, lässt dieser Befund auf die restlichen Stearinsäuregruppen schließen, die nicht an der Bildung des Esteramids beteiligt waren und dadurch zu einer Intensitätserhöhung geführt haben. Die Spektren der Abbildung 12 und 13 sind bis auf die Wellenzahlbereiche 3000 $cm^{-1}$ - 2500 $cm^{-1}$, der markante Bereich der Stearinsäure, äquivalent.

Bei Hybridsystemen werden Polyesterharze verwendet, die Carboxylgruppen enthalten und über die Addition an Epoxidgruppen eine räumliche Vernetzung bewirken. Carbonsäuren, die Carboxylgruppen enthalten, wurden bei den Wellenzahlen 975 $cm^{-1}$ festgestellt, der signifikanteste Peak lag bei 1716 $cm^{-1}$ (siehe Abb. 14). Epoxidgruppen konnten den Wellenzahlen 1241 $cm^{-1}$ und 872 $cm^{-1}$ zugeordnet werden. Der dabei entstehende Hydroxyester konnte bei den Wellenzahlen 1040 $cm^{-1}$ nachgewiesen werden. Die Abbildung 15 des sortenreinen ausgehärteten Hybridpulverlacks mit 2 % Stearinsäure zeigt gleichfalls höhere und ausgeprägtere Banden der Wellenlängen bei 3020 $cm^{-1}$ - 2800 $cm^{-1}$, der Methyl- und Methylengruppen, und der Banden bei 3300 $cm^{-1}$ - 2500 $cm^{-1}$, der verbrückten OH-Gruppen von Carbonsäuren, im Vergleich Abbildung 14 mit 100 % sortenreinen Hybridpulverlack.

Die Spektren der Abbildung 14 und Abbildung 15 sind bis auf die Wellenzahlbereiche 3500 $cm^{-1}$ - 2500 $cm^{-1}$, der markante Bereich der Stearinsäure, ebenfalls äquivalent.

Rückschlüsse der Abbildung 15 auf den Verbleib der restlichen Stearinsäuregruppen, die nicht an der Esterbildungreaktion beteiligt waren, können einerseits mit dem Wachstum in der Intensität des Peaks bei der Wellenzahl 2960 $cm^{-1}$ von verbrückten OH-Gruppen der Carbonsäuren und dem höheren und breiteren Peak bei 1716 $cm^{-1}$, einer Verbindungsgruppe der Alkylcarbonsäuren, begründet werden.

Wie in Abbildung 16, der aus 100 % ausgehärteten Altpulverlackmischung bestehenden Probe dargestellt, konnten folgende Verbindungsklassen identifiziert und zugeordnet werden. Bei 1261 $cm^{-1}$ und 1242 $cm^{-1}$ konnten Ethergruppen, bei 872 $cm^{-1}$ Epoxide erkannt werden. Die dazugehörigen Härtergruppen der Amide sind bei den Wellenzahlen 3500 $cm^{-1}$ - 3100 $cm^{-1}$ sichtbar. Sie können auf Reaktionen der Epoxide mit modifiziertem Dicyandiamid zurückgeführt werden.

Die Wellenzahlen 1715 $cm^{-1}$ und 973 $cm^{-1}$ deuten auf Carbonsäuren hin. Durch Anwesenheit der Amide und den Nachweis der Estergruppen bei der 1097 $cm^{-1}$ ist eine Vernetzung von Polyesterharzen mit Hydroxyalkylamidhärtern zu einem Esteramid wahrscheinlich.

Die stark angestiegenen vergrößerten Banden der Wellenlängen 3020 $cm^{-1}$ - 2800 $cm^{-1}$ bei Zusatz von 2 % Stearinsäure zur ausgehärteten Altpulverlackmischung in Abbildung 17 und ein neu entstandener Peak bei 1471 $cm^{-1}$ sind den Methyl- und Methylengruppen zuzuordnen. Die Banden bei 3300 $cm^{-1}$ - 2500 $cm^{-1}$ der verbrückten OH-Gruppen von Carbonsäuren sind ebenfalls höher, größer und breiter als in Abbildung 16 und weisen auf die restliche Stearinsäure hin. Durch die Zugabe von Stearinsäure sind die Bandenpeaks bei 1702 $cm^{-1}$ breiter als in Abbildung 16 und neu entstandene Peaks bei 1200 $cm^{-1}$ und 950 $cm^{-1}$ belegen ebenfalls die Ausbildung von Carbonsäuregruppen.

Zusammenfassend kann festgestellt werden, dass Stearinsäure als eine gesättigte Carbonsäure durch seine Carboxylgruppe an den Vernetzungsreaktionen der Pulverlacke teilnimmt, wobei die restlichen nicht umgesetzten Gruppen deutlich im FTIR-Spektrum sichtbar sind. Durch die FTIR-Spektren konnte die Stearinsäure bei den ausgehärteten Pulverlacksystemen (EP, PP, HP) und Altpulverlackresten (Charge 1 - 3) nachgewiesen werden.

**Beispiel 4 - Rheometer-Messungen**

Zur Überprüfung der Eignung der Reaktanden zur Herstellung wiederverwertbarem Altpulverlack erfolgte eine Vergleichsmessung von folgenden Materialien mittels des Rheometer Physica MCR:

a. 2g unausgehärtete Altpulverlackreste (Charge 2)

b. 2g unausgehärtete Altpulverlackreste (Charge 2) inklusive 2 % Stearinsäure mittels des Rheometer Physica MCR.

Der Versuch wurde innerhalb eines definierten Temperaturbereichs von 60 °C bis 200 °C durchgeführt. Die Heizrate betrug 11,2 /min. Die wichtigsten Kennwerte sind in Tabelle 3 aufgeführt:

Tabelle 3: Kennwerte der Rheometer-Messung des unausgehärteten Altpulverlackrests (Charge 2) und des unausgehärteten Altpulverlackrests (Charge 2) inklusive Stearinsäure

| Anzahl der Messpunkte N | Zeit/Mespunkt t/N | Messprofil Amplitude $\gamma$ | Kreisfrequenz $\omega$ | Temperatur T |
|---|---|---|---|---|
| 120 | 5 s | 0,001 | 10 rad/s | 60...200 °C lin. |

Abbildung 18 zeigt die Kurvenverläufe des unausgehärteten Altpulverlackrests (Charge 2) und des unausgehärteten Altpulverlackrests (Charge 2) inklusive 2 % Stearinsäure. Der Speichermodul G' charakterisiert den elastischen Anteil, der Verlustmodul G" den viskosen Anteil der Probe.Bei Abbildung 18 sind am Startpunkt bei beiden Proben G' höher als G". Der elastische ist also größer als der viskose Anteil. Die Viskosität des unausgehärteten Altpulverlackrests (Charge 2) ist höher, das Fließverhalten ist geringer als bei der Probe mit Stearinsäure. Die Stearinsäure schmilzt früher zwischen den Pulverpartikeln auf, die Viskosität ist dadurch niedriger und die Probe fängt schneller an zu fließen.

Bei dem unausgehärteten Altpulverlackrest (Charge 2) lag der Erweichungspunkt (Minimum) bei 640 s, wobei der Wert von G" $3{,}96 \times 10^2$ Pa betrug. Bei dem unausgehärteten Altpulverlackrest inklusive Stearinsäure war der Erweichungspunkt bei 615 s und G" lag bei $4{,}03 \times 10^2$ Pa im Minimum. Bei Betrachtung der Erweichungspunkte liegen beide Werte relativ dicht beieinander. Der Verlauf der größtmöglichen Aufschmelzung, dargestellt und bestätigt durch das Minimum der Kurven in der Abbildung 18, ist bei den Proben vergleichbar. Auffallend ist die Übereinstimmung der Gelpunkte, die durch den Schnittpunkt von Speicher- und Verlustmodul bei dem unausgehärteten Altpulverlackrest (Charge 2) mit einem Messwert von 655 s und bei dem unausgehärteten Altpulverlackrest (Charge 2) inklusive 2 % Stearinsäure mit 660 s markiert sind. Entsprechend identisch ergaben sich folgende Werte bei den Messwerten von G" mit $4{,}1 \times 10^2$ Pa und G' $4{,}13 \times 10^2$ Pa bei dem unausgehärteten Altpulverlackrest (Charge 2) und den Messwerten des unausgehärteten Altpulverlackrests (Charge 2) inklusive 2 % Stearinsäure mit G" $4{,}6 \times 10^2$ Pa und G' bei $4{,}65 \times 10^2$ Pa. Die Vernetzung oder Filmbildung beginnt bei beiden Proben temperatur- und zeitgleich. Es konnte kein Unterschied durch die Zugabe von Stearinsäure festgestellt werden.

Unterschiedliche Messergebnisse lieferten die Aushärtungspunkte: die unausgehärteten Altpulverlackreste (Charge 2) hatten einen Wert von G' bei $4{,}2 \times 10^5$ Pa, die unausgehärteten Altpulverlackreste (Charge 2) inklusive 2 % Stearinsäure hatten im Vergleich dazu einen geringeren Wert von G' $3{,}0 \times 10^5$Pa. Der elastische Anteil von den unausgehärteten Altpulverlackresten (Charge 2) inklusive 2 % Stearinsäure ist kleiner als von dem unausgehärteten Altpulverlackrest (Charge 2). Die vollständige Vernetzungsreaktion bei der Probe mit Stearinsäure dauert zeitlich länger als bei dem unausgehärteten Altpulverlackrest (Charge 2) ohne Stearinsäure.

Die Ergebnisse zeigen, dass die Mischung der unausgehärteten Altpulverlackreste (Charge 2) inklusive 2 % Stearinsäure ein charakteristisches Verhalten eines handelsüblichen Pulverlacks zeigen, welcher sich ohne Probleme gut aufschmelzen und vernetzten ließ.

Als besonderer Vorteil ist die Aufhebung der Metallhaftung in Abbildung 19 zu sehen. Die ausgehärteten Altpulverlackreste (Charge 2) mit Zusatz von Stearinsäure konnten problemlos aus der zur Messung benutzten Metallschale herausgenommen werden. Bei der Probe mit den unausgehärteten Altpulverlackresten (Charge 2) war kein Entfernen des ausgehärteten Materials möglich. Die Altpulverlackreste waren fest mit der Metalloberfläche verbunden.

**Beispiel 5** - **Wiederaufbereiteter Pulverlackabfall als Füllstoff für Polyethylen**

Die folgenden Experimente zeigen Mischversuche, um die modifizierten Altpulverlackreste zunächst im Extruder und anschließend in der Spritzgussanlage verarbeiten zu können.

*Materialien*

Es kamen folgende Materialien zur Anwendung:

a) Polyethylen LLDPE (Low Linear Density Polyethylene) Dowlex SC 2108G

b) unausgehärteter Altpulverlackrest (Charge 3) inklusive Stearinsäure

c) ausgehärteter Altpulverlackrest (Charge 3)

d) Stearinsäure

*Polyethylen*

Das Material LLDPE Dowlex SC 2108G von der Firma DOW wurde aufgrund der technischen Parameter ausgewählt. Ein entscheidender Punkt war die niedrige Schmelztemperatur und die guten Oberflächengleiteigenschaften des Materials bei der Verarbeitung.

*unausgehärteter Altpulverlackrest (Charge 3)*

Jeweils 5 kg trockene unausgehärtete Pulverlackreste (Charge 3) wurden in Plastikbehältern abgewogen, mit

2 % Stearinsäure versetzt und mit Holzspateln durchgemischt. Diese Mischung wurde anschließend als Füllstoff verwendet.

*ausgehärteter Altoulverlackrest (Charge 3)*

Als Vergleichsprobe diente ausgehärteter Pulverlack als Füllstoff in der Mischung. Der Pulverlack wurde zunächst auf großen Blechen, welche mit PTFE Folie ausgekleidet waren, im Ofen Heraeus (Firma Heraeus Holding GmbH) bei 200 °C für 10 min ausgehärtet. Nach der Abkühlung wurden die massiven Pulverlackplatten grob mit einem Hammer vorgebrochen und in einer Zerkleinerungsanlage der Firma Herbold Typ SML 180/100 der Zerkleinerungstechnik GmbH vorgemahlen (Korngröße ca. 1 mm - 2 mm). Anschließend wurden die ca. 150 kg vorgemahlenen Pulverlackreste bei der Firma Ganzlin Beschichtungspulver GmbH auf eine finale Korngröße von unter 150 μm feinvermahlen.

*Stearinsäure*

Als Reaktand zur chemischen Deaktivierung der Altpulverlackreste wurde Stearinsäure als gesättigte Carbonsäure ausgewählt. Die Stearinsäure besaß einen 90%igen Reinheitsgrad und wurde von der Firma abcr GmbH bezogen.

**Beispiel 6 - Herstellung geeigneter Extrudate**

Es wurde ein Extruder der Firma Göttfert zur Materialextrusion der Proben eingesetzt. Zur Überprüfung der Reduzierbarkeit wurden die Versuche im Collin-Extruder, Firma Dr. Collin GmbH, wiederholt. Der Collin-Extruder hat einen Durchmesser von 20 cm und eine Schneckenlänge von 25 D. Signifikante Unterschiede konnten nicht festgestellt werden. Die verwendeten Temperaturen und Geschwindigkeitseinstellungen sind Tabelle 4 dargestellt:

Tabelle 4: Parameter der eingesetzten Extruder

| Extruder | Probe/Mischungen | Geschwindigkeit [m/s] | Zone 1 [°C] | Zone 2 [°C] | Zone 3 [°C] | Zone 4 [°C] |
|---|---|---|---|---|---|---|
| | Probe A: 50 % LLDPE / 50 % ausgehärtete Altpulverlackreste (Charge 3) | 50 | 200 | 200 | / | / |
| | Probe B: 50 % LLDPE / 50 % Altpulverlackreste (Charge 3) inklusive 2 % Stearinsäure | | | | | |
| | Probe A: 50 % LLDPE / 50 % ausgehärtete Altpulverlackreste (Charge 3) | 60 | 230 | 230 | 230 | 232 |
| | Probe B: 50 % LLDPE / 50 % unausgehärtete Altpulverlackreste (Charge 3) inklusive 2 % Stearinsäure. | | | | | |

*Probe A: 50 % LLDPE gemischt mit 50 % ausgehärteten Altpulverlackresten (Charge 3)*

Die Komponenten wurden von Hand in einen Behälter eingewogen. Aufgrund der Korngrößenfeinheit des ausgehärteten Pulverlacks kam es zu einer deutlichen Staubbelastung. Bei der Vermischung mit einem Holzstab zeigten sich nach ca. 5 min Rühren die ersten Anzeichen von Segregation. Die Segregation resultierte aus der Verschiedenheit der beiden Mischungskomponenten, wie etwa Dichte, Oberflächenbeschaffenheit oder - hauptursächlich - unterschiedliche Partikelgröße. Die Compoundierung erwies sich bei dieser Probe im Extruder Göttfert als schwierig. Es kam immer wieder zur Entmischung beider Komponenten. Die Staubbelastung konnte nur durch Zugabe kleiner Teilmengen der Mischung reduziert werden. Es wurde gewartet bis der Trichter fast leer war und anschließend neues Material eingefüllt. Die extrudierten Stränge wurden anschließend über einem Wasserbad abgezogen und mit einem Granulator (Firma Scheer Reduction Engineering GmbH - Modell: SGS 25-E4) zerkleinert.

*Probe B: 50 % LLDPE gemischt mit 50 % Altpulverlackresten (Charge 3) inklusive 2 % Stearinsäure*

Bei der Vermischung zeigte sich nach ca. 5 min Rührzeit eine weitaus geringere Staubbelastung. Die Pulverpartikel hafteten an den LLDPE-Pellets, wodurch es möglich war eine homogenere Mischung herzustellen. Die Oberfläche der Pellets wirkten glatt und glänzend. Die Verarbeitung dieser Probe verlief ohne Komplikationen. Das Gemisch wirkte feucht und schmierig, die Staubbelastung dementsprechend gering. Das Material wurde ohne Probleme in die Schnecke eingezogen. Im Anschluss wurden die extrudierten Stränge über einem Wasserbad abgezogen und mit einem Granulator (Firma Scheer Reduction Engineering GmbH - Modell: SGS 25-E4) zerkleinert.

Die extrudierten Stränge der Probe A, die zu 50 % aus den ausgehärten Pulverlackresten (Charge 3) bestand, zeigten eine hohe Oberflächenrauigkeit. Die extrudierten Stränge der Probe B mit dem Stearinsäurezusatz besaßen dagegen eine sehr glatte Oberflächenstruktur.

**Beispiel 7 - MFI-Messung**

Zur Überprüfung der Schmelze-Massefließrate wurde eine Bestimmung der Schmelze-Massefließrate (MFR) und der Schmelze-Volumenfließrate (MVR) von Thermoplasten ISO 1133-2:2011 durchgeführt. In der ISO 1133-2:2011 Deutsche Fassung finden sich die Verfahren für Materialien, die empfindlich gegen eine zeit- bzw. temperaturabhängige Vorgeschichte und/oder Feuchte sind.

Die Schmelze-Volumenfließrate (MVR) und die Schmelze-Massefließrate (MFR) werden durch Extrudieren eines geschmolzenen Materials aus dem Zylinder eines Plastometers durch ein Extrusionswerkzeug mit festgelegter Länge und festgelegtem Durchmesser unter gegebenen Bedingungen von Temperatur und aufgebrachter Last bestimmt. Die MVR kann in die MFR umgewandelt werden oder umgekehrt, wenn die Dichte des Materials bei der Prüftemperatur bekannt ist. Als Schmelzindex wird der MFR-Wert definiert, der die Materialmenge in Gramm angibt, die bei einem bestimmten Gewicht und einer bestimmten Temperatur in zehn Minuten durch eine Kapillare mit definierten Abmessungen fließt:

$$\text{mit } \boldsymbol{MFR} = \frac{\boldsymbol{m} \cdot \mathbf{600}}{\boldsymbol{t}}$$

mit m: Mittelwert der Masse der Abschnitte, t: Zeitintervall für das Abschneide.

Es wurden folgende Materialien verwendet:

| | |
|---|---|
| Probe A: | 50 % LLDPE/50 % ausgehärtete Altpulverlackreste (Charge 3) |
| Probe B: | 50 % LLDPE/50 % unausgehärtete Altpulverlackreste (Charge 3) inklusive 2 % Stearinsäure |
| Probe C: | reines LLDPE (Low Linear Density Polyethylene) Dowlex SC 2108G |

Die MFR Werte die Proben A, B und C im Vergleich werden in Abbildung 20 gezeigt.

Der Schmelzindex von Probe C ergab einen Wert von 3 g/10 min, d.h. das LLDPE besitzt sehr gute Fließeigenschaften. Laut dem Datenblatt besitzt das LLDPE einen Schmelzindex von 2,6 g/10 min. Die Abweichung beruhen auf Messungenauigkeiten. Bei der Probe A mit 50 % LLDPE und 50 % ausgehärteten Altpulverlackresten (Charge 3) wurde ein Wert von 2,18 g/10 min ermittelt. Die Ursache der schlechteren Fließfähigkeit gegenüber dem reinen LLDPE sind die Mischungsanteile der Probe. Die ausgehärteten Duroplaste sind spröde und engmaschig verknüpft und besitzt keine inneren Gleitmöglichkeiten. Das Fließverhalten wird nur vom LLDPE bestimmt mit dem duroplastischen Anteil als Füllstoff.

Bei der Probe B mit 50 % LLDPE und 50 % unausgehärteten Altpulverlackresten (Charge 3) inklusive 2 % Stearinsäure wurde ein Wert von 3,34 g/10 min ermittelt. Mit steigendem MFI-Wert verbessert sich die Fließfähigkeit. Die besseren Fließeigenschaften sind Resultat der Stearinsäure. Die Stearinsäure wirkt in diesem Fall innerhalb der Matrix wie ein inneres Gleitmittel. Durch diese innere Schmierung der Polymermatrix wird das Abgleiten der Polymerketten erleichtert und die innere Scherung herabgesetzt. Bei gefüllten Thermoplasten dient die Stearinsäure nicht nur zur Fließverbesserung, sondern wirkt auch als Verträglichkeitsvermittler. Sie sorgt für eine bessere Anbindung von Füllstoffen oder Pigmenten an die Polymermatrix. Schlussfolgernd ergibt sich eine herabgesetzte Viskosität und somit bessere Fließeigenschaften.

**Beispiel 8** - **Herstellung der Probekörper durch Spritzgießen**

Die Herstellung der Probekörper nach Typ 1A der genannten Norm (DIN EN ISO 527) wurde mit einer Spritzgießmaschine der Firma Boy vom Typ 30A durchgeführt.

Zunächst wurden die Proben in Form von getrocknetem Granulat in den Trichter der Spritzeinheit der Spritzgussmaschine gebracht. Durch Reibung und gleichzeitiger Erwärmung wurde die Mischung aufgeschmolzen (plastifiziert). Die Temperatur- und Druckeinstellungen wurden bei den Proben variiert und den Parametern entsprechend angepasst:

Tabelle 5: Temeratur-und Druckparameter der Spritzgussmaschine für die Proben

| Probe/Mischungen | Ein-spritz-druck [bar] | Nach-druck [bar] | Kühlzeit [s] | Zone 1 [°C] | Zone 2 [°C] | Zone 3 [°C] | Zone 4 [°C] |
|---|---|---|---|---|---|---|---|
| Probe A: 50 % LLDPE mit 50 % ausgehärteten Pulver-lacresten (Charge 3) | 80 | 80 fur 15 s | 45 | 200 | 210 | 220 | 220 |
| Probe B: 50 % LLDPE mit 50 % Altpulverlacreste (Charge 3 inklusive 2 % Stearinsäure | 90 | 80 für 15 s | 45 | 200 | 210 | 220 | 220 |
| Probe C: LLDPE | 80 | 80 für 25 s | 45 | 220 | 230 | 240 | 240 |

Der Spritzvorgang verläuft wie folgt. Die Schmelze sammelt sich vor der Spitze der zurückweichenden Schnecke, bis die Menge zur Füllung des Werkzeugs ausreicht. Die Schmelze wird unter hohem Einspritzdruck über eine Düse und den Angusskanal in den formgebenden Hohlraum des Spritzgießwerkzeugs gedrückt. Anschließend beginnt die Schmelze im Hohlraum abzukühlen und zu schrumpfen (Schwund). Da dies zu Einfallstellen führen könnte, wirkt ein reduzierter Druck als Nachdruck noch so lange auf die Schmelze, bis der Anguss erstarrt und der Plastifiziervorgang für den nächsten Zyklus beginnt. In der Zwischenzeit kühlt der Zugprüfstab ab, bis er schließlich beim Öffnen des Werkzeugs durch Stifte ausgestoßen wird. Dass durch die Abkühlung im Angusskanal des Werkzeugs verbliebene erstarrte Material, der sogenannte Anguss, verbleibt beim Öffnen des Werkzeugs zunächst am Zugprüfstab und muss nachträglich abgetrennt werden.

Es wurden jeweils 100 Probekörper pro Probentyp hergestellt, wobei folgende Ergebnisse festgestellt

*Probe C: LLDPE*

Bei der Verarbeitung von LLDPE traten keine Probleme auf. Das Material konnte, den Produktangaben des Herstellers entsprechend, gut verarbeitet werden.

*Probe A: 50 % LLDPE gemischt mit 50 % ausgehärteten Altpulverlackresten (Charge 3)*

Bei den ersten Zugprüfteilen nach dem Spritzgussvorgang der Probe A waren Einfallstellen zu beobachten und der Zugprüfstab war nicht vollständig mit Material ausgefüllt. Es erfolgte eine Erhöhung der Dosierung. Die Einfallstellen, die durch Vertiefungen (Dellen) in der Oberfläche, insbesondere am Anguss erkennbar waren, konnten durch Erhöhung des Nachdrucks beseitigt werden. Die Oberfläche der Zugprüfteile war jedoch rau und ungleichmäßig.

*Probe B: 50 % LLDPE mit 50 % unausgehärteten Altpulverlackresten (Charge 3) inklusive 2 % Stearinsäure*

Bei Probe B musste die Dosierung und der Nachdruck ebenfalls erhöht werden, die Dosiermenge war höher als bei Probe A. Es konnten leichte Farbschlieren beobachtetet werden, die vermutlich auf ungenügende Mischungsverhältnisse, bedingt durch die unterschiedlichen Größenverhältnisse der Teilchen zwischen Kunststoff und Füllstoff, zurückzuführen sind. Die Einspritzgeschwindigkeit wurde erhöht und angepasst. Die Zugprüfstäbe besaßen eine glatte, gleichmäßige Oberfläche.

**Beispiel 9 - Mechanische und thermische Eigenschaften der Probekörper: Zugversuch**

Die Probenmischungen aus Beispiel 7 wurden mittels Extrusion compoundiert und anschließend zu Prüfkörpern spritzgegossen. Nach der Herstellung der Zugprüfstäbe wurden diese analytisch und mechanisch charakterisiert.

Die Ermittlung von Zugfestigkeit und E-Modul wurden gemäß DIN EN ISO 527 bei Normklima auf einer Universalprüfmaschine der Firma "Zwick Modell 63336/101" durchgeführt.

Abbildung 21 zeigt die Spannungs-Dehnungskurve. Die Spannungs-Dehnungskurve wird eingeteilt in folgende Abschnitte:

**Abschnitt 1:** Zu Beginn der Beanspruchung verhielt sich LLDPE linear-elastisch, d.h. die Dehnung gegenüber der Ausgangslänge stellt sich bei Entlastung wieder vollständig elastisch in den Ausgangszustand zurück (Abb. 21). Der zugehörige Werkstoffkennwert, der das linearelastische Verformungsverhalten beschreibt, ist der Elastizitätsmodul E.

$$E = {}^{\Delta\sigma}/_{\Delta\varepsilon}$$

Der Elastizitätsmodul E ergibt sich aus der Steigung der Spannungs-Dehnungskurve für die beiden festgelegten Dehnungen $\varepsilon_1$ = 0,05 % und $\varepsilon_2$ = 0,25 % und den dazugehörigen Zugspannungen $\sigma_1$ und $\sigma_2$ gemäß:

$$\mathbf{E} = \frac{\boldsymbol{\sigma_2 - \sigma_1}}{\boldsymbol{\varepsilon_2 - \varepsilon_1}}$$

**Abschnitt 2** (direkt nach der Hooke'schen Gerade) - Hier beginnt bei LLDPE der linear-viskoelastische Bereich, d.h. bei Entlastung bleibt eine Verformung des Werkstücks zurück und diese Verformung ist linear zur angelegten Spannung o. Deshalb wird dieser Bereich auch linear-viskoelastischer Bereich genannt.

**Abschnitt 3** (der erste Spannungsabfall) - Wie in Abschnitt 2 bleibt bei Entlastung eine Verformung der LLDPE-Probe zurück, nur ist diese Verformung viel größer als bei linearem Verhalten und die Kurve wird flacher. Dieser Bereich wird auch als Einschnürbereich bezeichnet und der Querschnitt des Prüfkörpers wird kleiner. Dass die Kurve im Spannungs-Dehnungs-Diagramm $\sigma$ ($\varepsilon$) absinkt, hat mechanische Ursachen. Die anliegende Kraft F und somit die Spannung $\sigma$ wird durch einen Dehnmessstreifen an der Traverse gemessen. Die Molekülketten ordnen sich im Kunststoff um.

**Abschnitt 4** (100% - 400 % Dehnung) - Hier nahm der Querschnitt A des Prüfkörpers weiterhin ab. Die Spannung nahm erneut zu, da sich die Molekülketten entlang der Belastungsrichtung ausrichteten und somit mehr Kraft aufnehmen konnten. Dieser Bereich wird als stationäres plastisches Fließen bezeichnet.

**Abschnitt 5** (400 % - 695 % Dehnung) - Dieser Bereich wird als Verfestigungsbereich bezeichnet. In diesem Abschnitt ist die Molekülbewegung blockiert, sodass die Spannung weiter ansteigt und das Material letztendlich versagt, da aufgrund der Verfestigung Fehlstellen (Poren und Risse) entstehen, die sich weiter in die Fläche ausbreiten. Es erfolgte der ultimative Bruch erst nach der Streckung der Probe durch starkes plastisches Fließen bei ca. 700 % Dehnung. Somit konnten die Kennwerte der Streckspannung und Streckdehnung von der Bruchspannung und Bruchdehnung unterschieden werden. Für reines LLDPE liegt die Zugfestigkeit $\sigma_m$ bei 23,7 $\pm$ 1,17 MPa und der E-Modul bei 393 $\pm$ 86,8 MPa.

*Probe A: 50 % LLDPE gemischt mit 50 % ausgehärteten Altpulverlackresten (Charge 3)*

Abbildung 22 zeigt den Spannungs-Dehnungsverlauf der Probe A. Die Mischung bestand zu 50 % aus ausgehärteten Duroplasten und zu 50 % aus einem Thermoplast. Der duroplastische Teil wurde als Füllstoff deklariert. Im Gültigkeitsbereich des Hooke'schen Gesetzes bei Probe A sind Spannung $\sigma$ und Dehnung $\varepsilon$ zueinander proportional (Beginn der Belastung). Bei höheren Spannungen ist das jedoch nicht mehr der Fall. Im Spannungs-Dehnungs-Diagramm ist die mit steigender Spannung zunehmende Abweichung vom linearen Verhalten gut zu erkennen. Mit zunehmender Spannung erhöht sich der dauerhaft zurückbleibende plastische Anteil an der Verformung. Die Zugspannung wurde bis zur Fließgrenze erhöht, der Werkstoff begann sich stärker plastisch zu verformen. Er fing an - ähnlich wie eine zähe Flüssigkeit - zu fließen. Dieses Fließen unter Spannung wird als kalter Fluss bezeichnet. Sofern möglich, wird die Fließgrenze als obere Streckgrenze angegeben.

Für Probe A betrug die Zugfestigkeit $\sigma_m$ 8,72 $\pm$ 0,12 MPa und der E-Modul 965 $\pm$ 72,5 MPa. Die technische Spannung nahm nach dem Erreichen der Zugfestigkeit kontinuierlich ab, da die Molekülketten des LLDPE durch die dazwischenliegenden Pulverlackpartikel in ihrer Verbindung zueinander gestört waren.

*Probe B: 50 % LLDPE mit 50 % Altpulverlackresten (Charge 2) inklusive 2 % Stearinsäure*

Abbildung 23 zeigt den Spannungs-Dehnungsverlauf der Probe B. Die Probe B bestand aus 50 % LLDPE, 50% unausgehärteten Altpulverlackresten (Charge 2) inklusive 2 % Stearinsäure. Der Kurvenverlauf verhielt sich am Anfang ähnlich wie bei Probe A und zeigte anfangs ein linearelastisches Verhalten, das dann kontinuierlich abfiel. Für Probe B betrug die Zugfestigkeit $\sigma_m$ 10,7 $\pm$ 1,33 MPa und der E-Modul 1010 $\pm$ 166 MPa.

**Beispiel 10 - Mechanische und thermische Eigenschaften der Probekörper: Schlagzähigkeitsversuch**

Anschließend erfolgte nach (ISO 179-1:2010) eine "Nicht instrumentierte Schlagzähigkeitsprüfung". Die Ergebnisse sind in Abbildung 24 dargestellt.

Folgende Materialien wurden verwendet:

| | |
|---|---|
| Probe A: | 50 % LLDPE gemischt mit 50 % ausgehärteten Altpulverlackresten (Charge 3) |
| Probe B: | 50 % LLDPE mit 50 % unausgehärteten Altpulverlackresten (Charge 3) inklusive 2 % Stearinsäure |
| Probe C: | reines LLDPE |

Im Prüfgerät nach DIN EN ISO 527-2 Schlagpendel von Zwick wurden die genormten Prüfkörper geprüft. Als Ergebnis ergibt sich ein Zähigkeitskennwert. Es wird die auf den geringsten Querschnitt des Probekörpers bezogene Schlagarbeit (kJ/m2) bis zum Bruch ermittelt.

Bei der Probe C aus reinem LLDPE konnte ein Wert von 25 $\pm$ 0,144 kJ/m$^2$ festgestellt werden, d.h. die mechanische Belastbarkeit ist hoch. Nicht alle Proben beim LLDPE sind gebrochen. Bei Probe A ergab sich ein Wert von 9,9 $\pm$ 0,615 kJ/m$^2$ und bei Probe B konnte ein Wert von 8,8 $\pm$ 0,717 kJ/m$^2$ ermittelt werden.

Die Schlagzähigkeitswerte der Proben A und B sind über 50 % geringer als die des reinen LLDPE. Auffallend ist, dass die Kennwerte von Probe A und Probe B relativ dicht beieinanderliegen, wobei Probe B eine geringere Belastbarkeit als Probe A aufweist.

Wichtig ist also neben der Ermittlung des Kennwerts auch immer die Betrachtung der Bruchfläche. Denn nur durch die Auswertung beider Informationen lässt sich auf das Werkstoffverhalten schließen. Die Kenntnis des tatsächlichen Bruchverhaltens der eingesetzten Kunststoffe ist für eine korrekte Auslegung der Bauteile unverzichtbar. Es werden zwei Überbelastungsbrucharten unterschieden: Duktilbruch und Sprödbruch.

Tritt keine Weißverfärbung auf einer ebenen Bruchfläche auf, findet ein Sprödbruch ohne nennenswerte plastische Deformation statt. Brüche mit einem hohen Anteil an plastischer Deformation, also duktile Brüche, können über eine ausgeprägte Weißverfärbung auf der Bruchfläche erkannt werden.Die visuelle Bruchflächenauswertung der Proben A und B lässt auf eine Mischform aus Duktil- und Sprödbruch schließen.

Die mikroskopische Gefügeaufnahme der Probe A in Abbildung 25 zeigt eine Separation zwischen den Pulverlackpartikeln (schwarze kantige Teilchen) und dem LLDPE (faserige Matrix). Beide Komponenten liegen ohne einen erkenntlichen Materialverbund vor.

Die Probe B in Abbildung 26 zeigt ein homogeneres Gefüge als Probe A. Es ist durch eine gleichmäßige faserige Struktur gekennzeichnet. Die einzelnen Komponenten lassen sich nicht mehr voneinander unterscheiden. Als Fehlerquelle kann angeführt werden, dass Schlagzähigkeiten sehr stark auf gewollte und ungewollte Modifikationen der Proben oder auch auf Einflüsse reagieren, wie Verarbeitungsparameter bei der Herstellung der Proben, Kerbgeometrie oder Prüftemperatur.

**Beispiel 11 - Rasterelektronenmikroskopische Untersuchungen der Probekörper**

Für die REM-Untersuchungen wurden durch Spritzguss selbst hergestellte Zugprüfstäbe nach DIN EN ISO 527 folgender Zusammensetzung als Proben verwendet:

Probe A: 50 % LLDPE mit 50 % ausgehärteten Altpulverlackresten (Charge 3)

Probe B: 50 % LLDPE mit 50 % unausgehärteten Altpulverlackresten (Charge 3) inklusive 2 % Stearinsäure

Probe C: Reines LLDPE Dowlex SC 2108G

Probe D: unausgehärtete Altpulverlackreste (Charge 3) inklusive 2 % Stearinsäure

Die Herstellung und Durchführung der Proben erfolgte nach materialographischer Querschliffpräparation. Die

Proben werden hierbei einzeln oder zu mehreren in eine Einbettform gestellt und mit einem Kalteinbettmittel aufgegossen. Anschließend setzt nach einigen Minuten der Aushärte-prozess unter Wärmeentwicklung ein. Nach der Abkühlung konnten die Proben weiterverarbeitet werden. Feine Unebenheiten wurden zunächst mithilfe einer Diamantsuspension mit einem Durchmesser von 6 μm - 15 μm abgetragen. Im Anschluss erfolgte eine Feinpolitur mit einem Korndurchmesser von 3 μm - 1 μm. Die Proben wurden immer wieder um 90° gedreht, um Polierfähnchen zu vermeiden. Die Schliffe wurden nach der Politur unter fließendem Wasser gründlich gereinigt, mit einem Wattebausch abgerieben und mit einem Fön getrocknet.

Zunächst wurde eine REM-Aufnahme von reinem LLDPE betrachtet.

Abbildung 27 zeigt eine REM Aufnahme des Querschnittes eines durch Spritzguss selbst hergestellten Zugprüfstabes nach DIN EN ISO 527 bei Normklima von LLDPE.

Die Oberfläche von LLDPE stellt ‚schuppenartige' Bruchflächen dar, die von rechts nach links verlaufen. Besonders gut sichtbar ist eine Bruchfläche rechts oben im Bild.

Anschließend wurden REM-Aufnahmen von Probe A 50 % LLDPE mit 50 % ausgehärteten Altpulverlackresten (Charge 3) und Probe B 50 % LLDPE mit 50 % unausgehärteten Altpulverlackresten (Charge 3) inklusive 2 % Stearinsäure betrachtet.

Der durch Spritzguss selbst hergestellte Zugprüfstab nach DIN EN ISO 527 (siehe Abbildung 28a) zeigt im Probenquerschnitt deutlich die Separation zwischen LLDPE und dem Füllstoff aus ausgehärteten Altpulverlackresten (Charge 3).

LLDPE liegt teilweise faserartig in allen Richtungen angeordnet oder flächenförmig in Teilbereichen in der Matrix vor. Dazwischen eingelagert befinden sich die ausgehärteten Pulverpartikel. Es ist keine Anbindung zwischen den beiden Materialien erkennbar. Sichtbar sind innerhalb der Matrix Hohlräume, die auf Lufteinschlüsse oder Bruchflächen zurückzuführen sein könnten. Die Aufnahme in Abbildung 26 weist oberflächlich eine geschlossene einheitliche Fläche auf. Es ist keine direkte Separation zwischen der Pulverpartikel und LLDPE erkennbar. Die Pulverpartikel liegen eingebettet in der Matrix und werden von Stearinsäure umhüllt. Es sind vereinzelt Hohlräume und Vertiefungen sichtbar, die auf Lufteinschlüsse, Bruchflächen oder - stellen rückführbar sein könnten.

Da die Matrix in Abbildung 28b von Probe B ein Gefüge gleichmäßigerer Verteilung und Anbindung innerhalb der Partikel als Probe A in Abbildung 28a aufweist, wäre zu erwarten, dass die Hafteigenschaften zwischen den einzelnen Mischungskomponenten von Probe B mit 50 % LLDPE und 50 % unausgehärteten Altpulverlackresten (Charge 3) inklusive 2 % Stearinsäure besser ausgeprägt sind.

Nachträglich erfolgten REM-Aufnahmen von Probe B aus unausgehärteten Altpulverlackresten (Charge 3) inklusive 2 % Stearinsäure (Abbildung 29).

In den Abbildungen 29a und 29b wurden Altpulverlackreste (Charge 3) mit 2 % Stearinsäure gemischt und auf einer Metallplatte im Ofen bei 200 °C für 5 Min ausgehärtet. Die ausgehärtete Beschichtung ließ sich leicht von der Metallplatte entfernen. Die Partikel (weiße ummantelte Teilchen) sind umhüllt von der Stearinsäure. Die Oberfläche weist keine Vertiefungen oder massive Hohlräume auf. Die Stearinsäure füllt durch ihre wachsartige Struktur und ihr Fließverhalten beim Aushärten die Oberflächenlücken aus. Die Mischung ist vollständig mit einer Schicht überzogen.

In Abbildungen 29a und 29b, welche unausgehärtete Altpulverlackreste (Charge 3) mit 2 % Stearinsäure zeigen, ist deutlich erkennbar, dass sich durch die Stearinsäure eine einheitliche Oberflächenmatrix gebildet hat und somit bezüglich einer gleichmäßigen Beschichtung das beste Ergebnis darstellt. Da das beste Ergebnis der Versuchsreihe mit Stearinsäure erreicht werden konnte, unterstützen die REM-Aufnahmen in Abbildung 29a und 29b den Befund der Stearinsäure als ein 'Schmiermittel'.

**Beispiel 12** - **FTIR-Spektroskopie der Probekörper**

Für die FTIR-Untersuchungen wurden durch Spritzguss selbst hergestellte Zugprüfstäbe nach DIN EN ISO 527 mit folgender Zusammensetzung als Proben verwendet:

| | |
|---|---|
| Probe A: | 50 % LLDPE mit 50 % ausgehärteten Altpulverlackresten (Charge 3) (Abb. 31) |
| Probe B: | 50 % LLDPE mit 50 % unausgehärteten Altpulverlackresten (Charge 3) inklusive 2 % Stearinsäure (Abb. 32) |
| Probe C: | Reines LLDPE Dowlex SC 2108G (Abb. 30) |

Die durchgeführten FTIR-Messungen an reinem LLDPE, 50 % LLDPE mit 50 % ausgehärteten Altpulverlackresten (Charge 3) und 50 % LLDPE mit 50 % unausgehärteten Altpulverlackresten (Charge 3) inklusive 2 % Stearinsäure sind in den Abbildungen 30-32 dargestellt.

Zunächst erfolgt die Auswertung des FTIR-Spektrum für reines LLDPE. Es konnten folgende Absorptionsbanden zugeordnet werden:

Bei der Wellenzahl 2914 $cm^{-1}$ konnten gesättigte Kohlenwasserstoffreste ($-CH_3$ und $Ch_2$-Valenzschwingungen) identifiziert werden. Die Schwingungsbanden zwischen 718 $cm^{-1}$ - 729 $cm^{-1}$ und bei 1462 $cm^{-1}$ - 1471 $cm^{-1}$ entsprechen den Wellenzahlen von Methylgruppen und Methylengruppen. Die Abbildung 30 hat Absorptionsbanden ergeben, die mit den Literaturwerten übereinstimmen.

Zunächst erfolgt die Auswertung des FTIR-Spektrum für reines LLDPE. Es konnten folgende Absorptionsbanden zugeordnet werden:
Bei der Wellenzahl 2914 $cm^{-1}$ konnten gesättigte Kohlenwasserstoffreste ($-CH_3$ und $Ch_2$-Valenzschwingungen) identifiziert werden. Die Schwingungsbanden zwischen 718 $cm^{-1}$ - 729 $cm^{-1}$ und bei 1462 $cm^{-1}$ - 1471 $cm^{-1}$ entsprechen den Wellenzahlen von Methylgruppen und Methylengruppen. Die Abbildung 30 hat Absorptionsbanden ergeben, die mit den Literaturwerten übereinstimmen.

Bei der FTIR-Aufnahme von Probe A Abbildung 31 konnten bei der Wellenzahl 2914 $cm^{-1}$ gesättigte Kohlenwasserstoffreste ($-CH_3$ und $Ch_2$-Valenzschwingungen) identifiziert werden. Die verzeichneten Schwingungsbanden bei 718 $cm^{-1}$ - 728 $cm^{-1}$ und 1462 $cm^{-1}$ - 1471 $cm^{-1}$ entsprechen ebenfalls den Wellenzahlen von Methylgruppen und Methylengruppen und deuten nachweislich auf LLDPE.

Zusätzlich konnten folgende Verbindungsklassen der ausgehärteten Altpulverlackreste (Charge 3) identifiziert und zugeordnet werden. Bei 1264 $cm^{-1}$ konnten Ethergruppen, bei 873 $cm^{-1}$ Epoxide erkannt werden. Die dazugehörigen Härtergruppen der Amide sind bei der Wellenzahlen 1369 $cm^{-1}$ sichtbar. Sie können auf Reaktionen der Epoxide mit modifiziertem Dicyandiamid zurückgeführt werden.

Die Wellenzahlen 1712 $cm^{-1}$ deuten auf Carbonsäuren hin. Durch Anwesenheit der Amide und den Nachweis der Estergruppen bei 1100 $cm^{-1}$ ist eine Vernetzung von Polyesterharzen mit Hydroxyalkylamidhärtern zu einem Esteramid wahrscheinlich.

Die Abbildung 32 von Probe B zeigt auch die entsprechenden Methyl- und Methylengruppen von LLDPE und die entstandenen Reaktionsprodukte zwischen Harz und Härter wie in Abbildung 31. Aufgrund der Stearinsäure, die sich an den Vernetzungsreaktionen beteiligt, kommt es bei Probe B zu sichtbaren Veränderungen der Intensitäten Abbildung 32. Nachweislich sind die Intensitäten der Peaks bei den Wellenzahlen 1261 $cm^{-1}$ und 1241 $cm^{-1}$, die zu den Esterverbindungen zählen, breiter und stärker ausgeprägt. Ein Befund, der auf vermehrte oder erhöhte Vernetzung von Polyesterharzen mit Hydroxyalkylamidhärtern zu Esteramiden hinweist. Die Intensität des Peaks bei der Wellenlänge 1712 $cm^{-1}$ ist deutlich größer. Auch ein neu entstandener Peak bei 980 $cm^{-1}$ konnte als Carbonsäure identifiziert werden und deutet auf die restliche Stearinsäure hin, die nicht an den Reaktionen mit den Altpulverlackresten (Charge 3) beteiligt waren.

LLDPE Dowlex SC 2108G und Stearinsäure sind im FTIR-Spektrum erkennbar und konnten bei den ausgehärteten Altpulverlackresten (Charge 3) nachgewiesen werden.

**Beispiel 13** - **DSC-Messungen der Probekörper**

Für die mit der Mettler Toledo DSC 822 durchgeführten Untersuchungen wurden durch Spritzguss selbst hergestellte Zugprüfstäbe nach DIN EN ISO 527 folgender Zusammensetzung als Proben verwendet:

| | |
|---|---|
| Probe A: | 50 % LLDPE mit 50 % ausgehärteten Altpulverlackresten (Charge 3) (Abb. 34) |
| Probe B: | 50 % LLDPE mit 50 % unausgehärteten Altpulverlackresten (Charge 3) inklusive 2 % Stearinsäure (Abb. 35) |
| Probe C: | Reines LLDPE Dowlex SC 2108G (Abb. 33) |

Zunächst erfolgte eine DSC-Messung von reinem LLDPE. Die Heizrate ist bei den Messungen auf 20 K/min festgelegt. Der Messbereich ist auf 25 °C - 250 °C beschränkt.

In der Abbildung 33 zeigt die DSC-Kurve von reinem LLDPE bei der ersten Aufheizung einen deutlichen endothermen Schmelzpeak bei ca. 130 °C (schwarze Kurve). Bei der zweiten Aufheizung (blaue Kurve) ist der endotherme Reaktionspeak leicht nach links verschoben und ein ausgeprägter Schmelzpeak bei ca. 127 °C zu erkennen. Bei der Abkühlung (rote und grüne Kurven) lässt sich deutlich das Kristallisationsverhalten von reinem LLDP erkennen. Hier findet man die Kristallisationstemperatur bei ungefähr 110 °C.

In der Abbildung 34 zeigt die DSC-Kurve von Probe A aus der Mischung von 50 % LLDPE mit 50 % ausgehärteten Altpulverlackresten (Charge 3) bei der ersten Aufheizung einen deutlichen endothermen Schmelzpeak bei ca. 124 °C (schwarze Kurve). Bei der zweiten Aufheizung (blaue Kurve) ist der ausgeprägte, breitere endotherme Schmelzpeak bei ca. 122 °C erkennbar. Bei der Abkühlung (rote und grüne Kurven) lässt sich deutlich das Kristallisationsverhalten, zurückzuführen auf LLDPE, eruieren. Hier findet man die Kristallisationstemperatur bei beiden Kurven etwa bei 108 °C.

Die Mischung von Probe B aus 50 % LLDPE mit 50 % unausgehärteten Altpulverlackresten (Charge 3) inklusive 2 % Stearinsäure zeigt in Abbildung 35 bei der ersten Aufheizung einen endothermen Schmelzpeak bei ca. 128 °C

(schwarze Kurve) und ist damit 4 °C höher als bei der Probe A, welche keine Stearinsäure enthält. Ebenfalls um 4 °C höher als bei Probe A liegt der endotherme Schmelzpeak der zweiten Aufheizung (blaue Kurve), der, leicht nach links verschoben, 126 °C beträgt. Der Kristallisationspeak, sichtbar bei den schmaleren roten und grünen Abkühlungskurven, identifiziert bei 106 °C, ist zwei Grad niedriger als in Abbildung 34.

Da Stearinsäure nachweislich an den Vernetzungsreaktionen der Pulverlacke teilnimmt, wäre es denkbar, dass und es zu einer Vergrößerung der Enthalpie kam, d. h. Wärme wurde durch das reagierende Harz freigesetzt, wodurch die Reaktionsenthalpie anstieg, die die Ursache für die Erhöhung der Schmelzpeaks sein könnte

Beispiele 14-18 betreffen verschiedene Behandlungen des Pulverlackabfalles in Recyclingverfahren

**Beispiel 14 - Extrusion von Pulverlackabfall (100% Pulverlack) und anschließender Spritzguss**

Der angelieferte Pulverlackabfall wird in einem geschlossenen Fördersystem zur Extruderöffnung befördert. Unmittelbar vor der Befüllung des Extruders wird der Pulverlack mit 5% Nonadecansäure-Pulver vermischt.

Die Extrudertemperatur beträgt 90 °C. Die entstehenden Kunststoffstränge (Kunststoff-Filamente) werden anschließend zu Granulat verarbeitet.

Das so erzeugte Granulat kann erneut für einen Spritzgussvorgang (Inkjet-Molding) eingeschmolzen werden. Die Temperaturen beim Spritzguss liegen bei 220 °C.

Das spritzgegossene Material liegt anschließend als duromerer Kunststoff vor.

**Beispiel 15 - Extrusion eines Gemisches aus 45 % Polypropylen (PP) und 50% Pulverlackabfall und anschließender Spritzguss**

Der angelieferte Pulverlack wird zunächst in einem geschlossenen System mit 5% Hexadecansäure und 45% Polypropylen-Pellets gemischt. Das Mischgut wird in den Extruder befördert. Die Extrudertemperatur beträgt 200 °C. Die entstehenden Kunststoffstränge werden anschließend zu Granulat verarbeitet.

Das so erzeugte Granulat kann erneut für einen Spritzgussvorgang (Inkjet-Molding) eingeschmolzen werden. Die Temperaturen beim Spritzguss liegen bei 210 °C.

Das spritzgegossene Material liegt anschließend als gefüllter thermoplastischer Kunststoff vor.

**Beispiel 16 - Fused Deposition Modeling (FDM) mit Filamenten aus recyceltem Pulverlack**

Zunächst werden Kunststoff-Filamente in einem Prozess wie unter 1) beschrieben hergestellt.

Diese Kunststoff-Filamente dienen als Ausgangsmaterial für den 3D-Druck mittels FDM-Methode. Da das Kunststoff-Filament aus recyceltem Pulverlackabfall (oder aus handelsüblichen Pulverlack) sehr niedrig viskos aufschmilzt, ist es bei diesem Material möglich, eine Sonderform des FDMs anzuwenden - statt eines Materialstranges, der vom Druckerkopf abgelegt wird, kann eine tröpfchenweise Ablagerung des Materials durch einen Piezo-Druckerkopf erfolgen. Vorteilhaft bei dieser Verarbeitungsmethode ist die wesentlich höhere Auflösung des 3D Drucks.

Die Verarbeitungstemperatur im Druckerkopf beträgt 210 °C. Der entstandene 3D-Druck liegt anschließend als duromerer Kunststoff vor. Es erfolgt eine Nachvernetzung durch 10-minütiges Sintern bei 210 °C.

**Beispiel 17 - Fused Deposition Modeling (FDM) mit Filamenten aus recyceltem Pulverlack und Metallpartikeln**

Zunächst werden die Kunststoff-Filamente in einem Prozess ähnlich wie unter 1) beschrieben hergestellt. Der Pulverlack wird dabei vor Befüllung des Extruders mit 3% Dodecansäure gemischt. Die Temperatur im Extruder beträgt 80 °C. Die entstandenen Filamente werden anschließend als Ausgangsmaterial bei einer besonderen Variante des FDM-Drucks eingesetzt:
Es handelt sich um eine Druckvariante, bei der nicht wie unter 3) beschrieben Tröpfchen sondern ein Materialstrang abgelagert wird. Die Verarbeitungstemperatur im Druckerkopf beträgt 220 °C. Dem Druckerkopf vorgelagert liegt ein Bereich, in dem zwei Materialströme miteinander vereint werden - der Kunststoffstrang und die Stahlfilamente, die durch eine Spule in Längsrichtung ausgerichtet sind. Da der geschmolzene Pulverlack sehr niedrig viskos ist, kann er durch Druck leicht die Zwischenräume der Stahlfilamente durchdringen. Das Gemisch wird durch den Druckerkopf befördert. Nach dem Druckvorgang kann durch ein weiteres Magnetfeld am Druckerkopf bei Richtungsänderungen im noch flüssigen Kunststoff die Stahlfilament-Richtung nachträglich der neuen Verlaufsrichtung angepasst werden.

Durch 15-minütiges Nachsintern bei 200 °C wird das Agens deaktiviert und es kommt zur Metallhaftung.

**Beispiel 18 - Selektives Laser Sintern (SLS)**

Für einen SLS-Prozess mit einem modifizierten Pulverlackabfall wird dieser mit 4 % 1-Tetracosanol-Pulver

gemischt und im SLS-Reaktionsbett deponiert. Es hat sich gezeigt, dass beim Lasersintern ohne Agens relativ poröse Strukturen entstehen. Durch die Zugabe eines der oben beschriebenen Agens-Moleküle konnten die Strukturen weitgehend geglättet werden und scheinbare Absonderungsvorgänge zwischen einzelnen Partikeln konnten verringert werden. Nach Beendigung des Lasersinterns wird der gedruckte 3D-Körper 10 Minuten bei 220 °C nachgesintert.

**Patentansprüche**

1. Verfahren zur Wiederverwertung von Pulverlackabfällen umfassend die Schritte:

   a) Bereitstellung von Pulverlackabfällen
   b) Bereitstellen eines Reaktanden
   c) Mischen der Pulverlackabfälle mit dem Reaktand um ein weiter verarbeitbares Reaktand-Pulverlackabfall-Gemisch zu erhalten

   **dadurch gekennzeichnet, dass**
   der Reaktand ein Tensid ist.

2. Verfahren gemäß dem vorherigen Anspruch
   **dadurch gekennzeichnet, dass**
   der Reaktand eine gesättigte Carbonsäure, bevorzugt eine gesättigte Fettsäure, ganz besonders eine gesättigte Fettsäure mit der Summenformel $C_nH_{2n+1}COOH$, wobei bevorzugt n = 5-30.

3. Verfahren gemäß einem der vorherigen Ansprüche
   **dadurch gekennzeichnet, dass**
   der Reaktand eine Stearinsäure ist.

4. Verfahren gemäß einem der vorherigen Ansprüche
   **dadurch gekennzeichnet, dass**
   der Reaktand ein Polyethylenglycol (PEG) ist.

5. Verfahren gemäß einem der vorherigen Ansprüche
   **dadurch gekennzeichnet, dass**
   der Reaktand eine Schmelztemperatur von mindestens 50°C, bevorzugt mindestens 60°C aufweist.

6. Verfahren gemäß dem vorherigen Anspruch
   **dadurch gekennzeichnet, dass**
   eine Weiterverarbeitung des Reaktand-Pulverlackabfall-Gemisch bei einer Temperatur von mindestens 60°C erfolgt.

7. Verfahren gemäß einem der vorherigen Ansprüche
   **dadurch gekennzeichnet, dass**
   der Pulverlackabfall duroplastische Altpulverlacke umfasst.

8. Verfahren gemäß einem der vorherigen Ansprüche
   **dadurch gekennzeichnet, dass**
   der Pulverlackabfall ein Kunstharz, besonders bevorzugt ein Epoxidharz, ein Polyesterharz und/oder ein Acrylatharz oder Mischungen dieser umfasst.

9. Verfahren gemäß einem der vorherigen Ansprüche
   **dadurch gekennzeichnet, dass**
   der Pulverlackabfall funktionelle Gruppen aufweist, welche eine Haftung an einer Metalloberfläche vermitteln können und der Reaktand eine Inaktivierung der funktionellen Gruppen bewirkt.

10. Verfahren gemäß einem der vorherigen Ansprüche
    **dadurch gekennzeichnet, dass**
    die funktionellen Gruppen ausgewählt sind der Gruppe umfassend Hydroxyl-, Epoxy-, Carboxyl, Amino- und/oder Estergruppen.

**11.** Verfahren gemäß einem der vorherigen Ansprüche
**dadurch gekennzeichnet, dass**
das Reaktand -Pulverlackabfall-Gemisch aus c)

i) 90 - 99,5 Gew.-% des Pulverlackabfalles und
ii) 0,5- 10 Gew.-% des Reaktanden

umfasst, wobei sich die Gew.-% auf das Gesamtgewicht des Reaktand-Pulverlackabfall-Gemisches beziehen und kleiner gleich 100 Gew.-% sind.

**12.** Verfahren gemäß einem der vorherigen Ansprüche
**dadurch gekennzeichnet, dass**
bei einer Weiterverarbeitung des Reaktand-Pulverlackabfall-Gemisch aus c) das Gemisch mindestens teilweise im Kontakt mit einer Metalloberfläche ist.

**13.** Verfahren gemäß einem der vorherigen Ansprüche
**dadurch gekennzeichnet, dass**
eine Weiterverarbeitung des Reaktand-Pulverlackabfall-Gemisch aus c) in einem Extruder und/oder einer Spritzgießmaschine erfolgt.

**14.** Verfahren gemäß den vorherigen Ansprüchen
**dadurch gekennzeichnet, dass**
eine Weiterverarbeitung des Reaktand-Pulverlackabfall-Gemisch aus c) in einem Extruder erfolgt um Kunststoffstränge zu erhalten, welche anschließend zu Granulat verarbeitet werden.

**15.** Pulverlackprodukt hergestellt unter Wiederverwertung von Pulverlackabfällen durch ein Verfahren gemäß einem der vorherigen Ansprüche.

**Abb. 1**

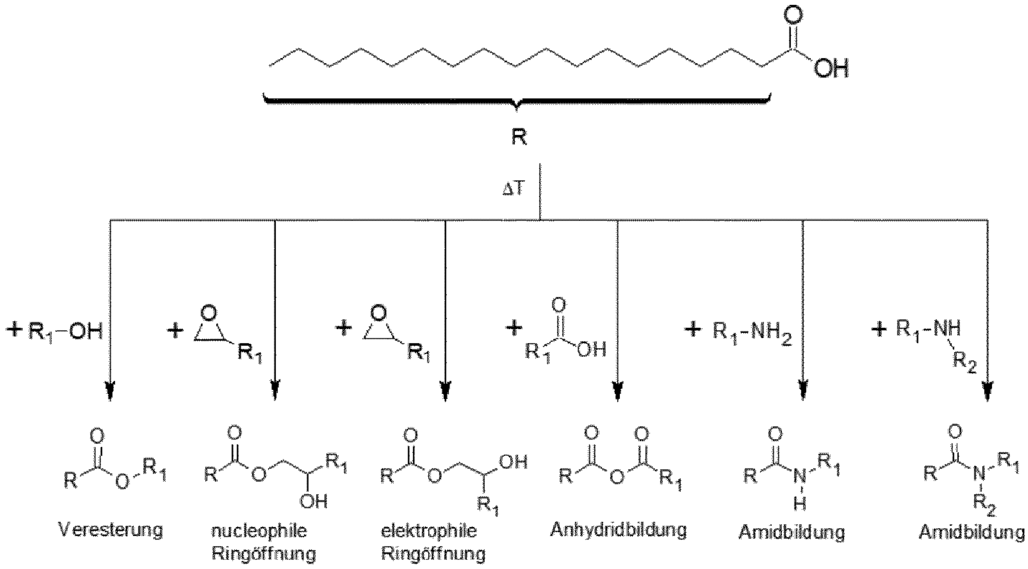
ΔT
Veresterung
nucleophile Ringöffnung
elektrophile Ringöffnung
Anhydridbildung
Amidbildung
Amidbildung

**Abb. 2**

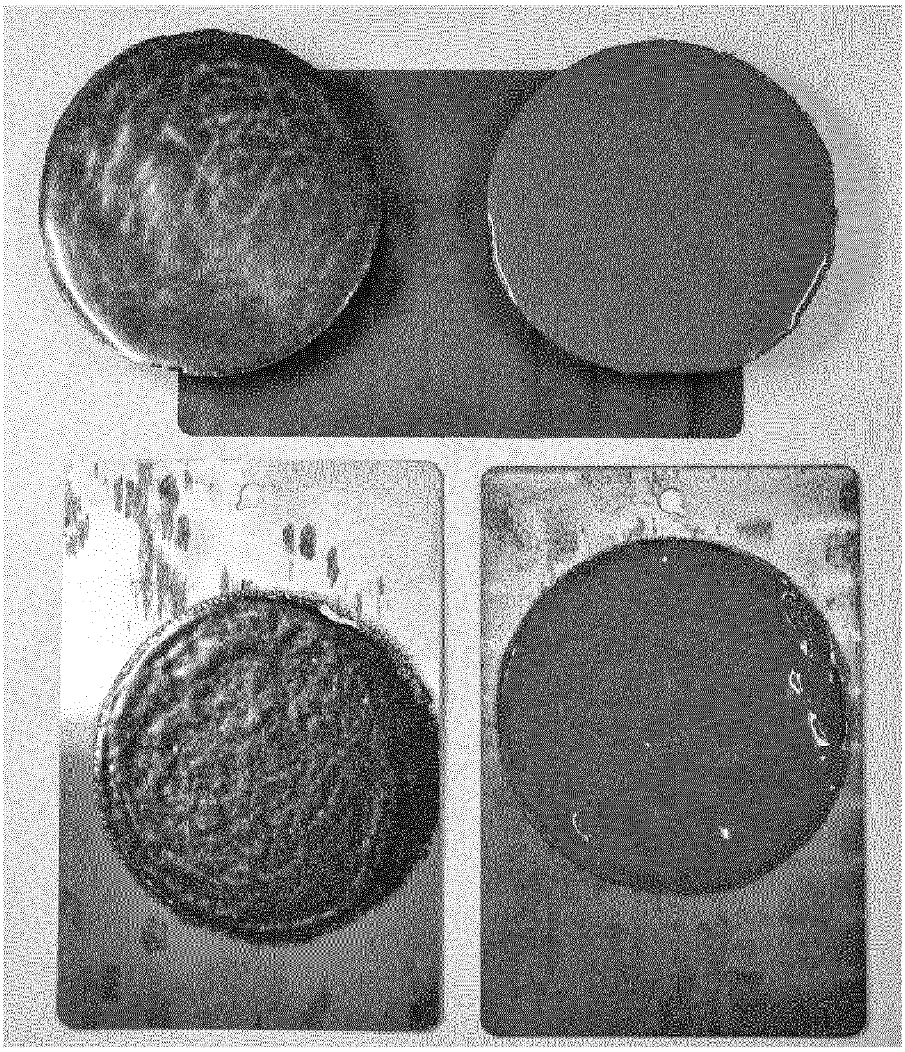

Abb. 3

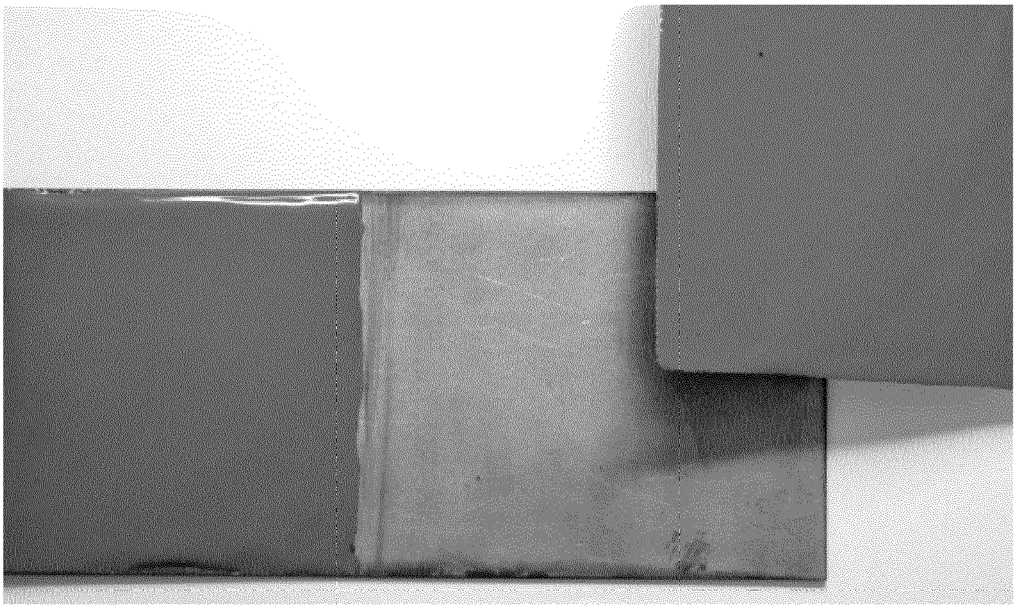

Abb. 4

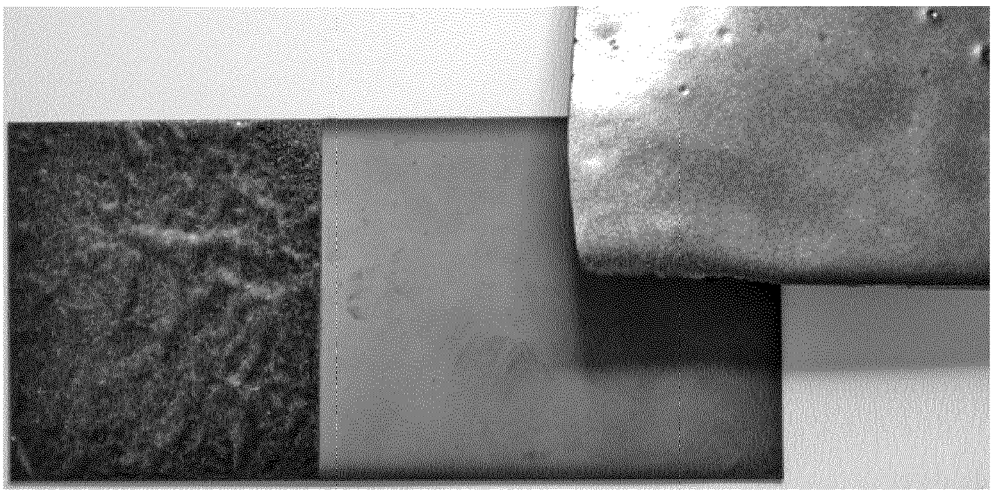

Abb. 5

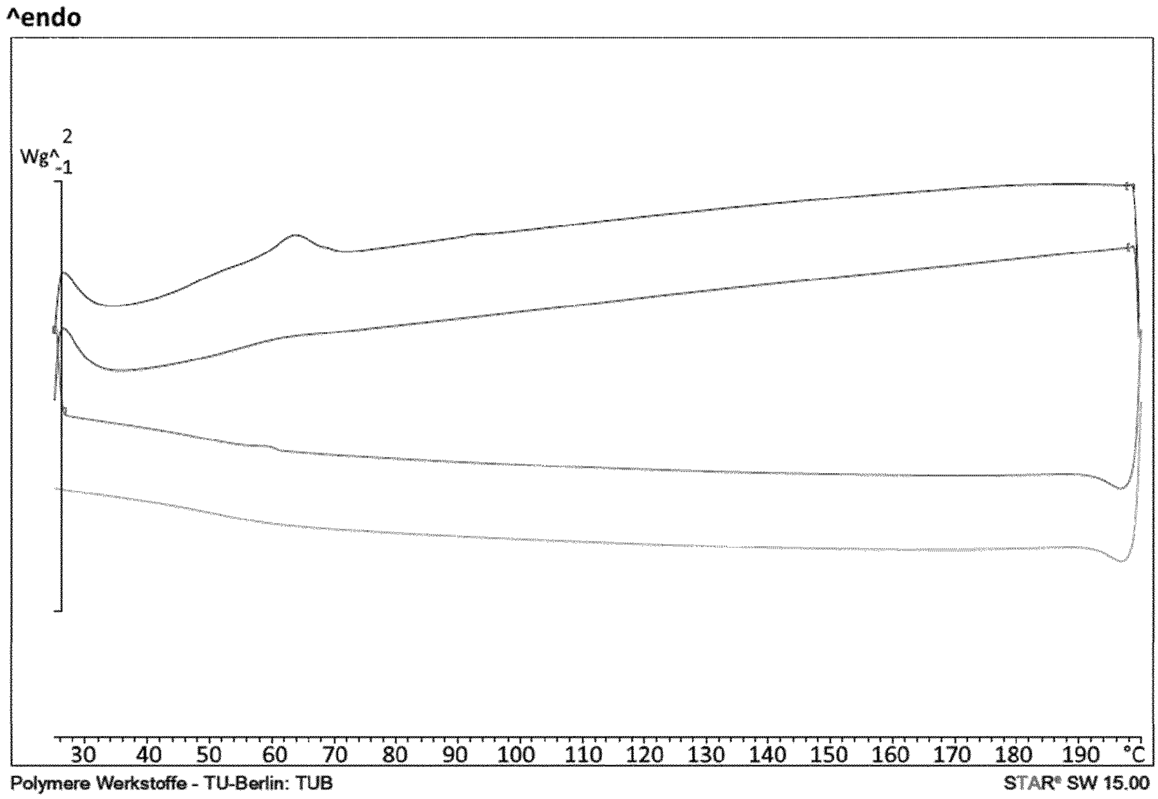
^endo
Wg^-1
2
30 40 50 60 70 80 90 100 110 120 130 140 150 160 170 180 190 °C
Polymere Werkstoffe - TU-Berlin: TUB
STAR® SW 15.00

Abb. 6

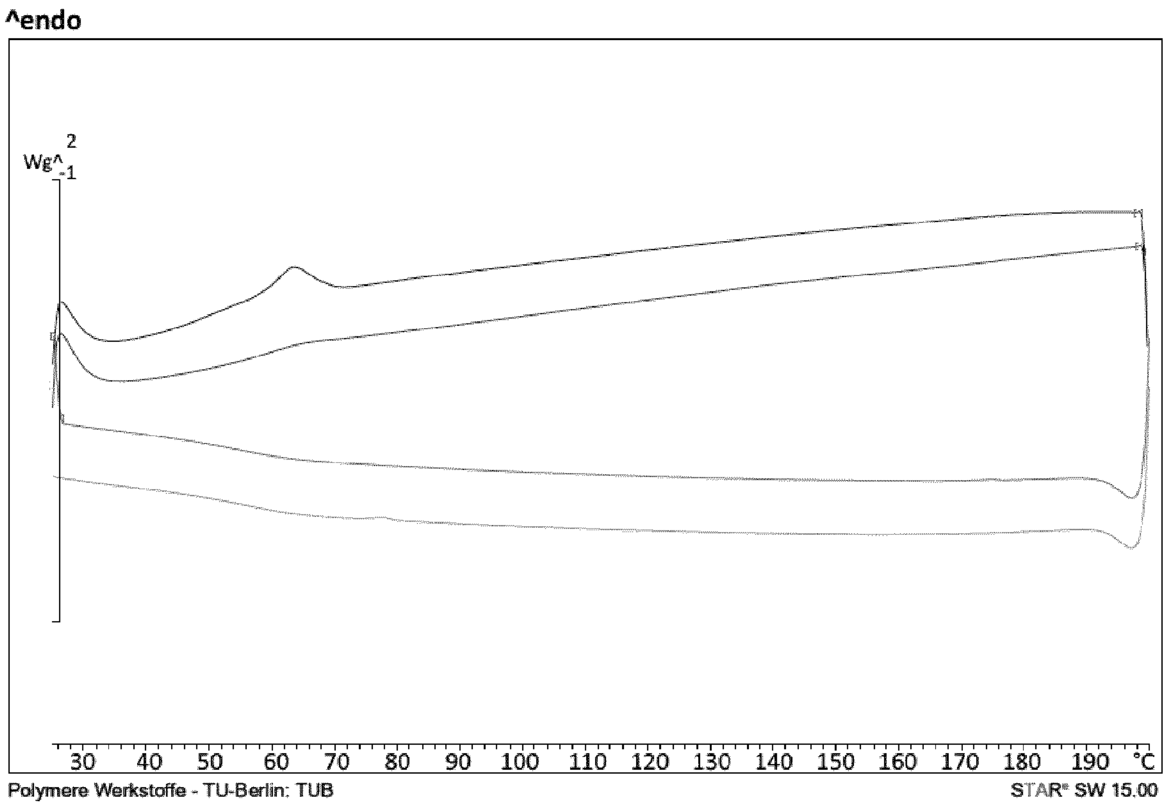
^endo
Wg^-1
2
30 40 50 60 70 80 90 100 110 120 130 140 150 160 170 180 190 °C
Polymere Werkstoffe - TU-Berlin: TUB
STAR® SW 15.00

Abb. 7

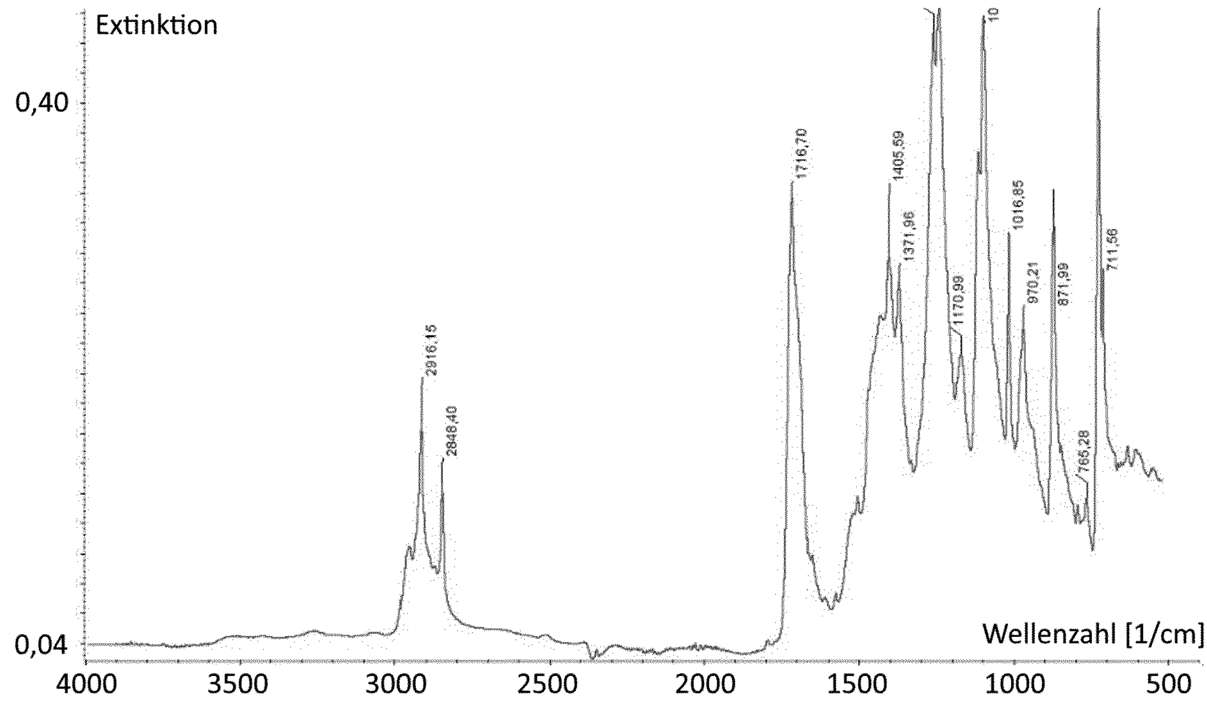
Extinktion
0,40
0,04
2916,15
2848,40
1716,70
1405,59
1371,96
1170,99
1016,85
970,21
871,99
765,28
711,56
Wellenzahl [1/cm]
4000
3500
3000
2500
2000
1500
1000
500

Abb. 8

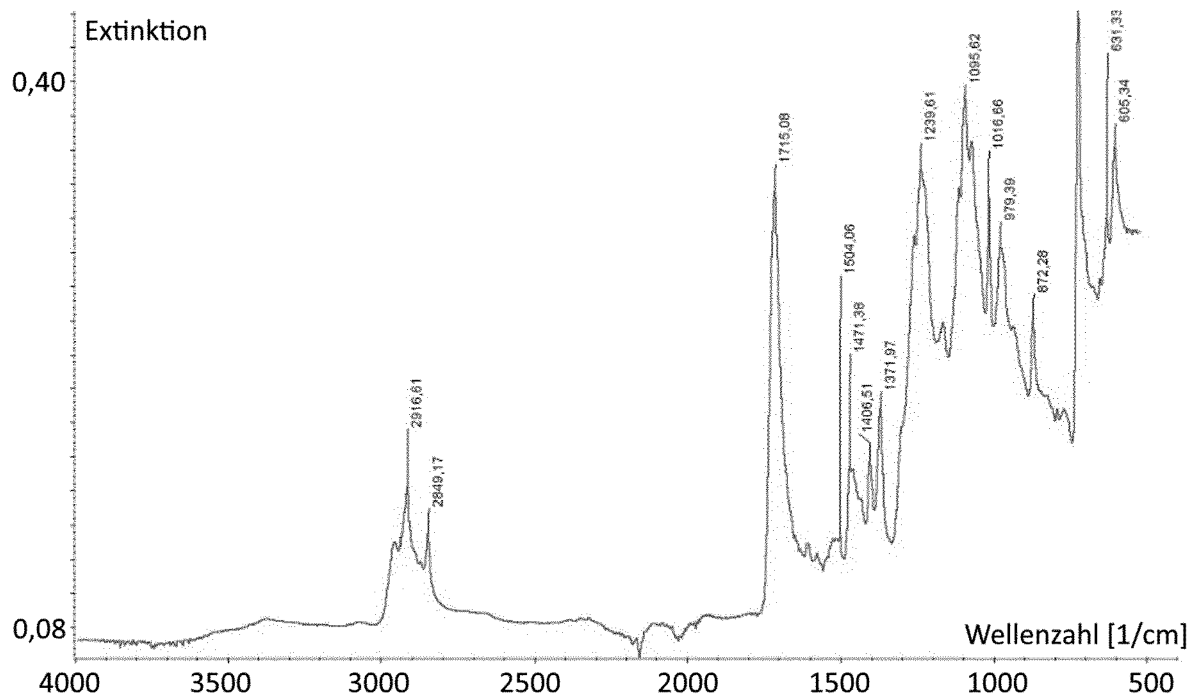
Extinktion
0,40
0,08
2916,61
2849,17
1715,08
1504,06
1471,38
1406,51
1371,97
1239,61
1095,62
1016,66
979,39
872,28
631,33
605,34
Wellenzahl [1/cm]
4000
3500
3000
2500
2000
1500
1000
500

Abb. 9

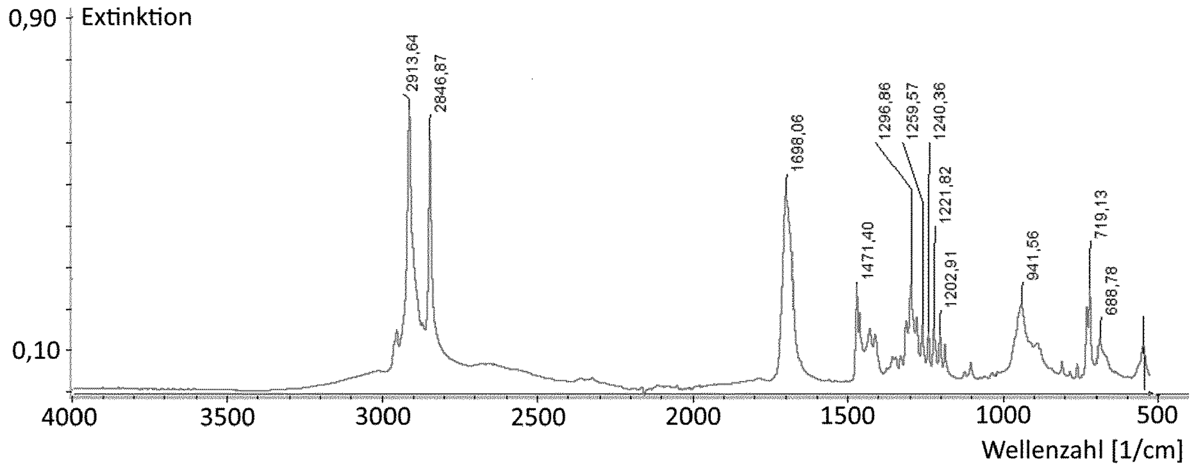


Abb. 10

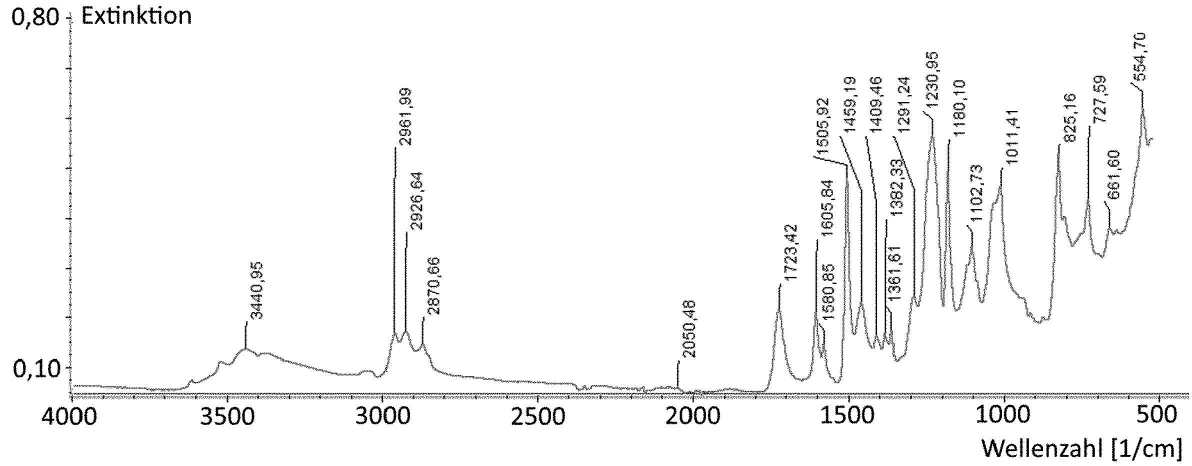


Abb. 11

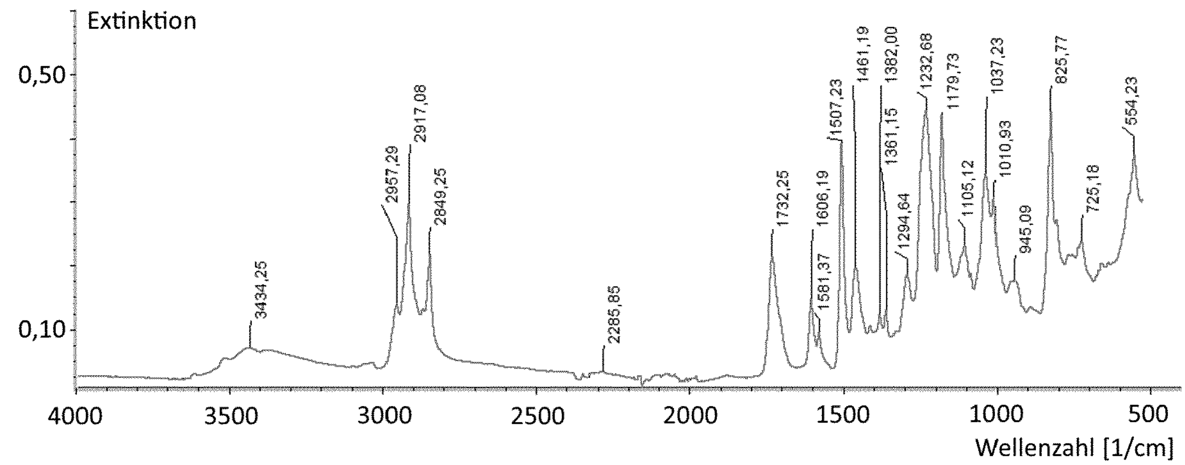

**Abb. 12**

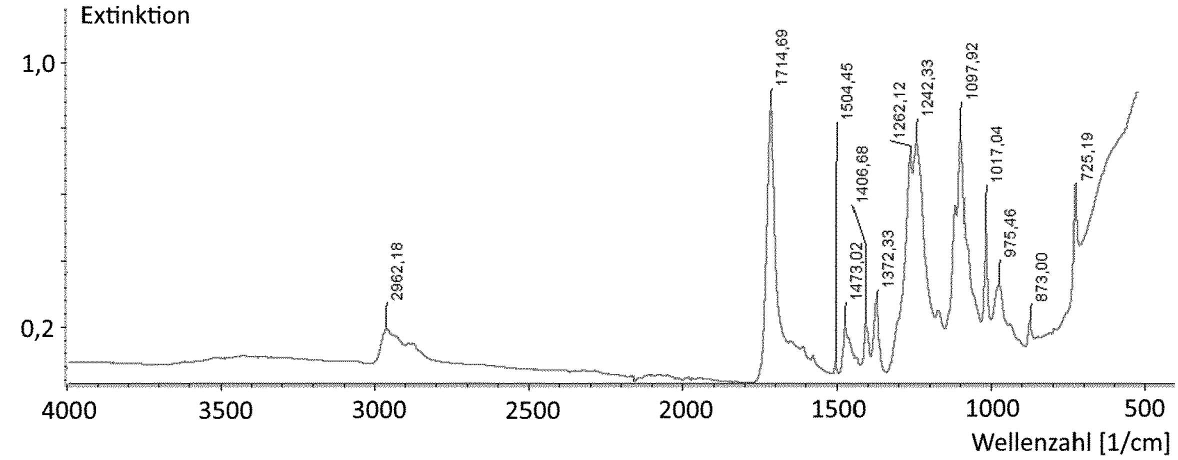


**Abb. 13**

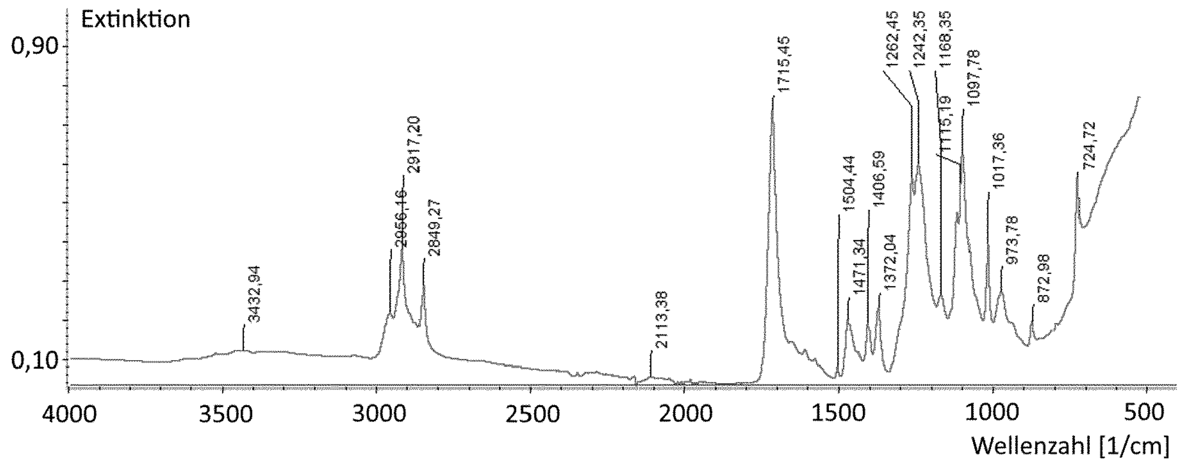


**Abb. 14**

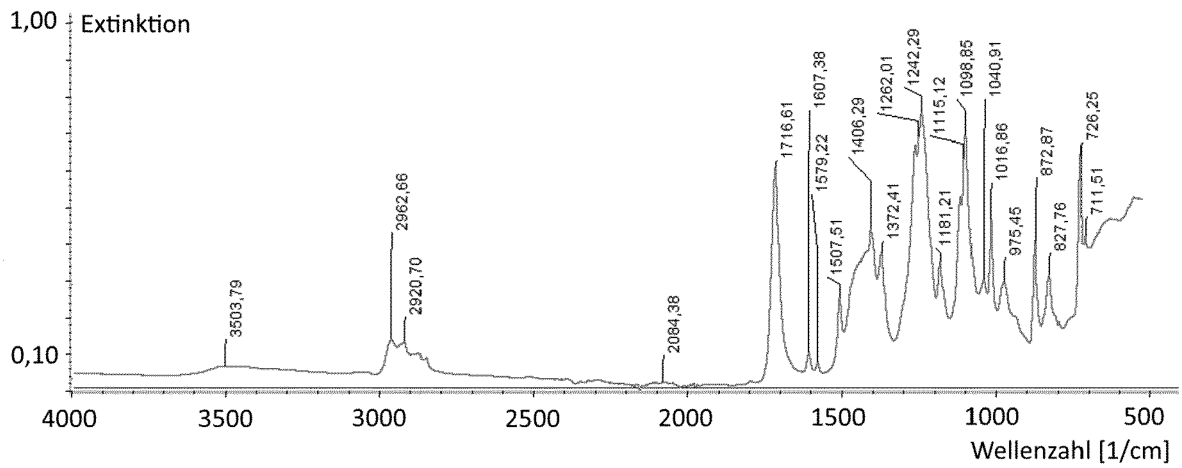

**Abb. 15**

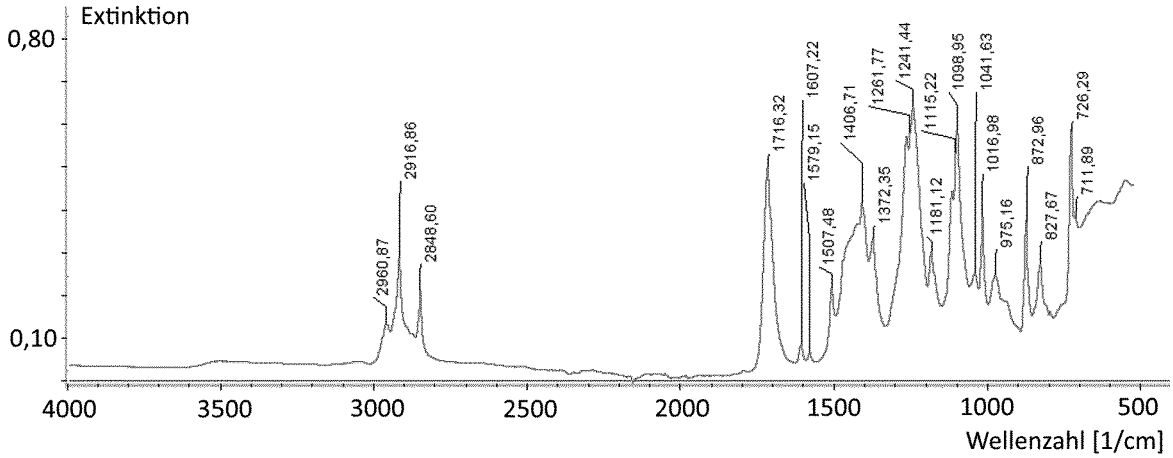


**Abb. 16**

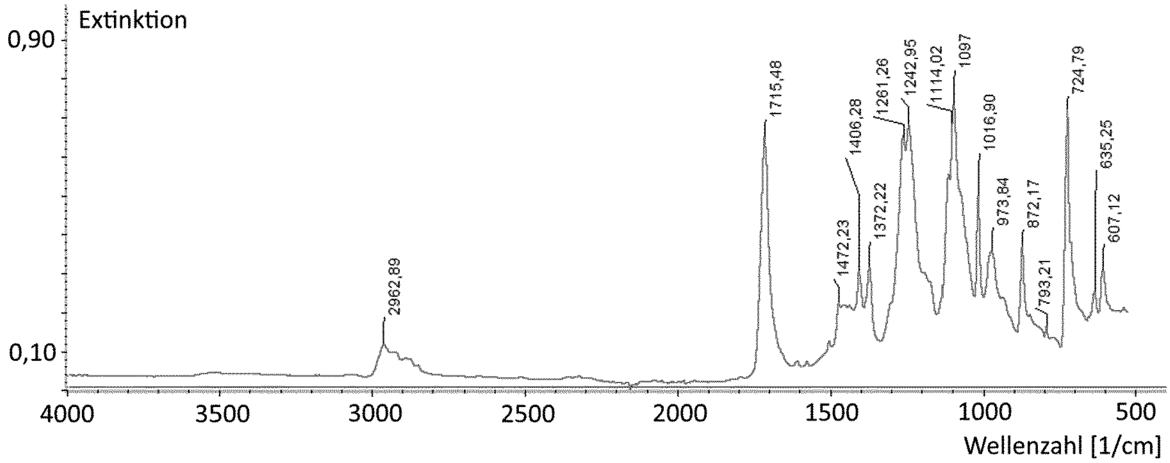


**Abb. 17**

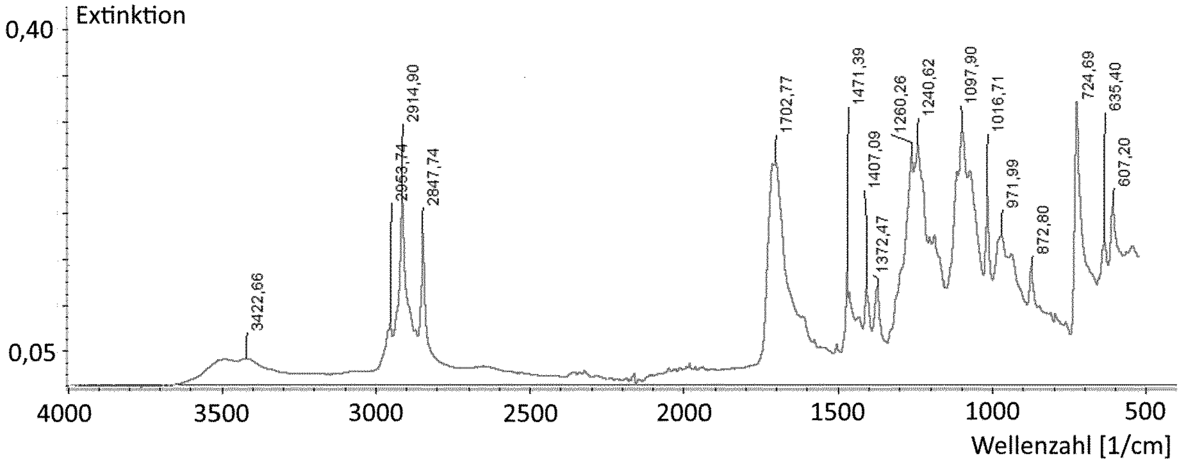

Abb. 18

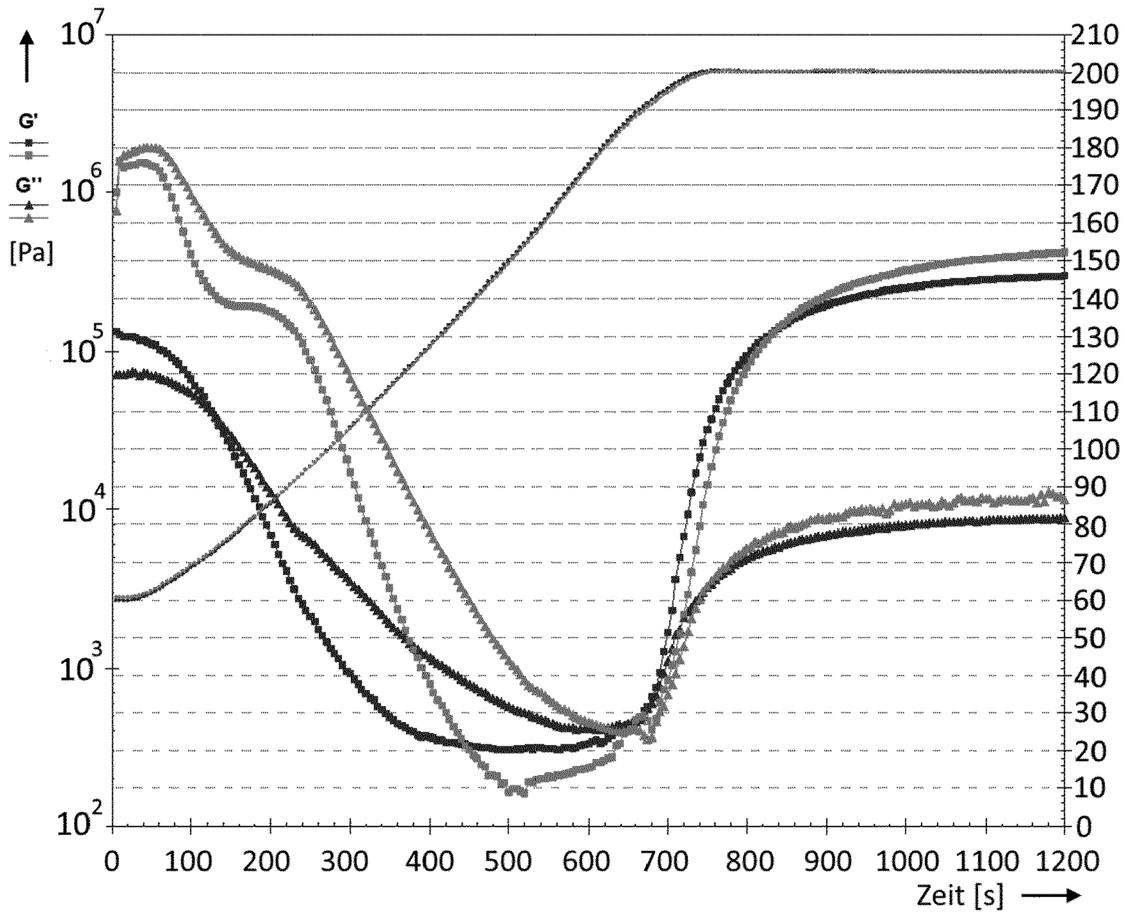
G'
G''
[Pa]
$10^7$
$10^6$
$10^5$
$10^4$
$10^3$
$10^2$
T [°C]
0 10 20 30 40 50 60 70 80 90 100 110 120 130 140 150 160 170 180 190 200 210
0 100 200 300 400 500 600 700 800 900 1000 1100 1200
Zeit [s]

Abb. 19

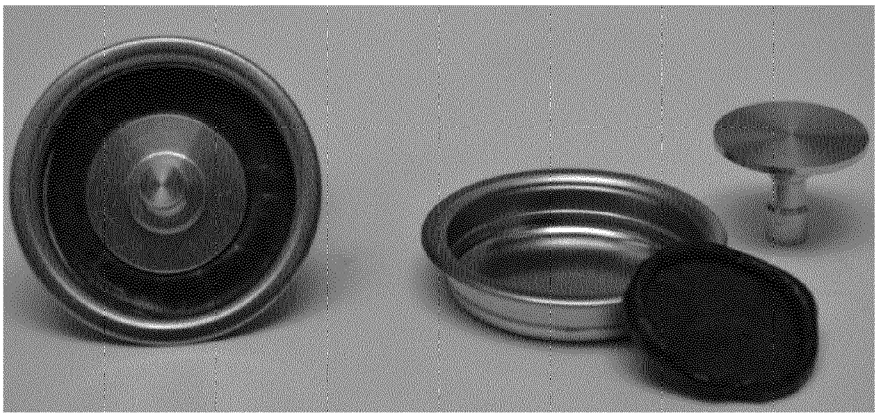

Abb. 20

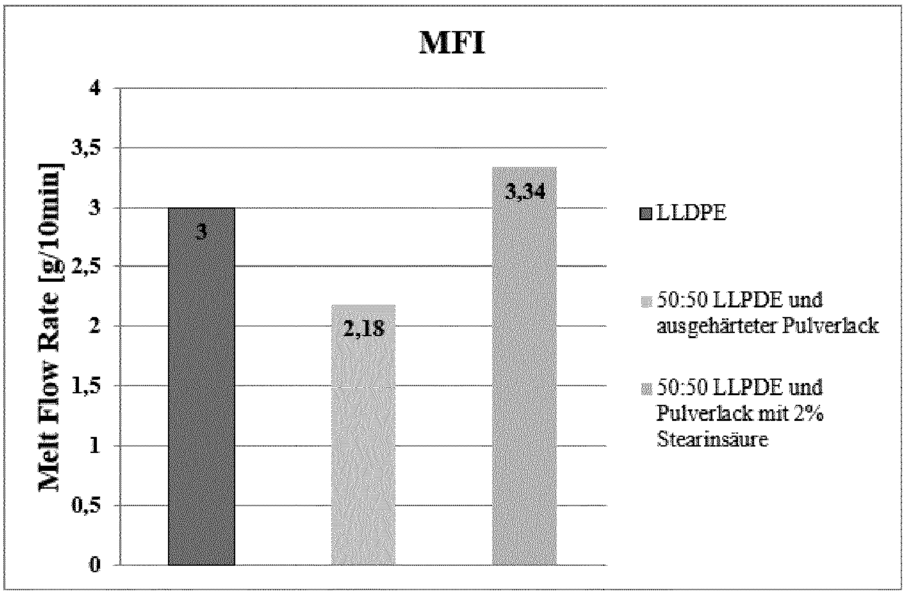
MFI
Melt Flow Rate [g/10min]
4
3,5
3
2,5
2
1,5
1
0,5
0
3
2,18
3,34
LLDPE
50:50 LLPDE und ausgehärteter Pulverlack
50:50 LLPDE und Pulverlack mit 2% Stearinsäure

Abb. 21

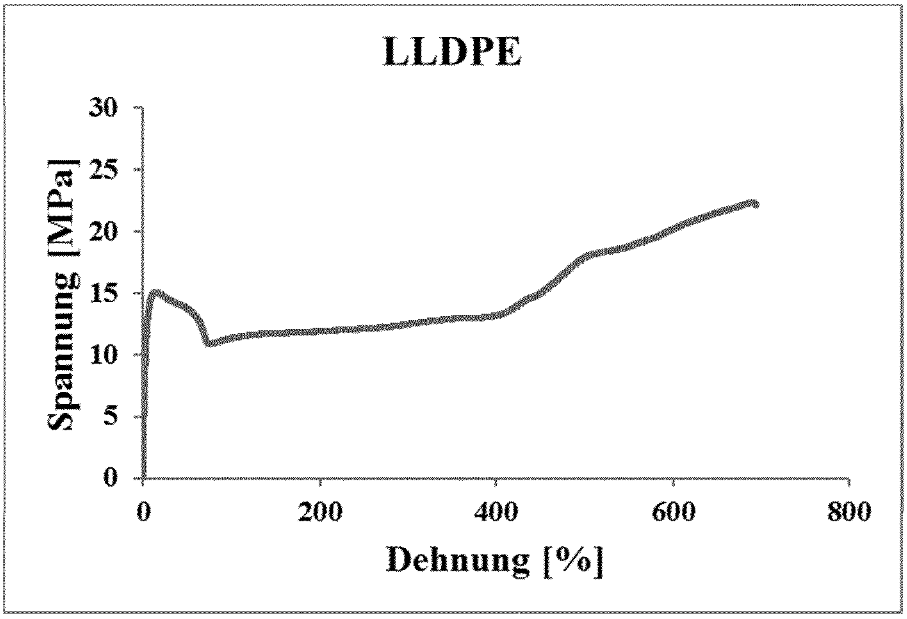
LLDPE
Spannung [MPa]
30
25
20
15
10
5
0
0
200
400
600
800
Dehnung [%]

Abb. 22

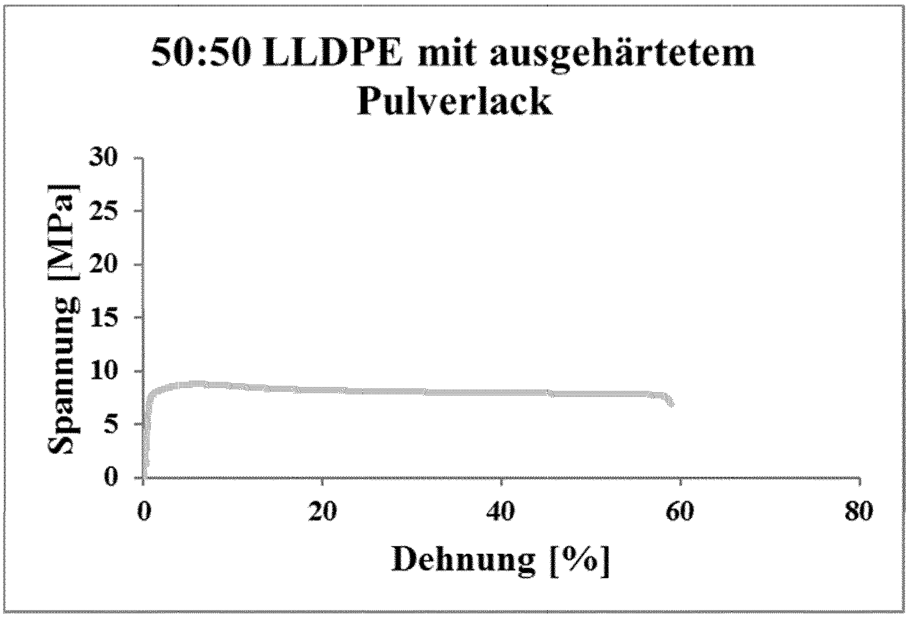
50:50 LLDPE mit ausgehärtetem
Pulverlack
Spannung [MPa]
30
25
20
15
10
5
0
0
20
40
60
80
Dehnung [%]

Abb. 23

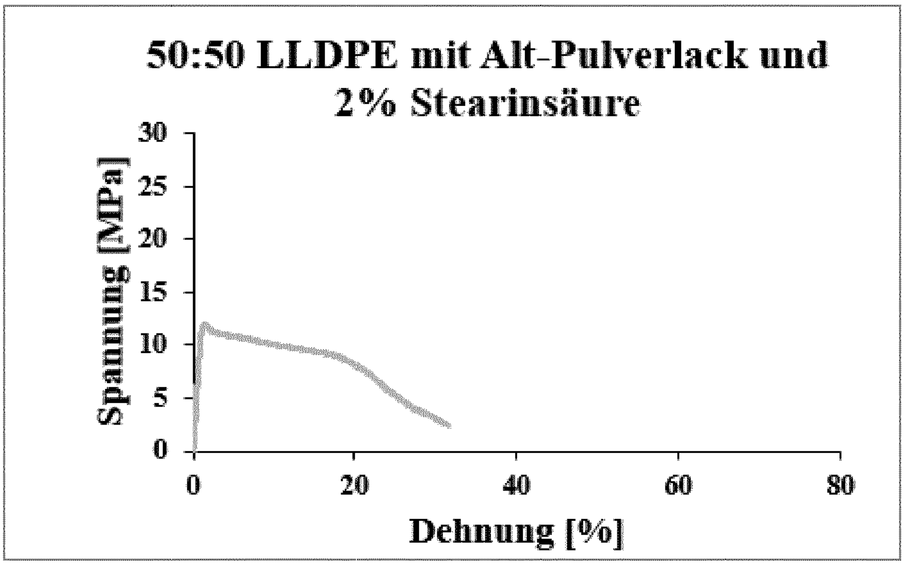
50:50 LLDPE mit Alt-Pulverlack und
2% Stearinsäure
Spannung [MPa]
30
25
20
15
10
5
0
0
20
40
60
80
Dehnung [%]

Abb. 24

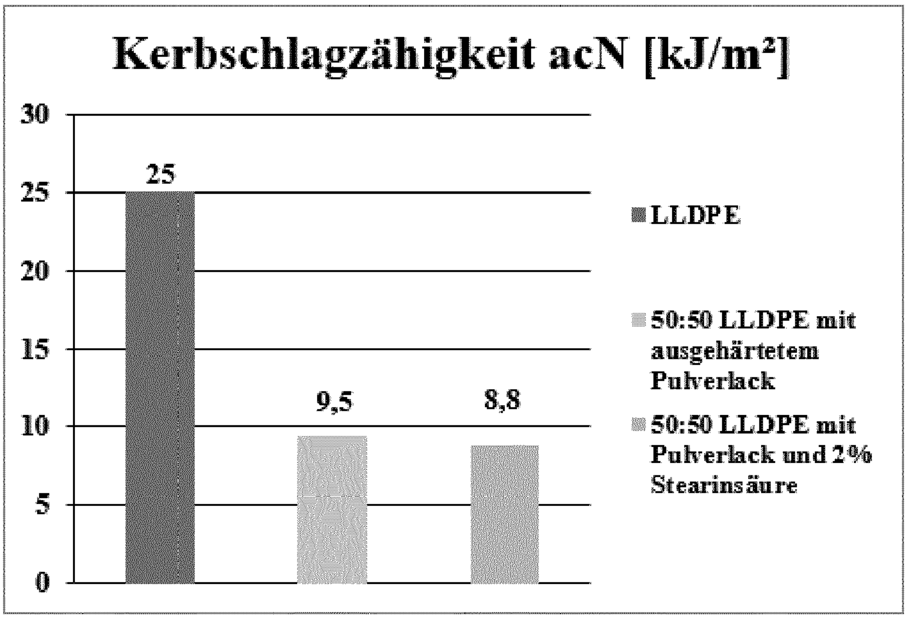
Kerbschlagzähigkeit acN [kJ/m²]
30
25
20
15
10
5
0
25
9,5
8,8
LLDPE
50:50 LLDPE mit ausgehärtetem Pulverlack
50:50 LLDPE mit Pulverlack und 2% Stearinsäure

Abb. 25

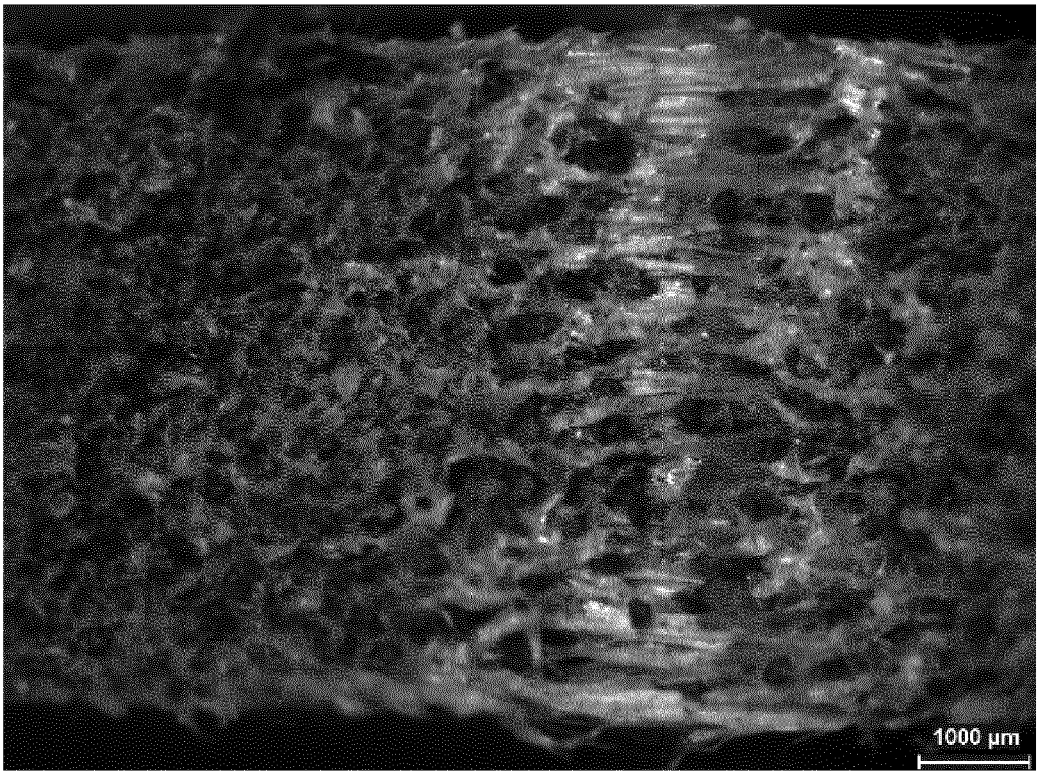
1000 µm

Abb. 26

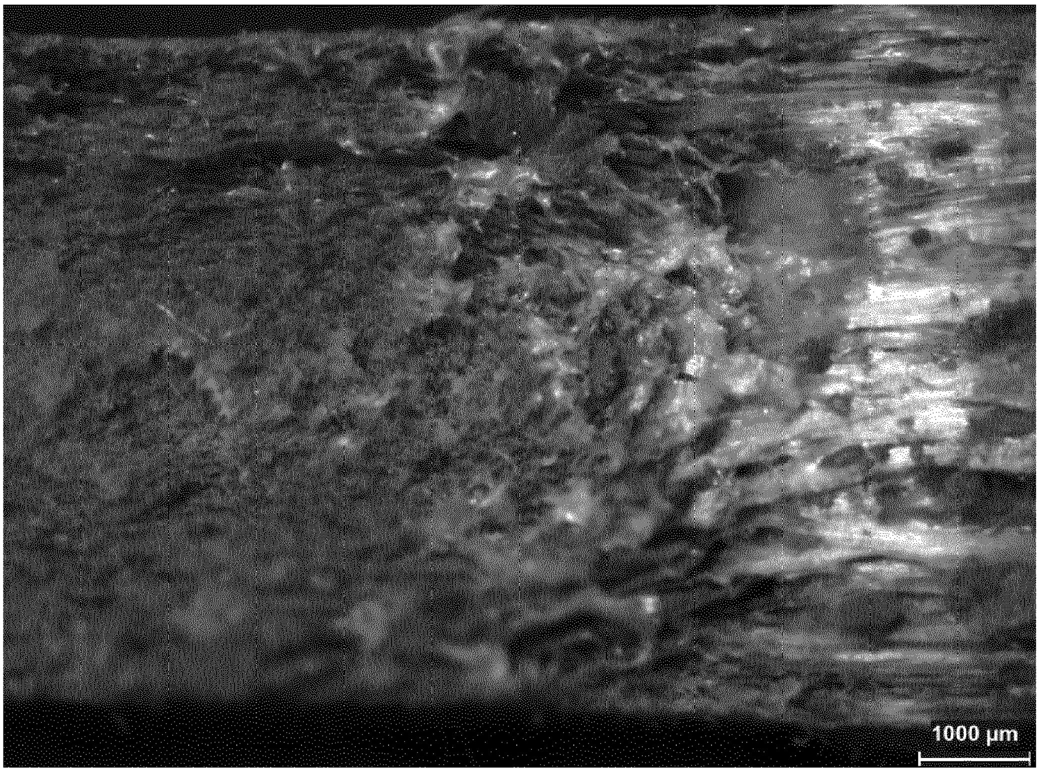


Abb. 27

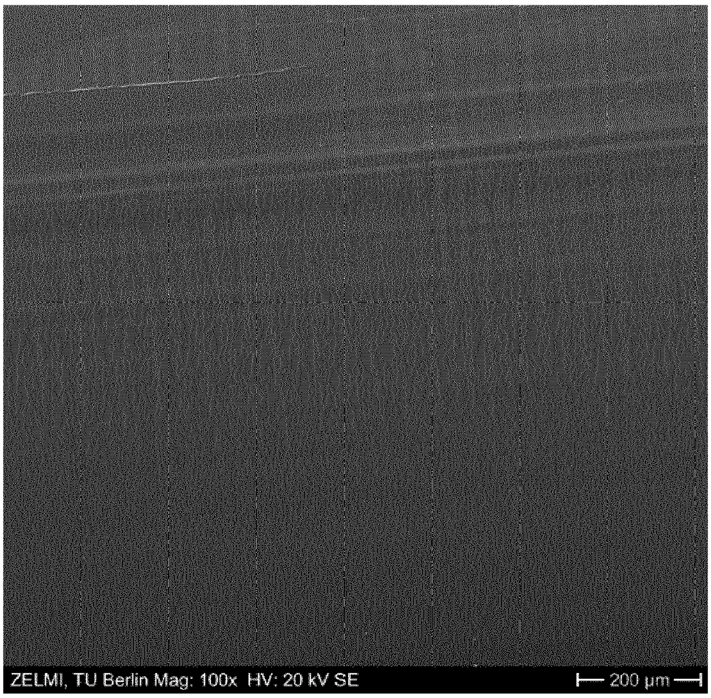

Abb. 28

a b

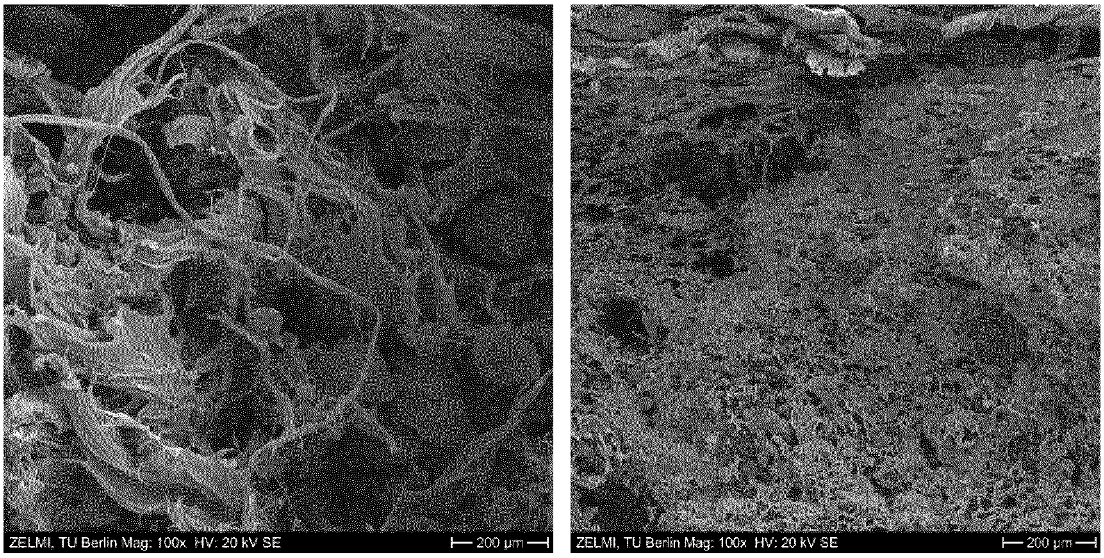


Abb. 29

a b

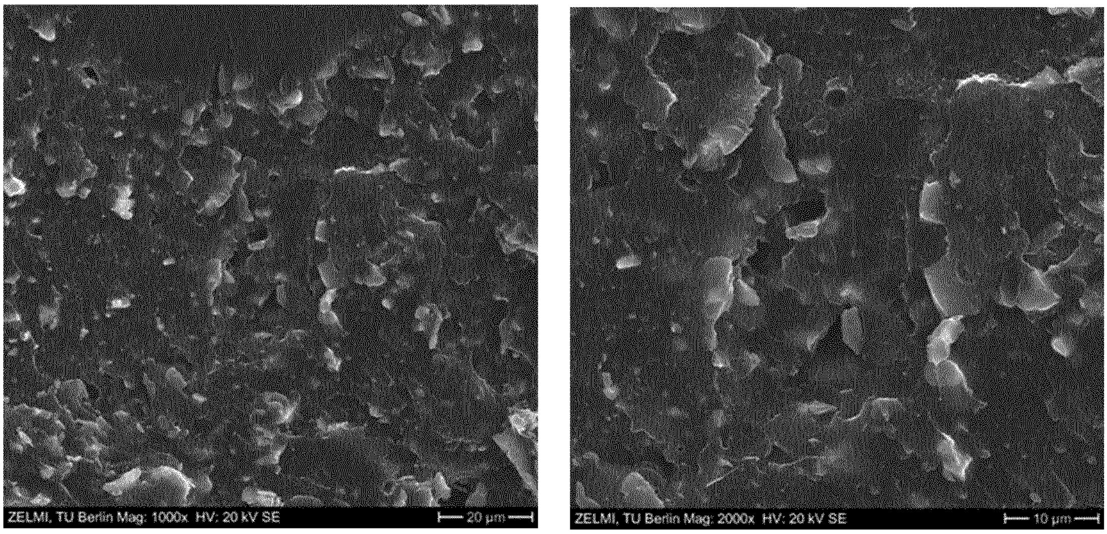

**Abb. 30**

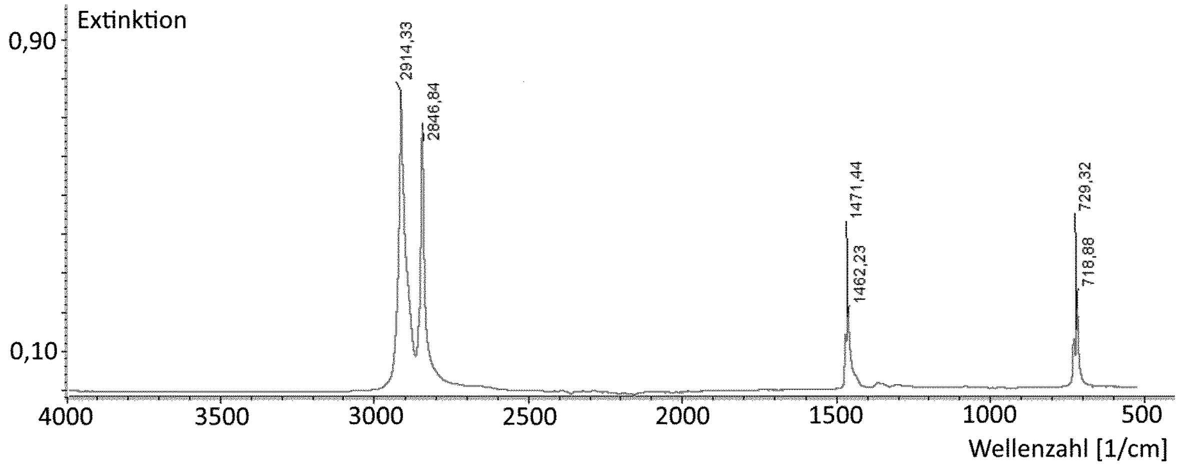


**Abb. 31**

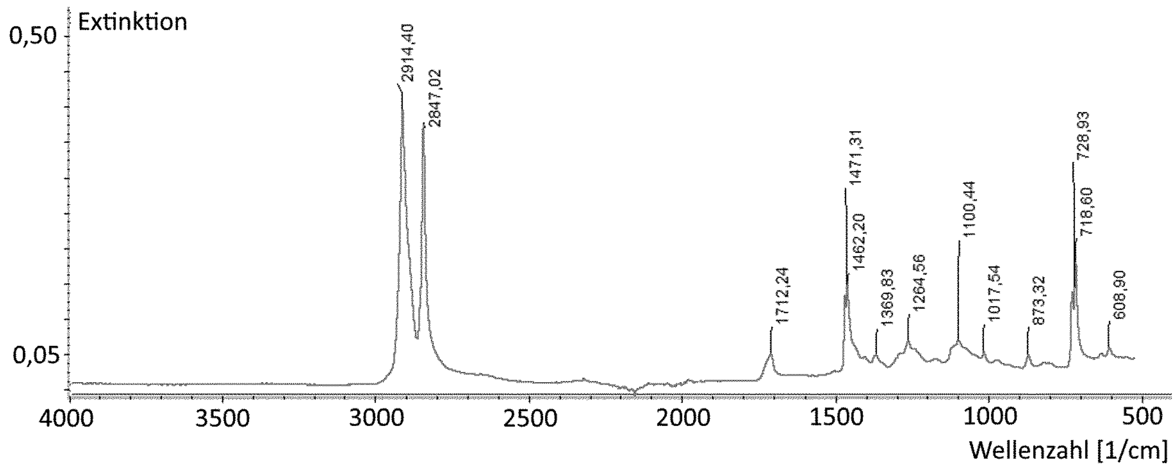


**Abb. 32**

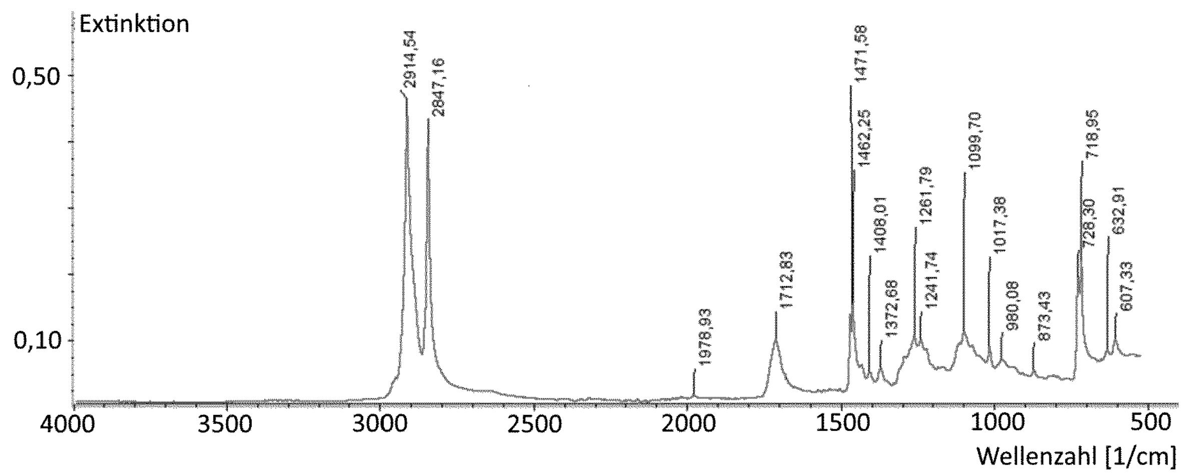

## Abb. 33

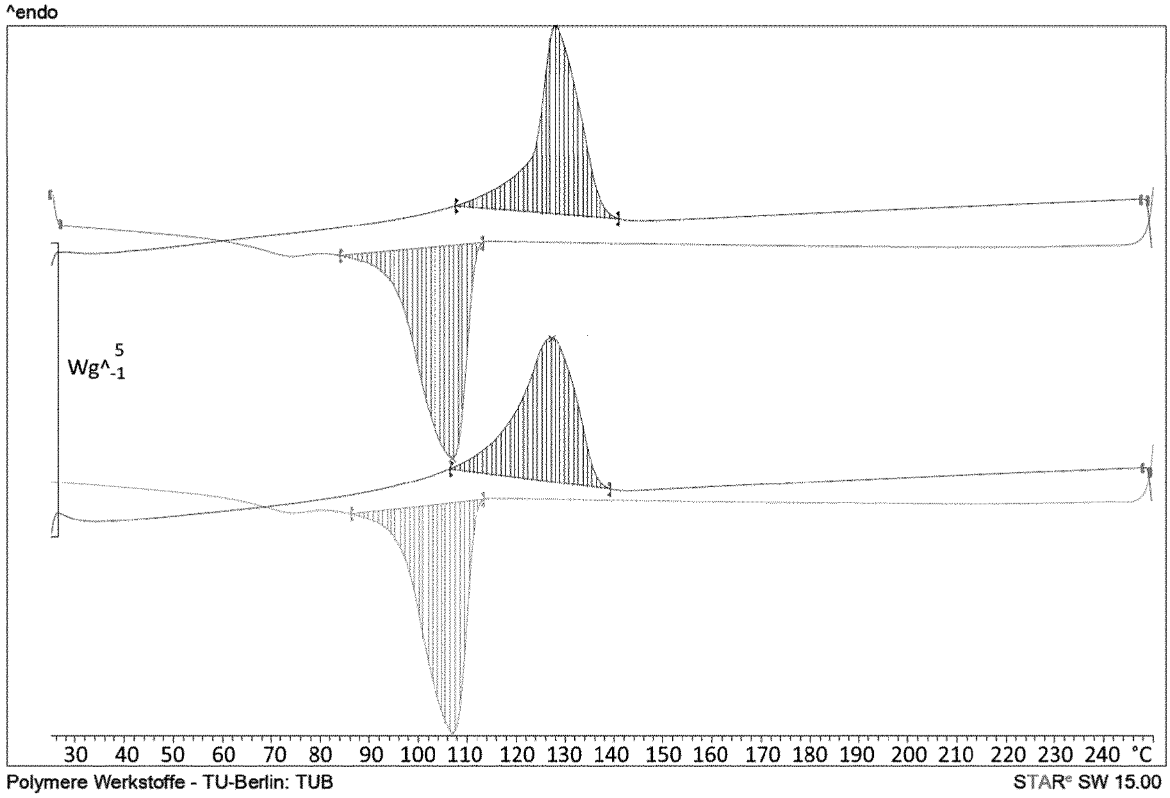
^endo
Wg^-1
5
30 40 50 60 70 80 90 100 110 120 130 140 150 160 170 180 190 200 210 220 230 240 °C
Polymere Werkstoffe - TU-Berlin: TUB
STARe SW 15.00

## Abb. 34

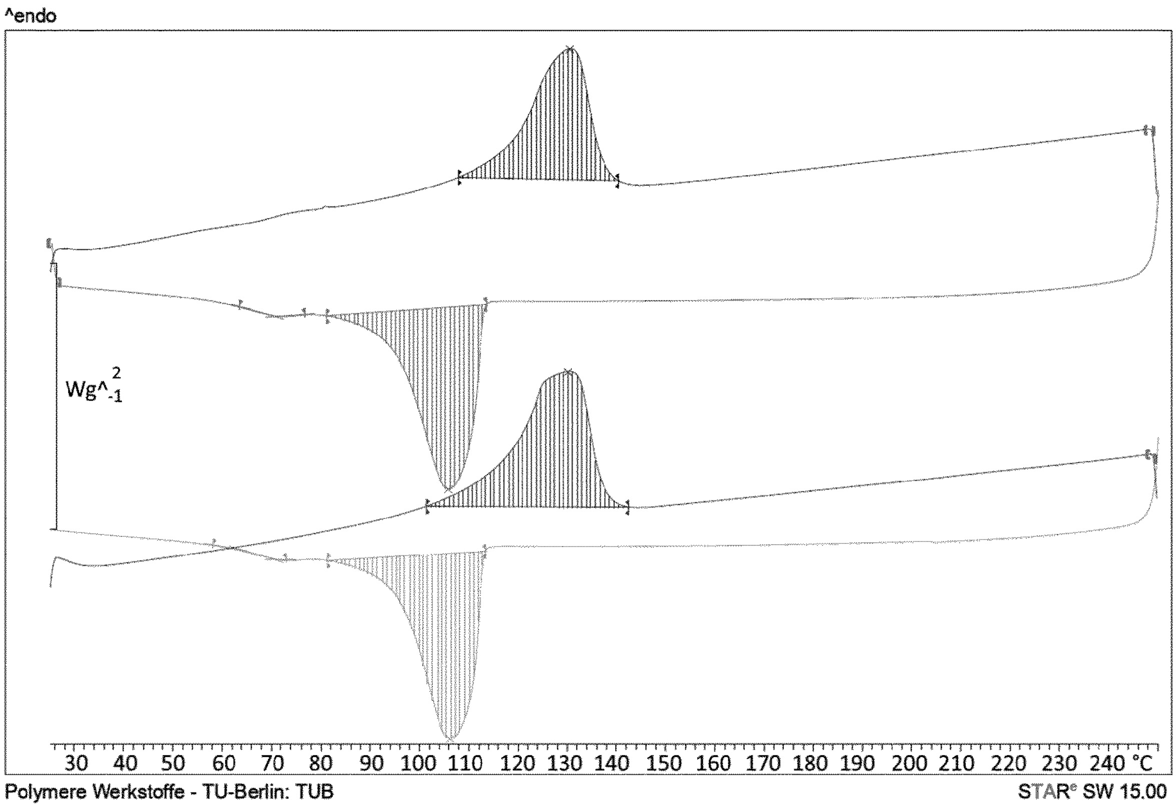
^endo
Wg^-1
2
30 40 50 60 70 80 90 100 110 120 130 140 150 160 170 180 190 200 210 220 230 240 °C
Polymere Werkstoffe - TU-Berlin: TUB
STARe SW 15.00

## Abb. 35

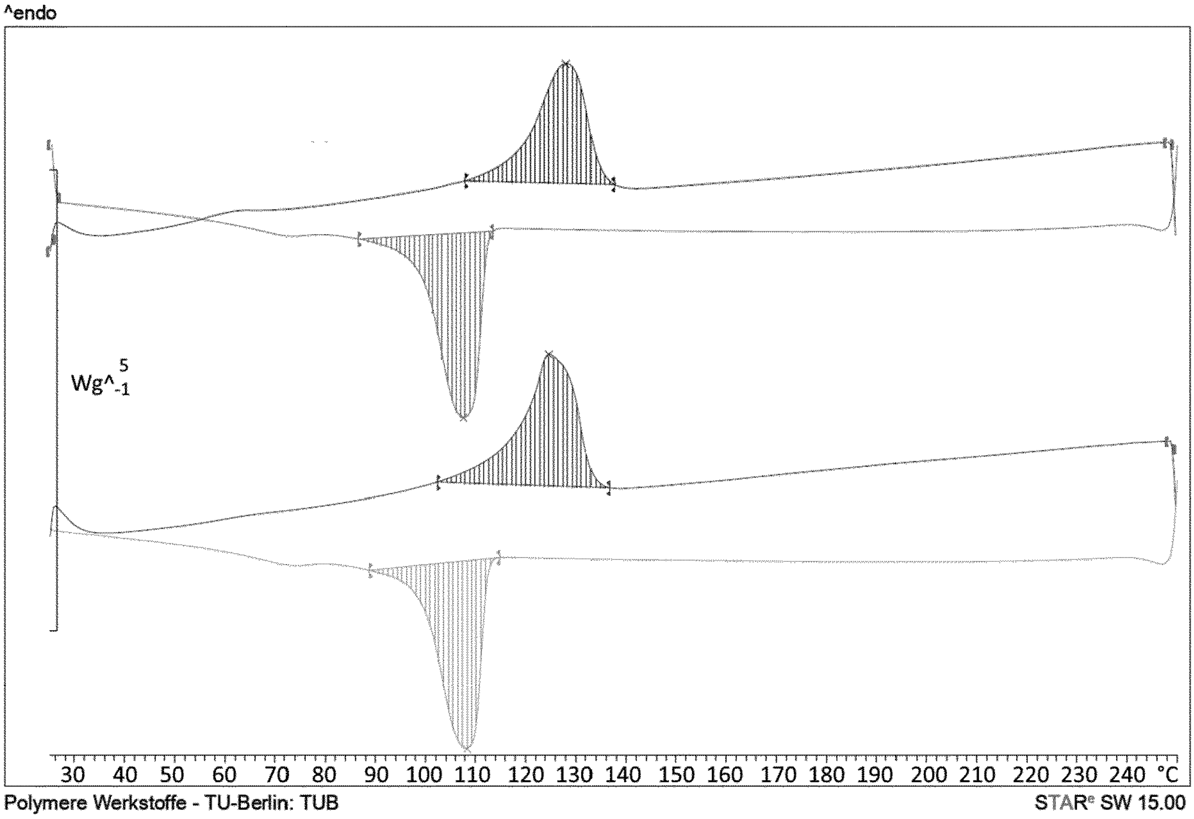


## Abb. 36

Einteilung der Tenside

| Typ | Hydrophile Gruppe | |
|---|---|---|
| 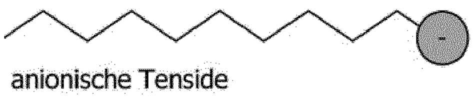<br>anionische Tenside | Sulfat<br>Sulfonat<br>Carboxylat | $-O-SO_3^-$<br>$-SO_3^-$<br>$-COO^-$ |
| 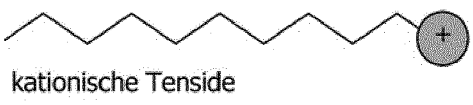<br>kationische Tenside | Ammonium | $-NR_4^+$ |
| 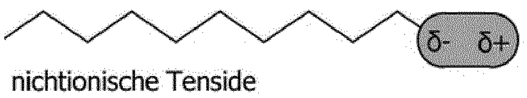<br>nichtionische Tenside | Polyether<br>Polyalkohole | $-O-R$<br>$-O-H$ |
| 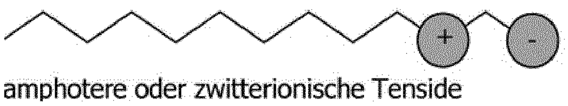<br>amphotere oder zwitterionische Tenside | Ammonium<br>Carboxylat | $-NR_2^+-$<br>$-COO^-$ |

Europäisches Patentamt
European Patent Office
Office européen des brevets

# EUROPÄISCHER RECHERCHENBERICHT

Nummer der Anmeldung
EP 18 18 8431

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/044938 A1 (IMAFLEX INC [CA]) 31. März 2016 (2016-03-31) * Absätze [0018], [0125], [0148]; Ansprüche 1,12,22,59,66 * | 1-3,5-15 | INV. C08J11/06 |
| X | DE 43 01 491 C1 (FREUDENBERG CARL FA [DE]) 3. März 1994 (1994-03-03) * Spalte 1, Zeile 3 - Zeile 9 * * Seite 2, Zeile 19 - Zeile 24; Anspruch * | 1,4-12, 15 | |
| X | EP 0 212 214 A2 (WIEDERHOLD HERMANN GMBH [DE]) 4. März 1987 (1987-03-04) * Spalte 4, Zeile 49 - Seite 5, Zeile 15 * * Spalte 6, Zeile 5 - Zeile 29 * | 1,2,5, 7-12,15 | |
| X | DE 44 21 669 A1 (KLUTHE GMBH CHEM WERKE [DE]) 11. Januar 1996 (1996-01-11) * Spalte 2, Zeile 19; Ansprüche 1,5 * | 1,7-12, 15 | |
| X | WO 97/43056 A1 (NORTRU INC [US]) 20. November 1997 (1997-11-20) * Seite 1, Zeile 7 - Zeile 15 * * Seite 9, Zeile 10 - Zeile 24 * * Seite 19, Zeile 26 - Zeile 34 * * Seite 20, Zeile 18 - Seite 21, Zeile 10 * | 1,6,7, 11,12,15 | RECHERCHIERTE SACHGEBIETE (IPC): C08J B05B |

Der vorliegende Recherchenbericht wurde für alle Patentansprüche erstellt

1

| Recherchenort | Abschlußdatum der Recherche | Prüfer |
|---|---|---|
| Den Haag | 27. November 2018 | Magrizo, Simeon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 18 8431

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-11-2018

| Im Recherchenbericht angeführtes Patentdokument | Datum der Veröffentlichung | Mitglied(er) der Patentfamilie | Datum der Veröffentlichung |
|---|---|---|---|
| WO 2016044938 A1 | 31-03-2016 | CA 2961549 A1 | 31-03-2016 |
| | | US 2017291402 A1 | 12-10-2017 |
| | | WO 2016044938 A1 | 31-03-2016 |
| DE 4301491 C1 | 03-03-1994 | DE 4301491 C1 | 03-03-1994 |
| | | EP 0607502 A1 | 27-07-1994 |
| EP 0212214 A2 | 04-03-1987 | DE 3525254 C1 | 02-04-1987 |
| | | EP 0212214 A2 | 04-03-1987 |
| | | ES 2000057 A6 | 16-11-1987 |
| DE 4421669 A1 | 11-01-1996 | KEINE | |
| WO 9743056 A1 | 20-11-1997 | AR 007184 A1 | 13-10-1999 |
| | | AU 737596 B2 | 23-08-2001 |
| | | BR 9710441 A | 18-01-2000 |
| | | CA 2255056 A1 | 20-11-1997 |
| | | EP 0956164 A1 | 17-11-1999 |
| | | JP 2000511462 A | 05-09-2000 |
| | | PL 332191 A1 | 30-08-1999 |
| | | US 5873945 A | 23-02-1999 |
| | | WO 9743056 A1 | 20-11-1997 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0793741 B1
- WO 199615891 A1
- WO 2015006987 A1
- DE 4028567 C2
- DE 19748159 A1